# EUROPEAN PATENT APPLICATION

(11) **EP 4 498 597 A1**
(43) Date of publication of application: **29.01.2025**
(21) Application number: 23187249.0
(22) Date of filing: 24.07.2023
(51) Int. Cl.: H02P 25/22, H02P 29/028, H02K 3/50, H02K 11/33

(54) **ELECTRICAL MACHINES**

(71) Applicant: GE Energy Power Conversion Technology Ltd, Rugby, Warwickshire CV21 1BD (GB)
(72) Inventor: SMITH, Nicholas, RUGBY, CV21 1BD (GB)
(74) Representative: Serjeants LLP

(57) **Abstract**

An electrical machine (100) is described. The electrical machine (100) may form part of a power system for a marine vessel, for example. The electrical machine (100) includes first machine terminals (122a, 122b) electrically connectable to one or more first loads or power sources and second machine terminals (124a, 124b) electrically connectable to one or more second loads or power sources. A stator (104) of the electrical machine (100) includes a plurality of first stator coil groups, each first stator coil group defining a respective stator phase and comprising one or more interconnected first stator coils (106₁, 106₂, ..., 106ₙ), and a plurality of second stator coil groups, each second stator coil group defining a respective stator phase and comprising one or more interconnected second stator coils (108₁, 108₂, ..., 108ₚ). A power electronic switching assembly of the electrical machine (100) includes a plurality of first switching module assemblies (109₁, 109₂, ..., 109ₙ) electrically connected to or between the first machine terminals (122a, 122b) and a plurality of second switching module assemblies (111₁, 111₂, ..., 111ₚ) electrically connected to or between the second machine terminals (124a, 124b). Each first switching module assembly (109₁, 109₂, ..., 109ₙ) includes one or more interconnected first switching modules (110₁, 110₂, ..., 110ₙ). Each first switching module (110₁, 110₂, ..., 110ₙ) is electrically connected to a respective first stator coil group. Each second switching module assembly (111₁, 111₂, ..., 111ₚ) includes one or more interconnected second switching modules (112₁, 112₂, ..., 112ₚ). Each second switching module (112₁, 112₂, ..., 112ₚ) is electrically connected to a respective second stator coil group.

## Description

### Technical Field

The present invention relates to electrical machines, e.g., motors or generators. The present invention also relates to power systems that include one or more electrical machines and optionally other electrical components. Each electrical machine may be configured to supply or receive a direct current (DC) voltage and/or a single- or multi-phase alternating current (AC) voltage as required.

Each electrical machine comprises a stator with a stator winding. The stator winding comprises a plurality of stator coil groups, each stator coil group being electrically connected to a respective switching module. Each stator coil group may comprise a single stator coil that defines a respective stator phase, or two or more interconnected stator coils that together define a respective stator phase, i.e., where the coil voltages of the interconnected stator coils are in phase. Such a stator may be referred to as an "active stator" and employs power electronics in the switching modules for active control.

### Background Art

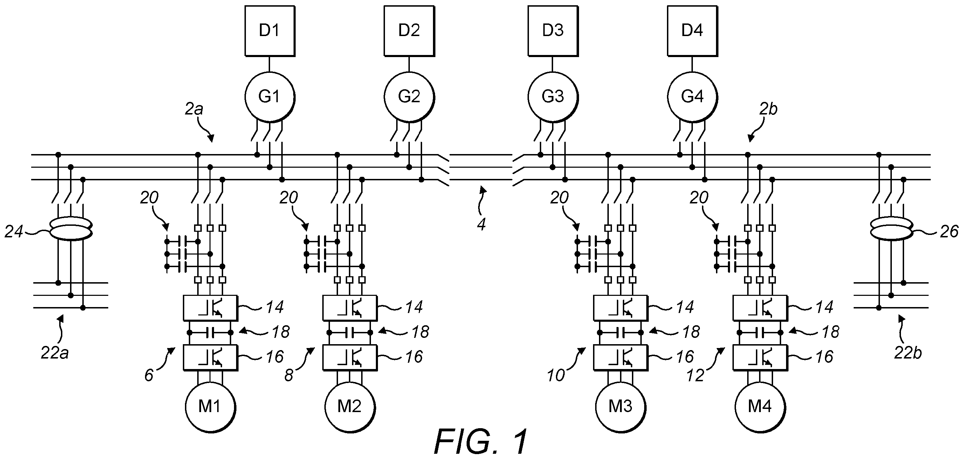

Power systems that employ "active front end" (AFE) power converters are known. Figure 1 shows an example of a power system for a marine vessel with first and second alternating current (AC) buses 2a, 2b that are electrically connected together by a bus tie 4. Two AC generators G1, G2 are electrically connected to the first AC bus 2a and two AC generators G3, G4 are electrically connected to the second AC bus 2b. The rotor of each AC generator G1, G2, ..., G4 is mechanically connected to a prime mover D1, D2, ..., D4 such as a diesel engine or gas turbine engine, for example. When driven by the prime movers D1, D2, ..., D4, the AC generators G1, G2, ..., G4 supply AC power to the AC buses 2a, 2b.

The first and second AC buses 2a, 2b may be provided with protective switchgear with circuit breakers and associated controls. The power system will also include additional components such as a switchboards, which are normally bulky and expensive.

Two AC motors M1, M2 are electrically connected to the first AC bus 2a by means of AFE power converters 6, 8. Two AC motors M3, M4 are electrically connected to the second AC bus 2b by means of AFE power converters 10, 12.

Each AFE power converter includes a first active rectifier/inverter 14 (or "front end" bridge) having AC terminals electrically connected to the respective AC bus, and a second active rectifier/inverter 16 having AC terminals electrically connected to the respective AC motor. The first and second active rectifier/inverters 14, 16 include DC terminals that are electrically connected by a DC link 18. A harmonic filter 20 may be electrically connected to the AC terminals of each first active rectifier/inverter 14 as shown.

In normal operation, the first active rectifier/inverter 14 of each AFE power converter will operate as an active rectifier to supply power from the respective AC bus 2a, 2b to the DC link 18, and the second active rectifier/inverter 16 will operate as an inverter (or variable speed drive) to supply power from the DC link to the respective AC motor. But reverse power flow operation may be possible in certain circumstances, e.g., during regenerative braking where the motors M1, M2, ..., M4 are operated in a generating mode and may supply AC power to the first and second AC buses 2a, 2b through the respective AFE power converters.

Each active rectifier/inverter 14, 16 will typically have a plurality of controllable semiconductor switches (e.g., insulated-gate bipolar transistors (IGBTs)) arranged in a suitable topology and switched to control the power flow through the AFE power converter. In particular, each AFE power converter 6, 10, ..., 12 may be used to control the rotational speed of the respective AC motor M1, M2, ..., M4, the rotor of which may be mechanically connected to a propulsion load for example.

The first and second AC buses 2a, 2b may carry any suitable supply voltage, e.g., 690 VAC.

A third AC bus 22a is electrically connected to the first AC bus 2a by a first transformer 24. A fourth AC bus 22b is electrically connected to the second AC bus 2b by a second transformer 26. Although not shown, the third and fourth AC buses 22a, 22b may be electrically connected, e.g., by a second bus tie. The third and fourth AC buses 22a, 22b may carry any suitable supply voltage, e.g., 440 VAC, and may be used to provide AC power for ship or hotel services.

Other known power systems may use DC generators. Each DC generator may be electrically connected to an AC bus by a respective power converter, e.g., an inverter. Power systems may also have AC generators that are electrically connected to a DC bus by a respective power converter, e.g., a rectifier. One or more electrical loads may be electrically connected to the DC bus of the power system by a respective power converter, e.g., an inverter.

Electronically-commutated DC electrical machines (e.g., motors or generators) are known and may include a power electronic switching assembly comprising a plurality of switching modules where each switching module is electrically connected to a respective stator coil (i.e., having an "active stator"). The stator coils are received in winding slots and form a plurality of stator phases significantly greater than three. The switching modules are controlled to commutate the coil current flowing through the respective stator coil during operation of the electrical machine in a way that either generates a DC output voltage or which uses a DC input voltage to drive the rotor of the electrical machine.

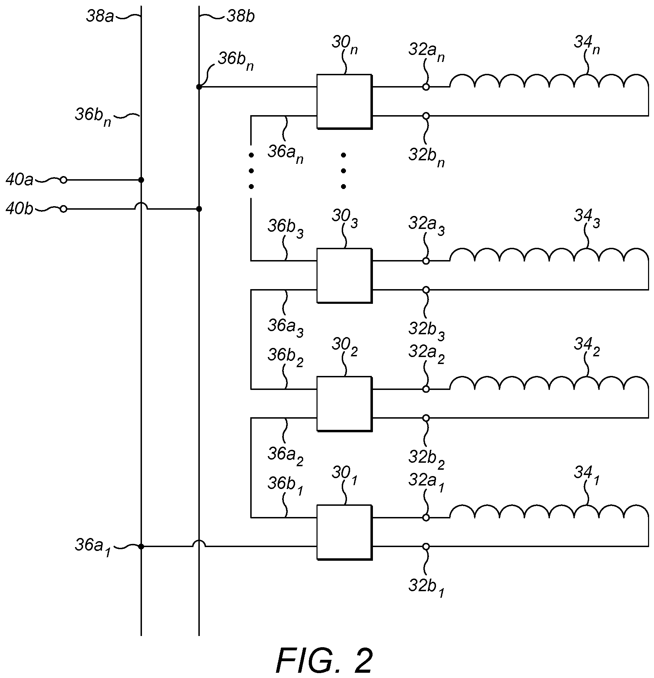

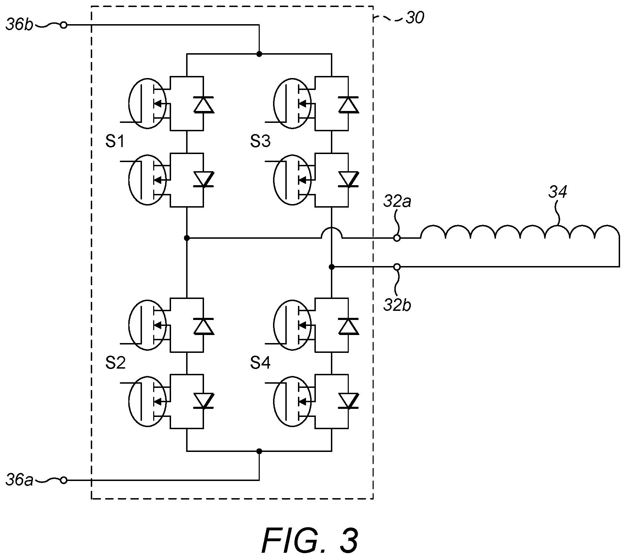

As shown in Figures 2 and 3, each switching module 30 may include a pair of AC terminals 32a, 32b that are electrically connected to a respective stator coil 34, and a pair of DC terminals 36a, 36b. Each switching module 30 includes a converter circuit (or H-bridge circuit) which is configured as a current source converter. The H-bridge circuit includes four bidirectional switches S1, S2, ..., S4. Each switch includes a pair of metal-oxide-semiconductor field-effect transistors (MOSFETs) connected in anti-series (or back-to-back), but it will be understood that other switch arrangements are possible. An anti-parallel diode is shown for each MOSFET within each switch S1, S2, ..., S4 and it will be understood that in practice this is provided by the body diode of each MOSFET. For each switch S1, S2, ..., S4 the reverse blocking function is provided by the lower one of the pair of anti-series connected MOSFETs and the forward blocking function is provided by the upper one of the pair of anti-series connected MOSFETs.

The DC terminal 36a₁ of a first switching module 30₁ is electrically connected to a first DC conductor 38a and the DC terminal 36b. of an nth switching module 30ₙ is electrically connected to a second DC conductor 38b. The remaining DC terminals of the switching modules 30₁, 30₂, ..., 30ₙ are electrically connected in series as shown in Figure 2. The DC conductor 38a may be a positive DC conductor and the DC conductor 38b may be a negative DC conductor or *vice versa.* A power electronic switching assembly comprises the plurality of switching modules 30₁, 30₂, ..., 30ₙ which are electrically connected to a respective stator coil 34₁, 34₂, ...34ₙ and to the machine conductors 38a, 38b as shown in Figure 2.

In a known electrical machine, the DC conductors 38a, 38b may define a pair of DC machine terminals 40a, 40b that may be electrically connected to a DC load or bus or to an AC load or bus by means of a power converter, for example.

### Summary of the Invention

The present invention provides an electrical machine comprising:
first machine terminals electrically connectable to one or more first loads or power sources;
second machine terminals electrically connectable to one or more second loads or power sources;
a stator comprising:
   a plurality of first stator coil groups, each first stator coil group defining a respective stator phase and comprising one or more interconnected first stator coils, and
   a plurality of second stator coil groups, each second stator coil group defining a respective stator phase and comprising one or more interconnected second stator coils; and
a power electronic switching assembly comprising:
   a plurality of first switching module assemblies electrically connected to or between the first machine terminals, each first switching module assembly comprising one or more interconnected first switching modules, each first switching module being electrically connected to a respective first stator coil group, and
   a plurality of second switching module assemblies electrically connected to or between the second machine terminals, each second switching module assembly comprising one or more interconnected second switching modules, each second switching module being electrically connected to a respective second stator coil group;
wherein the first switching modules are adapted to be selectively controlled independently of the second switching modules, i.e., where different voltages or currents may be supplied to the first and second machine terminals if the electrical machine is operated as a generator and where different voltages or currents may be received at the first and second machine terminals if the electrical machine is operated as a motor.

The stator coils of the plurality of first and second stator coil groups define the stator winding of the electrical machine.

When the electrical machine is operating, the first stator coil groups define a plurality of phase-shifted first coil voltages that are commutated by the first switching modules, and the second stator coil groups define a plurality of phase-shifted second coil voltages that are commutated by the second switching modules.

Each stator coil group may comprise a single stator coil that defines a respective phase or two or more interconnected stator coils that together define a respective phase, i.e., where the coil voltages of the interconnected stator coils of each stator coil group are in phase (or more particularly, where the fundamental components of open circuit voltages are in phase) and commutated by the respective switching module. The stator coils of each stator coil group may be electrically connected in series, for example. The electrical machine may have any convenient number of first and second stator coil groups and may therefore have a large number of phases. In practice, each electrical machine may have between five and one hundred and twenty (120) phases, for example.

The stator coils may be received in slots formed in the stator of the electrical machine. The stator coils may be of any suitable type (e.g., single-layer, two-layer etc.) and may be arranged around the stator to have any suitable stator winding topology.

The power electronic switching assembly may be formed as part of the stator of the electrical machine. In particular, the switching modules may be arranged around the stator - e.g., circumferentially spaced around and mounted to the stator frame in any suitable configuration or grouping.

The first and second machine terminals may be in a terminal box of the electrical machine. The terminal box may be used to facilitate an electrical connection to the external loads or power sources.

Each first switching module assembly may comprise two or more interconnected first switching modules, e.g., where the first switching modules have direct current (DC) terminals electrically connected in series. Each second switching module assembly may comprise two or more interconnected second switching modules, e.g., where the second switching modules have DC terminals electrically connected in series. Such interconnected switching modules may also be described as having a "chain link" configuration, for example.

The first switching module assemblies may be electrically connected to the first machine terminals in parallel. For example, each of the first machine terminals may be electrically connected to a respective machine conductor and the first switching module assemblies may be electrically connected to the machine conductors in parallel. If the first machine terminals are DC terminals, the electrical machine may comprise a positive DC machine conductor that is electrically connected to a positive DC machine terminal and a negative DC machine conductor that is electrically connected to a negative DC machine terminal, for example. Each first switching module assembly may comprise a positive DC module terminal that is electrically connected to the positive DC machine conductor and a negative DC module terminal that is electrically connected to the negative DC machine conductor. If each first switching module assembly includes only one first switching module, the positive and negative DC module terminals may be defined by positive and negative DC terminals of the first switching module. On the other hand, if each first switching module assembly includes two or more first switching modules that are interconnected, the positive and negative DC module terminals may be defined by a positive DC terminal of one of the first switching modules and a negative DC terminal of another one of the first switching modules. The first switching modules that define the positive and negative DC module terminals may be end switching modules of a series-connected group of first switching modules, for example. If the first machine terminals are alternating current (AC) terminals, the electrical machine may comprise two or more AC machine conductors each defining a respective AC phase or neutral, for example. Each first switching module assembly may comprise two or more AC module terminals that are electrically connected to the AC machine conductor of the corresponding AC phase or neutral. In one arrangement, the electrical machine may comprise three or four AC machine terminals and three or four AC machine conductors, thereby facilitating electrical connection to one or more three-phase AC loads or power sources, optionally including a neutral connection.

The first machine conductors (or first conductor assembly) may have any suitable construction. In one arrangement, each machine conductor may be formed as an annular ring (or "endring") or in one or more sections. Each machine conductor may be formed from an electrically conductive material, e.g., copper. The first machine conductors may be conveniently positioned at an axial end of the stator and may be spaced apart in the axial direction.

The first switching module assemblies may be electrically connected between the first machine terminals in series. For example, if the first machine terminals are DC terminals, the electrical machine may comprise a positive DC machine terminal and a negative DC machine terminal. Each first switching module assembly may comprise a positive DC module terminal and a negative DC module terminal. If there are n first switching module assemblies, the positive DC module terminal of a first one of the first switching module assemblies may be electrically connected to the positive DC machine terminal and the negative DC module terminal of an nth one of the first switching module assemblies may be electrically connected to the negative DC machine terminal. The negative DC module terminal of the first one of the first switching module assemblies may be electrically connected to the positive DC module terminal of a second one of the first switching module assemblies. The negative DC module terminal of the second one of the first switching module assemblies may be electrically connected to the positive DC module terminal of a third one of the first switching module assemblies, and so on until the negative DC module terminal of an (n-1)th one of the first switching module assemblies is electrically connected to the positive DC module terminal of the nth one of the first switching module assemblies. The first switching module assemblies may be electrically connected to each other and the first machine terminals using suitable cabling or buses, for example. Two or more series-connected groups of first switching module assemblies may be electrically connected between the first machine terminals in parallel.

The second switching module assemblies may be electrically connected to the second machine terminals in parallel. For example, each of the second machine terminals may be electrically connected to a respective machine conductor and the second switching module assemblies may be electrically connected to the machine conductors in parallel. If the second machine terminals are DC terminals, the electrical machine may comprise a positive DC machine conductor that is electrically connected to a positive DC machine terminal and a negative DC machine conductor that is electrically connected to a negative DC machine terminal, for example. Each second switching module assembly may comprise a positive DC module terminal that is electrically connected to the positive DC machine conductor and a negative DC module terminal that is electrically connected to the negative DC machine conductor. If each second switching module assembly includes only one second switching module, the positive and negative DC module terminals may be defined by positive and negative DC terminals of the second switching module. On the other hand, if each second switching module assembly includes two or more second switching modules that are interconnected, the positive and negative DC module terminals may be defined by a positive DC terminal of one of the second switching modules and a negative DC terminal of another one of the second switching modules. The second switching modules that define the positive and negative DC module terminals may be end switching modules of a series-connected group of second switching modules, for example. If the second machine terminals are AC terminals, the electrical machine may comprise two or more AC machine conductors each defining a respective AC phase or neutral, for example. Each second switching module assembly may comprise two or more AC module terminals that are electrically connected to the AC machine conductor of the corresponding AC phase or neutral. In one arrangement, the electrical machine may comprise three or four AC machine terminals and three or four AC machine conductors, thereby facilitating electrical connection to one or more three-phase AC loads or power sources, optionally including a neutral connection.

The second machine conductors (or second conductor assembly) may have any suitable construction. In one arrangement, each machine conductor may be formed as an annular ring (or "endring") or in one or more sections. Each machine conductor may be formed from an electrically conductive material, e.g., copper. The second machine conductors may be conveniently positioned at an axial end of the stator and may be spaced apart in the axial direction. The first machine conductors may be positioned at a first axial end of the stator and the second machine conductors may be positioned at the first axial end or at a second axial end of the stator. In general terms, any convenient number of machine conductors may be employed and they may be positioned at one or both axial ends of the stator as required.

The second switching module assemblies may be electrically connected between the second machine terminals in series. For example, if the second machine terminals are DC terminals, the electrical machine may comprise a positive DC machine terminal and a negative DC machine terminal. Each second switching module assembly may comprise a positive DC module terminal and a negative DC module terminal. If there are p second switching module assemblies, the positive DC module terminal of a first one of the second switching module assemblies may be electrically connected to the positive DC machine terminal and the negative DC module terminal of a pth one of the second switching module assemblies may be electrically connected to the negative DC machine terminal. The negative DC module terminal of the first one of the second switching module assemblies may be electrically connected to the positive DC module terminal of a second one of the second switching module assemblies. The negative DC module terminal of the second one of the second switching module assemblies may be electrically connected to the positive DC module terminal of a third one of the second switching module assemblies, and so on until the negative DC module terminal of a (p-1)th one of the second switching module assemblies is electrically connected to the positive DC module terminal of the pth one of the second switching module assemblies. The second switching module assemblies may be electrically connected to each other and the second machine terminals using suitable cabling or buses, for example. Two or more series-connected groups of second switching module assemblies may be electrically connected between the second machine terminals in parallel.

The switching modules may be of any suitable type. Each switching module may comprise one or more converter circuits and optionally other electrical components such as inductors, capacitors etc. These optional electrical components may be distributed on a per converter circuit, or per switching module, or per switching module assembly basis as required. For example, there may be one inductor for each series-connected group of switching modules or there may be one inductor per switching module or per converter circuit. Each converter circuit may comprise a plurality of controllable semiconductor switches. Any suitable controllable semiconductor switches or combination of switches may be used. The controllable semiconductor switches of each switching module may be controlled to be turned on and off by a gate drive controller so as to commutate the coil current in the electrically connected stator coil group.

Converter circuits may be configured as current source converters or voltage source converters depending on the operating requirements of the power electronic switching assembly. Voltage source converters may be operated using pulse width modulation (PWM) to adapt a common DC voltage to the individual coil voltage requirements and *vice versa.* Voltage source converters will normally require the switching module or switching module assembly to include one or more capacitors, e.g., in a DC link that is electrically connected to DC terminals of the converter circuit or the switching module assembly. Current source converters may require DC current to be substantially constant and will therefore normally require the switching module or switching module assembly to include one or more inductors, e.g., in a DC link that is electrically connected to the DC terminals of the converter circuit or the switching module assembly. Discrete inductors of appropriate size may be used, or the stator coils or interconnecting cabling or buses etc. may be designed to provide any necessary inductance. Switching modules that are configured to supply or receive an AC voltage may comprise two converter circuits connected together by a DC link. More particularly, a first converter circuit may be electrically connected to a respective stator coil group and a second converter circuit, which is electrically connected to the first converter circuit by the DC link, for example, may be electrically connected to the respective AC machine terminals or to any AC machine conductors. In one arrangement, the first converter circuit may be a current source converter and the second converter circuit may be a voltage source converter controlled using PWM, for example. But it will be understood that different converter circuit arrangements are also possible. The DC link may include one or more capacitors, inductors, etc. configured as a DC link filter. In another arrangement, switching modules that are configured to supply or receive an AC voltage may comprise a converter circuit that is a direct frequency converter or a matrix converter controlled using PWM, for example. The converter circuit may be electrically connected to a respective stator coil group and to the respective AC machine terminals. In both arrangements, an AC filter may be provided, e.g., in an AC circuit that is electrically connected to AC terminals of the converter circuit or switching module. It will be readily understood that the different types of converter circuit that may be used by the switching modules will have different control strategies and may also have certain operational advantages and disadvantages. For example, a converter circuit configured as a voltage source converter and operating in a rectifying mode may be unable to limit load short circuit current and may therefore be more suitable for use in electrical machines that normally operate as a motor. A converter circuit configured as a current source converter may limit DC fault current and parallel-connected current source converters may have to use current sharing controls. Voltage and current source converters arranged back-to-back may limit AC output fault current. A converter circuit configured as a direct frequency converter may operate at any suitable frequency that includes down to 0 Hz. This output may be regulated down to DC or may reverse so it may limit both DC and AC fault currents. The choice of appropriate converter circuit for the switching modules of the electrical machine may therefore be made with these operational advantages and disadvantages in mind.

A converter circuit may comprise an H-bridge circuit, for example. The H-bridge circuit may comprise:
- first and second bridge terminals that may be electrically connected to a respective stator coil group, for example,
- a third bridge terminal,
- a fourth bridge terminal,
- a first switch electrically connected between the first bridge terminals and the third bridge terminal,
- a second switch electrically connected between the first bridge terminal and the fourth bridge terminal,
- a third switch electrically connected between the second bridge terminal and the third bridge terminal, and
- a fourth switch electrically connected between the second bridge terminal and the fourth bridge terminal.

In each H-bridge circuit, the first and second switches are electrically connected in series between the third and fourth bridge terminals as a first bridge leg. The third and fourth switches are electrically connected in series between the third and fourth bridge terminals as a second bridge leg. The connecting point between the first and second switches defines the first bridge terminal and the connecting point between the third and fourth switches defines the second bridge terminal.

Each switch in each H-bridge circuit may include one or more controllable semiconductor switches. Any suitable controllable semiconductor switches or combination of switches may be used, e.g., metal-oxide-semiconductor field-effect transistors (MOSFETs), vertical junction field-effect transistors (VJFETs), insulated-gate bipolar transistors (IGBTs), and gate-commutated thyristors (GCTs). A separate diode may optionally be electrically connected in anti-parallel with each semiconductor switch, or an anti-parallel diode may be an inherent feature of the semiconductor switch itself, e.g., the body diode of the MOSFET structure. Each controllable semiconductor switch is normally turned on and off by gate drive signals generated by a gate drive controller.

If an H-bridge circuit is configured as a current source converter, each switch may be a bidirectional switch, i.e., each switch may provide gate-controlled bidirectional voltage blocking capability with unidirectional current carrying capability. Each bidirectional switch may consist of two semiconductor devices, namely: (a) a pair of controllable semiconductor switches, or (b) a controllable semiconductor switch and a diode, where the pair of semiconductor devices are electrically connected in anti-series (or back-to-back) - i.e., so one semiconductor device blocks voltage in a first direction and the other semiconductor device blocks voltage in a second direction, opposite to the first direction. (As used herein, the term "semiconductor device" may refer to a semiconductor switch or a diode as appropriate.) When current is flowing through one of the semiconductor switches in a particular direction, it may flow through an anti-parallel diode of the other anti-series connected semiconductor switch. In the case where each semiconductor switch is a MOSFET, for example, the body diode will inherently act as an anti-parallel diode. In the case where the pair of semiconductor switches are MOSFETs, they may be electrically connected in anti-series in either a common source or a common drain arrangement, but the common source arrangement is often preferred in order to simplify the gating arrangement. This is because both MOSFETs are preferably set to the on-state simultaneously in order to benefit from simultaneous conduction of the body diode and reverse conduction in the MOSFET that provides the reverse voltage blocking function. In the case where the pair of semiconductor switches are VJFETs, there are no body diodes or anti-parallel diodes, so reverse conduction in the VJFET that provides the reverse voltage blocking function is essential when the pair of VJFETs are required to carry current. The pair of VJFETs may be electrically connected together in anti-series in either a common source of a common drain arrangement, but the common source arrangement is often preferred in order to simplify the gating arrangement. In the case of other alternative semiconductor switches, the reverse voltage blocking function may be provided by a reverse blocking junction and only a single gate control is required for each bidirectional switch.

If an H-bridge circuit is configured as a voltage source converter, each switch may be a unipolar switch, i.e., each switch may provide gate-controlled unidirectional voltage blocking capability with bidirectional current carrying capability. Each switch may typically comprise a controllable semiconductor switch with an anti-parallel diode.

Suitable semiconductor switches include may IGBTs and GCTs with integrated anti-parallel diodes, for example. As described herein, the H-bridge circuit may operate as a single phase voltage source converter, but it will be clear to the skilled person that a so-called "Graetz bridge" derivative having six switches may operate as a three-phase voltage source converter.

If an H-bridge circuit is configured as a direct frequency converter, each switch may be a bidirectional switch, i.e., each switch may provide gate-controlled bidirectional voltage blocking capability with bidirectional current carrying capability. Each switch may comprise a pair of controllable semiconductor switches electrically connected in anti-series, each semiconductor switch having an anti-parallel diode. Suitable semiconductor switches may include IGBTs and GCTs with integrated anti-parallel diodes, for example. As described herein, the H-bridge circuit may operate as a single phase to single phase direct frequency converter, but it will be clear to the skilled person that a derivative having six switches may operate as a single phase to three-phase direct frequency converter.

The third and fourth bridge terminals of the H-bridge circuit may define DC terminals of the converter circuit - see above. In one arrangement, where each switching module assembly includes only one switching module with a converter circuit that comprises an H-bridge circuit, the third bridge terminal may be a positive DC module terminal that is electrically connected to a positive DC machine conductor and the fourth bridge terminal may be a negative DC terminal that is electrically connected to a negative DC machine conductor, for example. The individual switching modules may also be electrically connected in series. For example, if there are n first switching modules electrically connected between the first machine terminals or conductors in series, the third bridge terminal of a first one of the first switching modules may be a positive DC terminal that is electrically connected to a positive DC machine terminal or conductor and the fourth bridge terminal of an nth one of the first switching modules may be a negative DC terminal that is electrically connected to a negative DC machine terminal or conductor. The fourth bridge terminal of the first one of the first switching modules may be a negative DC terminal that is electrically connected to the third bridge terminal (i.e., a positive DC terminal) of a second one of the first switching modules. The fourth bridge terminal (i.e., a negative DC terminal) of the second one of the first switching modules may be electrically connected to the third bridge terminal (i.e., a positive DC terminal) of a third one of the first switching modules, and so on until the fourth bridge terminal (i.e., a negative DC terminal) of an (n-1)th one of the first switching modules is electrically connected to the third bridge terminal (i.e., a positive DC terminal) of the nth one of the first switching modules.

The first switching modules may be electrically connected to each other and the first machine terminals or conductors using suitable cabling or buses, for example.

A plurality of second switching modules may be electrically connected in series between the second machine terminals or conductors in a similar manner to that described above.

The electrical machine may be a rotating electrical machine. In this case, the electrical machine may also comprise a rotor that rotates relative to the stationary stator and which is radially spaced apart from the stator by an airgap. The rotor may have any suitable construction. The rotor may include rotor windings or may be a permanent magnet rotor and include a plurality of permanent magnets circumferentially spaced around the rotor. The permanent magnets may be positioned on the surface of the rotor, e.g., using magnet carrier assemblies that are fixed to the rotor surface, or held in position using a sleeve or band. The permanent magnets may be embedded within the rotor.

The electrical machine may also be a linear electrical machine. In this case, the electrical machine may also comprise a mover that moves relative to the stationary stator. The mover may have any suitable construction.

If the electrical machine is operated as a generator, the first switching modules may be operated in a coordinated manner to supply power to one or more first loads through the first machine terminals and any optional interposing first machine conductors or conductor assembly. The second switching modules may be operated in a coordinated manner to supply power to one or more second loads through the second machine terminals and any optional interposing second machine conductors or conductor assembly. As described in more detail below, the one or more first and second loads may include static components such as energy storage devices (e.g., charging batteries, supercapacitors, hybridised super-capacitors and batteries, flywheel energy storage systems etc.), dynamic braking systems, power networks, and static converters, or other electrical machines operating as motors, for example. The first machine terminals of the electrical machine may be electrically connected to corresponding machine terminals of a second electrical machine so that the electrical machine may operate as a generator to supply power to the second electrical machine without the need for interposing power converters, switchboards etc.

The first and second loads may be electrically connected to the first and second machine terminals by one or more interposing power converters if appropriate. In other words, the first and second loads do not have to be electrically connected directly to the first and second machine terminals. If the electrical machine is used in a marine vessel, a power network load may be a DC or AC power network that may be used to supply ships or hotel service loads, for example. A DC power network may be electrically connected directly to machine terminals that normally supply a DC voltage. An AC power network may be electrically connected directly to machine terminals that normally supply an AC voltage, or electrically connected indirectly by means of an interposing power converter to machine terminals that normally supply a DC voltage. Although the description makes occasional reference to marine vessels, it will be readily understood that the electrical machine and any power system incorporating the same may be used for any suitable application and is not limited in any way to being used on marine vessels.

If the electrical machine is operated as a motor, the first switching modules may receive power from one or more first power sources through the first machine terminals and any optional interposing first machine conductors or conductor assembly. The second switching modules may receive power from one or more second power sources through the second machine terminals and any interposing optional second machine conductors or conductor assembly. As described in more detail below, the one or more first and second power sources may include static components such as energy storage devices (e.g., discharging batteries, supercapacitors, hybridised super-capacitors and batteries, flywheel energy storage systems etc.), fuel cells, and power networks, or other electrical machines operating as generators, for example. The first machine terminals of the electrical machine may be electrically connected to corresponding machine terminals of a second electrical machine operating as a generator so that the electrical machine may receive power from the second electrical machine without the need for interposing power converters, switchboards etc. The first and second power sources may be electrically connected to the first and second machine terminals by one or more interposing power converters if appropriate. In other words, the first and second power sources do not have to be electrically connected directly to the first and second machine terminals.

The first switching modules may be controlled to supply or may receive a DC voltage that may be fixed or variable. In this case, the first machine terminals may include a positive DC machine terminal and a negative DC machine terminal. The electrical machine may optionally include a positive DC machine conductor that is electrically connected to the positive DC machine terminal and a negative DC machine conductor that is electrically connected to the negative DC machine terminal.

If suitably configured, the first switching modules may also be controlled to supply or may receive an AC voltage that will typically be fixed, e.g., 440 or 690 VAC, but may be variable or selectable. For example, the AC voltage may be selected from two or more different voltages (e.g., 440 and 690 VAC) depending on the operating requirements. The AC voltage may have any suitable frequency, e.g., 50 or 60 Hz. The first machine terminals may include two or more AC machine terminals each defining a respective AC phase or neutral. The electrical machine may also include two or more AC machine conductors that are electrically connected to the AC machine terminal of corresponding phase. In one arrangement, the electrical machine may comprise three or four AC machine terminals and three or four AC machine conductors, thereby facilitating electrical connection of one or more three-phase AC loads or power sources to the first machine terminals, optionally including a neutral connection. If the first switching modules are configured to supply or receive both a DC voltage and an AC voltage, they may be selectively controlled to transition between supplying or receiving a DC voltage and supplying or receiving an AC voltage depending on operating requirements, for example. In this case, the first machine terminals and first machine conductors or conductor assembly may carry an AC voltage or a DC voltage as appropriate.

The second switching modules may be controlled to supply or may receive a DC voltage that may be fixed or variable. In this case, the second machine terminals may include a positive DC machine terminal and a negative DC machine terminal. The electrical machine may optionally include a positive DC machine conductor that is electrically connected to the positive DC machine terminal and a negative DC machine conductor that is electrically connected to the negative DC machine terminal.

If suitably configured, the second switching modules may also be controlled to supply or may receive an AC voltage that will typically be fixed, e.g., 440 or 690 VAC, but may be variable or selectable. For example, the AC voltage may be selected from two or more different voltages (e.g., 440 and 690 VAC) depending on the operating requirements. The AC voltage may have any suitable frequency, e.g., 50 or 60 Hz. The second machine terminals may include two or more AC machine terminals each defining a respective AC phase or neutral. The electrical machine may also include two or more AC machine conductors that are electrically connected to the AC machine terminal of corresponding phase or a neutral terminal. In one arrangement, the electrical machine may comprise three or four AC machine terminals and three or four AC machine conductors, thereby facilitating electrical connection of one or more three-phase AC loads or power sources to the second machine terminals, optionally including a neutral connection. If the second switching modules are configured to supply or receive both a DC voltage and an AC voltage, they may be selectively controlled to transition between supplying or receiving a DC voltage and supplying or receiving an AC voltage depending on operating requirements, for example. In this case, the second machine terminals and second machine conductors or conductor assembly may carry an AC voltage or a DC voltage as appropriate.

The first switching modules are capable of being controlled independently or substantially independently of the second switching modules. For example, the first switching modules may be controlled to supply a variable DC voltage and the second switching modules may be controlled to supply a fixed DC voltage or current or a fixed or variable AC voltage. Control strategies may be used to minimise any effects of mutual coupling between the respective parts of the stator winding - i.e., between the first stator coils that are electrically connected to the first switching modules and the second stator coils that are electrically connected to the second stator modules. The skilled person will understand that an electrical machine according to the present invention may experience mutual coupling between the first and second stator coil groups and that armature reaction resulting from current flowing in the stator coil groups may cause local perturbation of the air gap flux density. The combined effects of mutual coupling and armature reaction may be such that the coil open circuit voltages within the first stator coils are affected by the currents that flow in the second stator coils (and *vice versa*) in a manner that is well understood. Independent closed loop control may be provided for each switching module and under steady state conditions, the mean voltage and current at the first machine terminals are controlled independently of the mean voltage and current at the second machine terminals. Closed loop controllers have finite gain and bandwidth and the term "substantially independently" is used herein to reflect the abnormal transient conditions at the second machine terminals that may transiently influence the voltage and current at the first machine terminals. The duration and magnitude of this transient influence may be minimised by optimisation of the respective closed loop controllers and by incorporating pre-emptive cross linking between respective controllers, for example.

The first switching modules may be controlled to supply power to the first machine terminals and, at the same time, the second switching modules may receive power from the second machine terminals, for example. In particular, power may be received from one or more second power sources that are electrically connected to the second machine terminals. In one arrangement, if the electrical machine is a rotating electrical machine where the rotor is mechanically connected to a prime mover such as a diesel engine or gas turbine engine, for example, any power received at the second machine terminals may be used to assist the prime mover by controlling the second switching modules to drive the rotor in tandem with the prime mover while the first switching modules are controlled to supply power to the first machine terminals. Any power received at the second machine terminals may also be recirculated to the first machine terminals.

The first and second machine terminals may be selectively electrically connected by a first switch. If the electrical machine includes first and second machine conductors or conductor assemblies, they may be electrically connected by the first switch. If the first switch is controlled to be open, the first and second machine terminals and any electrically connected loads or power sources are electrically isolated (or substantially electrically isolated) from each other. The first switching modules may therefore be controlled independently (or substantially independently) of the second switching modules. If the first switch is controlled to be closed, the first and second machine terminals are electrically connected to form "common" machine terminals. The first and second machine conductors or conductor assemblies are also electrically connected to form "common" machine conductors or a "common" conductor assembly. The first and second switching modules are electrically connected to or between the "common" machine terminals, e.g., connected to "common" machine conductors or conductor assemblies. Control of the first and second switching modules should therefore be coordinated and may include control to minimise or accommodate any mutual coupling effects mentioned above. If the electrical machine is operated as a generator, the first and/or second switching modules may be operated in a coordinated manner to supply the same power to one or more first loads and/or one or more second loads through the "common" machine terminals. If the electrical machine is operated as a motor, the first and/or second switching modules may receive power from one or more first power sources and/or one or more second power sources through the "common" machine terminals. The first and second switching modules may be operated in a coordinated manner to drive rotation of the rotor of a rotating electrical machine, for example. It will be readily understood that one or both of the first and second switching modules may be operated depending on the operating requirements. Similarly, power may be supplied to one or both of the first and second loads or received from one or both of the first and second power sources, depending on the operating requirements.

The first switch may be an electrical switch and may include one or more controllable semiconductor switches, e.g., thyristors. For example, an electrical switch that is designed to carry an AC voltage may comprise anti-parallel thyristors to allow for bidirectional current flow. Anti-parallel thyristors may also be used if the respective switching modules are configured as voltage source converters with reversible current at their DC terminals. Simple thyristors may be used if the respective switching modules are configured as current source converters with unidirectional current at their DC terminals. An electrical switch may further comprise snubbers, gate drivers, a cooling system etc. The one or more controllable switches may be controlled to be switched on and off by a suitable controller. Commutation of the electrical switch must normally be coordinated with the control of the respective switching module assemblies if thyristors are employed. This is because the current in the thyristors must be interrupted to allow the thyristors to attain their blocking state. One or more fully controllable semiconductor switches may also be used instead of thyristors. The electrical switch may have a series redundant configuration.

The electrical connections between the first machine terminals and the one or more first loads or power sources, and the electrical connections between the second machine terminals and the one or more second loads or power sources may be made using suitable cabling or buses, for example. Cabling or buses may be electrically connected to the first machine terminals of the electrical machine and/or to the one or more first loads or power sources by isolation switches and/or fuses. Cabling or buses may be electrically connected to the second machine terminals of the electrical machine and/or to the one or more second loads or power sources by isolation switches and/or fuses. The isolation switches may be electrical switches and may include one or more controllable semiconductor switches, e.g., thyristors. For example, an electrical switch that is designed to carry an AC voltage may comprise anti-parallel thyristors to allow for bidirectional current flow. Anti-parallel thyristors may also be used if the respective switching modules are configured as voltage source converters with reversible current at their DC terminals. Simple thyristors may be used if the respective switching modules are configured as current source converters with unidirectional current at their DC terminals. An electrical switch may further comprise snubbers, gate drivers, a cooling system etc. The one or more controllable switches may be controlled to be switched on and off by a suitable controller. Commutation of the electrical switches must normally be coordinated with the control of the respective switching module assemblies if thyristors are employed. One or more fully controllable semiconductor switches may also be used instead of thyristors. The electrical switches may have a series redundant configuration. The isolation switches may also be mechanical isolators. In practice, any suitable isolation switch, removable link, or fuse, for example, may be inserted anywhere in the power system to provide electrical isolation as required.

The isolation switches may be used to electrically isolate (or substantially isolate) the cabling or buses from the electrical machine and/or the loads or power sources. Mechanical isolators in conventional power systems have an off state that is effectively open circuit and an ability to withstand an open circuit voltage that is several times the normal working voltage. Isolation switches that comprise controllable semiconductor switches may have a lower off state impedance and voltage withstand. However, with an appropriately designed voltage margin and redundancy, each isolation switch may have an off state that is sufficient to practically isolate the electrical circuits between which it is electrically connected and so the term "substantially isolate" has been used herein. If switching modules being controlled to supply power are configured as current source converters, they may be capable of interrupting current and the isolation switches may be opened when current through the cabling or buses has already been interrupted. If an electrical connection is configured as a current source connection, the electrical connection may include one or more inductors and some degree of coordination may be needed between the electrical machine and the one or more connected loads or power sources. If an electrical connection is configured as a voltage source connection, the electrical connection may include one or more capacitors. In some arrangements, the one or more inductors and/or capacitors may be provided in the first and/or second machine terminals of the electrical machine or in any machine conductors or conductor assemblies to which switching modules are electrically connected.

The present invention further provides a power system comprising a first electrical machine as described above, and a second electrical machine. The second electrical machine may comprise:
first machine terminals;
a stator comprising a plurality of first stator coil groups that define a respective stator phase, each first stator coil group comprising one or more interconnected first stator coils; and
a power electronic switching assembly comprising a plurality of first switching module assemblies electrically connected to or between the first machine terminals, each first switching module assembly comprising one or more interconnected first switching modules, each first switching module being electrically connected to a respective first stator coil group;
wherein the first machine terminals of the second electrical machine are electrically connected to the first machine terminals of the first electrical machine. In other words, the second electrical machine is a first load as described above that is electrically connected to the first machine terminals of the first electrical machine.

The second electrical machine may be as described above for the first electrical machine. In particular, the first machine terminals, the first stator coil groups, and the first switching module assemblies and first switching modules of the power electronic switching assembly of the second electrical machine may be configured and controlled as described above.

The second electrical machine may be a rotating electrical machine. In this case, the second electrical machine may also comprise a rotor that rotates relative to the stationary stator and which is radially spaced apart from the stator by an airgap. The rotor may have any suitable construction. The rotor may include rotor windings or may be a permanent magnet rotor and include a plurality of permanent magnets circumferentially spaced around the rotor. The permanent magnets may be positioned on the surface of the rotor, e.g., using magnet carrier assemblies that are fixed to the rotor surface, or held in position using a sleeve or band. The permanent magnets may be embedded within the rotor.

The second electrical machine may also be a linear electrical machine. In this case, the second electrical machine may also comprise a mover that moves relative to the stationary stator. The mover may have any suitable construction.

The respective first machine terminals of the first and second electrical machines may be electrically connected by suitable cabling or buses.

The cabling or buses may be electrically connected to the first machine terminals of the first electrical machine by isolation switches and/or fuses. The cabling or buses may be electrically connected to the first machine terminals of the second electrical machine by isolation switches and/or fuses. As described above, the isolation switches may be electrical switches and may include one or more controllable semiconductor switches, e.g., thyristors. The one or more controllable switches may be controlled to be switched on and off by a suitable controller. The isolation switches may be mechanical isolators.

The isolation switches may be used to electrically isolate (or substantially isolate) the cabling or buses from the first electrical machine and/or the second electrical machine. If switching modules being controlled to supply power are configured as current source converters, they may be capable of interrupting current and the isolation switches may be opened when current through the cabling or buses has already been interrupted.

The direct electrical connection between the first and second electrical machines eliminates the need for power converters, which may often be free-standing or remotely located, switchboards etc. as part of the power system, which results in significant cost and space savings. In particular, the power system of the present invention does not require an electrical machine to be electrically connected to an AC bus by a suitable power converter. The power converters are effectively replaced by the power electronic switching assemblies of the electrical machines. The machine conductors or conductor assemblies effectively replace the bus sections of a conventional linear switchboard. The switches between the sets of machine terminals (or between machine conductors or conductor assemblies) effectively replace the conventional bus ties that electrically connect the bus sections of the conventional linear switchboard. The resulting power system is physically compact and has improved flexibility - it may be configured to provide maximum resilience/redundancy or efficiency, for example. It is possible to have two independent system voltages but with only one prime mover and no energy storage devices. The power system may also benefit from the absence of significant fault currents so that the size of the interconnecting conductors may be reduced. DC power transmission provides an increased power throughput for a given conductor size and insulation thickness. Any interconnecting cabling or buses for DC power transmission may be significantly smaller.

If the first electrical machine is operated as a generator and the second electrical machine is operated as a motor, the first electrical machine may supply power to the second electrical machine through the electrical connection between the respective first machine terminals provided by the cabling or buses. At the same time, the first electrical machine may supply power independently to one or more second loads through the second machine terminals by controlling the second switching modules independently of the first switching modules. If the power system is used in a marine vessel, the one or more second loads may be ships or hotel service loads, for example, that may be electrically connected to a DC or AC power network. If the first electrical machine includes the optional first switch mentioned above, the first and second switching modules may supply power independently through the first and second machine terminals of the first electrical machine if the first switch is controlled to be open. If the first switch is controlled to be closed, the first and/or second switching modules of the first electrical machine may be controlled in a coordinated manner to supply the same power to the second electrical machine and/or any electrically-connected second loads through the "common" machine terminals. It may be that the first electrical machine stops supplying power to the one or more second loads, which may optionally be electrically isolated (or substantially isolated) from the first electrical machine by opening the isolation switches mentioned above. All of the power generated by the first electrical machine by controlling the first and second switching modules may then be supplied to the second electrical machine through the "common" machine terminals.

If the first electrical machine is operated as a generator and the second electrical machine is operated as a motor, at least the first switching modules may be controlled to supply a variable DC voltage to the first machine terminals. The variable DC voltage is supplied to the first switching modules of the second electrical machine through its first machine terminals, and optionally any first machine conductors or conductor assembly. By varying the DC voltage supplied to the second electrical machine and controlling the first switching modules of the second electrical machine to drive rotation of its rotor, the rotational speed of the second electrical machine may varied, i.e., to replicate the functionality of a conventional variable speed drive. If the first switching modules of the first electrical machine are configured as current source converters, for example, the amplitude of the DC voltage supplied by the first electrical machine may be proportional to rotational speed with a polarity that is determined by the power flow direction and the amplitude of the DC current may be proportional to torque. The first switching modules can be used to vary the applied coil voltages in the connected stator coil groups when the first electrical machine is operated as a generator. By delaying the firing of the controllable semiconductor switches in each first switching module of the first electrical machine, a variable DC voltage may be derived and supplied to the first machine terminals of the first electrical machine.

If the first and second machine terminals of the first electrical machine are electrically connected - i.e., when the optional first switch is controlled to be closed - the second switching modules may also be controlled to supply a variable DC voltage and the first and second switching modules are preferably controlled in a coordinated manner. If the first and second machine terminals of the first electrical machine are electrically isolated - i.e., when the optional first switch is omitted or is controlled to be open - the second switching modules may be controlled independently to supply a variable or fixed DC voltage or a variable or fixed AC voltage to the second machine terminals. A variable DC voltage may be suitable if a third electrical machine is electrically connected to the second machine terminals of the first electrical machine and is operated as a motor. The first electrical machine may therefore be configured to supply power independently through the first and second machine terminals to two electrical machines that are operated as motors. Because the second and third electrical machines are electrically connected separately to the first and second machine terminals of the first electrical machine, they may be operated at different rotational speeds or torques, and may rotate in different directions (e.g., for counter-rotating applications). A fixed DC voltage may be suitable for one or more loads such as ship or hotel services loads if the power system is used in a marine vessel, for example, or more generally for loads that prefer to operate with a fixed DC input voltage. This may include AC loads that are electrically connected to the second machine terminals by a respective power converter where a fixed DC input voltage may also be preferred. A fixed AC voltage may be suitable for similar reasons and would allow AC loads to be electrically connected directly to the second machine terminals without the need for a respective power converter. The one or more second loads may include a power network such as a DC or AC power network to which one or more loads may be electrically connected in turn.

If the first electrical machine is operated as a motor and the second electrical machine is operated as a generator, the first electrical machine may receive power from the second electrical machine through the electrical connection between the respective first machine terminals. The first electrical machine may also receive power from one or more second power sources through the second machine terminals. More particularly, the first switching modules of the first electrical machine may receive power from the first switching modules of the second electrical machine through the electrically connected first machine terminals, and the second switching modules of the first electrical machine may receive power from the one or more second power sources that are electrically connected to the second machine terminals. If the first electrical machine includes the optional first switch mentioned above, the first and second switching modules may receive power independently through the first and second machine terminals of the first electrical machine if the first switch is controlled to be open. If the first switch is controlled to be closed, the first and/or second switching modules of the first electrical machine may receive power from the second electrical machine and/or any electrically connected second power sources through the "common" machine terminals.

If the first electrical machine is operated as a motor and the second electrical machine is operated as a generator, at least the first switching modules of the first electrical machine will normally receive a variable DC voltage from the first machine terminals and any optional interposing first machine conductors or conductor assembly. The variable DC voltage is supplied from the first machine terminals of the second electrical machine, which are controlled accordingly. The supplied DC voltage may be varied by the second electrical machine and the first switching modules of the first electrical machine may be operated to vary the rotational speed of the first electrical machine when operating as a motor, i.e., to replicate the functionality of a conventional variable speed drive. If the first and second machine terminals of the first electrical machine are electrically connected - i.e., when the optional first switch is controlled to be closed - the second switching modules may also receive a variable DC voltage and may also be operated to drive the rotor of the first electrical machine in a coordinated manner. If the first and second machine terminals of the first electrical machine are electrically isolated - i.e., when the optional first switch is omitted or is controlled to be open - the second switching modules may receive a variable or fixed DC voltage or a variable or fixed AC voltage from the second machine terminals and any optional interposing second machine conductors or conductor assembly. The one or more second power sources that are electrically connected to the second machine terminals may include one or more AC power sources, optionally with a suitable power converter, or may include one or more DC power networks, for example. A variable DC voltage may be suitable if a third electrical machine similar to the second electrical machine is electrically connected to the second machine terminals - i.e., if the one or more second power sources include a third electrical machine that is operated as a generator. The first electrical machine may therefore be configured to receive power from two electrical machines that are operated as generators. The first electrical machine may be configured to receive power from both of the second and third electrical machines at the same time in a coordinated manner, or normally from just one of the electrical machines but with the option to receive power from the other electrical machine in some circumstances, e.g., in the event of a fault or if the electrical machine that normally supplies power is not operational for any reason such as during scheduled maintenance. If power is only received from one of the second and third electrical machines, the optional switch may be closed so that the first and second switching modules of the first electrical machine receive power from the "common" machine terminals and any optional interposing "common" machine conductors or a "common" conductor assembly. The first and second switching modules receive the same power from the second or third electrical machines and are preferably controlled in a coordinated manner to drive the rotor of the first electrical machine.

Both of the first and second electrical machines may be operated as generators or as motors. In other words, it is not necessary that one of the first and second electrical machines be operated as a generator and that the other one of the first and second electrical machines be operated as a motor.

The second electrical machine may further comprise second machine terminals electrically connectable to one or more second loads or power sources. The stator of the second electrical machine may further comprise a plurality of second stator coil groups that define a respective stator phase. Each second stator coil group may comprise one or more interconnected second stator coils. The power electronic switching assembly of the second electrical machine may further comprise a plurality of second switching module assemblies electrically connected to or between the second machine terminals. Each second switching module assembly may comprise one or more interconnected second switching modules, each second switching module being electrically connected to a respective second stator coil group.

The second machine terminals, the second stator coil groups, and the second switching module assemblies and second switching modules of the power electronic switching assembly may be configured and controlled as described above.

The first switching modules of the second electrical machine may be adapted to be selectively controlled independently (or substantially independently) of the second switching modules of the second electrical machine.

The first and second machine terminals of the second electrical machine may be selectively electrically connected by a second switch. If the second switch is controlled to be open, the first and second machine terminals and any connected loads or power sources are electrically isolated (or substantially isolated) and if the second switch is controlled to be closed, the first and second machine terminals are electrically connected. It will be readily understood that the second electrical machine may therefore be configured in the same way as the first electrical machine when operated as a generator or motor.

The second switch may be an electrical switch and may include one or more controllable semiconductor switches, e.g., thyristors. For example, an electrical switch that is designed to carry an AC voltage may comprise anti-parallel thyristors to allow for bidirectional current flow. Anti-parallel thyristors may also be used if the respective switching modules are configured as voltage source converters with reversible current at their DC terminals. Simple thyristors may be used if the respective switching modules are configured as current source converters with unidirectional current at their DC terminals. An electrical switch may further comprise snubbers, gate drivers, a cooling system etc. The one or more controllable switches may be controlled to be switched on and off by a suitable controller. Commutation of the electrical switch must normally be coordinated with the control of the respective switching module assemblies if thyristors are employed. One or more fully controllable semiconductor switches may also be used instead of thyristors. The electrical switch may have a series redundant configuration.

The first electrical machine may further comprise third machine terminals electrically connectable to one or more third loads or power sources. The stator of the first electrical machine may further comprise a plurality of third stator coil groups that define a respective stator phase. Each third stator coil group may comprise one or more interconnected third stator coils. The power electronic switching assembly of the first electrical machine may further comprise a plurality of third switching module assemblies electrically connected to or between the third machine terminals. Each third switching module assembly may comprise one or more interconnected third switching modules, each third switching module being electrically connected to a respective third stator coil group.

The third machine terminals, the third stator coil groups, and the third switching module assemblies and third switching modules of the power electronic switching assembly may be configured and controlled as described above.

The third switching modules of the first electrical machine may be adapted to be selectively controlled independently (or substantially independently) of the first and second switching modules of the first electrical machine. Control strategies may be used to minimise any effects of mutual coupling between the respective parts of the stator winding - i.e., between the first stator coils that are electrically connected to the first switching modules, the second stator coils that are electrically connected to the second stator modules, and the third stator coils that are electrically connected to the third switching modules.

In general terms, each electrical machine of the power system may comprise two or more sets of machine terminals. Each set of machine terminals is electrically connected to a plurality of switching module assemblies. Each set of machine terminals may be electrically connected to a set of machine conductors or a conductor assembly. The number of sets of machine terminals, machine conductors etc. will depend on the requirements of the particular power system. Each set of machine terminals may include any suitable number of individual machine terminals (e.g., a positive DC machine terminal and a negative DC machine terminal, or two or more AC machine terminals).

The second and third machine terminals of the first electrical machine may be selectively electrically connected by a third switch. If the third switch is controlled to be open, the second and third machine terminals and any connected loads or power sources are electrically isolated (or substantially isolated) and if the third switch is controlled to be closed, the second and third machine terminals are electrically connected. The first and third machine terminals of the first electrical machine may be electrically connected by a fourth switch. If the fourth switch is controlled to be open, the first and third machine terminals and any connected loads or power sources are electrically isolated (or substantially isolated) and if the fourth switch is controlled to be closed, the first and third machine terminals are electrically connected. The first, third and fourth switches therefore allow any two or all three of the first, second and third machine terminals of the first electrical machine to be electrically connected or isolated as required. The third and fourth switches may be electrical switches and may include one or more controllable semiconductor switches, e.g., thyristors. For example, an electrical switch that is designed to carry an AC voltage may comprise anti-parallel thyristors to allow for bidirectional current flow. Anti-parallel thyristors may also be used if the respective switching modules are configured as voltage source converters with reversible current at their DC terminals. Simple thyristors may be used if the respective switching modules are configured as current source converters with unidirectional current at their DC terminals. An electrical switch may further comprise snubbers, gate drivers, a cooling system etc. The one or more controllable switches may be controlled to be switched on and off by a suitable controller. The one or more controllable switches may be controlled to be switched on and off by a suitable controller. Commutation of the electrical switches must normally be coordinated with the control of the respective switching module assemblies if thyristors are employed. One or more fully controllable semiconductor switches may also be used instead of thyristors. The electrical switches may have a series redundant configuration.

The third (and any additional) machine terminals may supply or receive a variable or fixed DC voltage or a variable or fixed AC voltage as required.

In addition to the first and second electrical machines, the power system may further comprise a third electrical machine. The third electrical machine may comprise:
first machine terminals;
a stator comprising a plurality of first stator coil groups that define a respective stator phase, each first stator coil group comprising one or more interconnected first stator coils; and
a power electronic switching assembly comprising a plurality of first switching module assemblies electrically connected to or between the first machine terminals, each first switching module assembly comprising one or more interconnected first switching modules, each first switching module being electrically connected to a respective first stator coil group;
wherein the first machine terminals of the third electrical machine are electrically connected to the first or second machine terminals of the first electrical machine. In other words, the third electrical machine is a first or second load as described above.

The third electrical machine may be as described above for the first and second electrical machines. In particular, the first machine terminals, the first stator coil groups, and the first switching module assemblies and first switching modules of the power electronic switching assembly of the third electrical machine may be configured and controlled as described above.

The third electrical machine may be a rotating electrical machine. In this case, the third electrical machine may also comprise a rotor that rotates relative to the stationary stator and which is radially spaced apart from the stator by an airgap. The rotor may have any suitable construction. The rotor may include rotor windings or may be a permanent magnet rotor and include a plurality of permanent magnets circumferentially spaced around the rotor. The permanent magnets may be positioned on the surface of the rotor, e.g., using magnet carrier assemblies that are fixed to the rotor surface, or held in position using a sleeve or band. The permanent magnets may be embedded within the rotor.

The third electrical machine may also be a linear electrical machine. In this case, the third electrical machine may also comprise a mover that moves relative to the stationary stator. The mover may have any suitable construction.

The first machine terminals of the third electrical machine may be electrically connected to the first or second machine terminals of the first electrical machine by suitable cabling or buses.

The cabling or buses may be electrically connected to the first or second machine terminals of the first electrical machine by isolation switches and/or fuses. The cabling or buses may be electrically connected to the first terminals of the third electrical machine by isolation switches and/or fuses. As described above, the isolation switches may be electrical switches and may include one or more controllable semiconductor switches, e.g., thyristors. The one or more controllable switches may be controlled to be switched on and off by a suitable controller. The isolation switches may be mechanical isolators.

The isolation switches may be used to electrically isolate (or substantially isolate) the cabling or buses from the first electrical machine and/or the third electrical machine. If switching modules being controlled to supply power are configured as current source converters, they may be capable of interrupting current and the isolation switches may be opened when current through the cabling or buses has already been interrupted.

It may be preferred that the first machine terminals of the first electrical machine are electrically connected to the first machine terminals of the second electrical machine and that the second machine terminals of the first electrical machine are electrically connected to the first machine terminals of the third electrical machine. This may allow the second and third electrical machines to be electrically isolated (or substantially isolated) from each other. But it is possible for the first machine terminals of the second and third electrical machines to both be electrically connected to the first machine terminals of the first electrical machine in parallel. If the first electrical machine is operated as a generator, and the second and third electrical machines are operated as motors, for example, the first electrical machine may supply power to the second electrical machine through the electrical connection between the respective first machine terminals of the first and second electrical machines, and may supply power to the third electrical machine through the electrical connection between the second machine terminal of the first electrical machine and the first machine terminals of the third electrical machine. Such power may be supplied independently to the second and third electrical machines if the first and second machine terminals of the first electrical machine are electrically isolated, or in a coordinated manner if the first and second machine terminals of the first electrical machine are electrically connected - i.e., if the first switch is controlled to be closed. If the first switch is controlled to be closed, the first electrical machine may supply the same power to one or both of the second and third electrical machines from the "common" machine terminals. In this case, the second and third electrical machines are effectively electrically connected in parallel to the "common" machine terminals. If the first machine terminals of the second and third electrical machines are electrically connected in parallel to the first machine terminals of the first electrical machine, the second machine terminals of the first electrical machine may be electrically connected to one or more other second loads or power sources. The second and third electrical machines may also be electrically connected to the first machine terminals of the first electrical machine in series as described in more detail below.

If the first electrical machine is operated as a motor and the second and third electrical machines are operated as generators, the first electrical machine may receive power from the second electrical machine through the electrical connection between the respective first machine terminals of the first and second electrical machines, and receive power from the third electrical machine through the electrical connection between the second machine terminals of the first electrical machine and the first machine terminals of the third electrical machine. Such power may be received independently from the second and third electrical machines if the first and second machine terminals of the first electrical machine are electrically isolated, or in a coordinated manner if the first and second machine terminals of the first electrical machine are electrically connected - i.e., if the first switch is controlled to be closed. If the first switch is controlled to be closed, the first electrical machine may receive power from one or both of the second and third electrical machines through the "common" machine terminals. The first and second switching modules are preferably controlled in a coordinated manner to drive the rotor of the first electrical machine.

The machine terminals of any electrical machine may be used to transfer or re-direct power even if the respective electrical machine is not operating, i.e., if the switching modules associated with a particular set of machine terminals are turned off. For example, the machine terminals of the first electrical machine may be used to transfer or re-direct power between the second and third electrical machines if the first electrical machine is not operating - optionally by closing the first switch so that the second and third electrical machines are electrically connected to "common" machine terminals of the first electrical machine. Such functionality may be similar to a bus section of a conventional linear switchboard that is not electrically connected to a generator. The interconnected machine terminals may therefore be used as required to direct power through the power system. Machine terminals of two or more electrical machines may be interconnected as necessary to facilitate the transfer or re-direction of power through the power system as a whole. This may include interconnection between machine terminals of two or more electrical machines that normally operate as generators or that normally operate as motors, for example.

It will be clear to the skilled person that the above examples may be expanded in several different ways to create many different power systems. Each power system may include any suitable number of electrical machines having any suitable number of sets of machine terminals and machine conductors or conductor assemblies (e.g., one, two, three or more sets) and where these sets of machine terminals are electrically connected between the electrical machines in different ways, and optionally to other loads or power sources. Different sets of machine terminals may optionally be electrically connected by switches that may be open or closed as required. A particular power system with a particular number of electrical machines, and where each electrical machine has a particular number of sets of machine terminals, and where the machine terminals are electrically connected in a particular way, may still therefore be reconfigurable as required (e.g., for different operating conditions) by opening and closing the switches to electrically isolate or connect respective sets of machine terminals and any associated machine conductors or conductor assemblies. The switching modules of each electrical machine may also be controlled in a suitable way, either independently or in a coordinated manner, depending on the operating conditions and whether the machine terminals to which the switching modules are electrically connected are isolated or electrically connected to other machine terminals. For example, for one operating condition of the power system, certain switching modules may be controlled to provide a fixed DC voltage and for another operating condition they may be controlled to provide a variable DC voltage or *vice versa.* For one operating condition of the power system, certain switching modules may be controlled to provide a DC voltage and for another operating condition they may be controlled to provide a single- or multi-phase AC voltage or *vice versa.* This may be achieved simply by adjusting how the switching modules are controlled to commutate the coil current of the stator coil groups if the power system is reconfigured for a different operating condition. The switching modules and the respective machine terminals and conductors may be configured depending on the operational flexibility that is required. The power system is highly flexible and can be adapted easily to different operating conditions, e.g., of a marine vessel. The power system also provides significant redundancy with the ability to adapt in response to faults or component failures. Most importantly, it also allows the physically separate, discrete power converters and switchboards that are normally required in conventional power systems to be omitted.

The rotor of an electrical machine that normally operates as a generator may be configured to be driven by a prime mover such as a diesel engine or gas turbine engine, for example, or by any other suitable rotary power source or driver such as a wind or hydro turbine assembly. The rotor of an electrical machine that normally operates a motor may be configured to drive a load such as a propulsion load if the power system is used in a marine vessel, for example. If the electrical machine is not a rotating electrical machine (e.g., it is a linear electrical machine with a mover) it will be understood that other power sources and/or loads may be used as part of the power system.

An electrical machine that normally operates as a motor may sometimes operate as a generator, e.g., during regenerative braking, and *vice versa.* In this situation, the switching modules of the electrical machine that is operating as a generator may be controlled to provide power instead of being controlled to drive the rotor. The generated power may be supplied to the machine terminals of a second electrical machine or to different machine terminals of the same electrical machine (i.e., so that the power is recirculated within the machine). In some arrangements, the generated or received power may be re-directed to another part of the power system. For example, if the second electrical machine includes another set of machine terminals, which might for example, be electrically connected to a power network, the optional switch between the sets of machine terminals might be closed so that the received power might be supplied to the power network. Power generated by the electrical machine may also be re-directed to an energy storage device (e.g., a battery, super-capacitor, flywheel energy storage system etc.) or a dynamic braking system where it may be dissipated as heat. The energy storage device may be electrically connected to the machine terminals of the electrical machine that is operating as a generator, e.g., during regenerative braking, or to the machine terminals of another electrical machine of the power system to which power may be re-directed. An electrical machine may operate simultaneously as a motor and a generator with power being received at the first machine terminals and being supplied to the second machine terminals, or *vice versa.* In the case of a rotating electrical machine, for example, the input torque on the rotor shaft may be different from its internal torque, i.e. with the exception of power losses associated with electrical machines and power converters having less than 100% efficiency in practice, the air gap torque associated with power delivery to the second machine terminals may be the sum of the input torque on the rotor shaft and the air gap torque associated with power received at the first machine terminals. Recirculating power may be useful in certain operating conditions such as when a prime mover is compromised or where a transient overload occurs.

In one example, the power system may be implemented as a marine power distribution system and the present invention may further provide a marine vessel comprising the power system described above. The prime movers in such a marine power distribution system may be of different types, power rating etc. Suitable propulsion loads that may be driven by one or more electrical machines when operated as a motor may comprise propellors, thrusters etc. By eliminating a conventional fixed frequency power distribution network, there is no need to constrain or limit the shaft speed of the prime movers to a particular distribution frequency. Prime movers and electrical machines may therefore be allowed to operate at any ideal shaft speed for a given operating condition of the power system.

As mentioned above, the power system is not limited to marine applications and may also be used for any suitable land- and air-based applications.

### Drawings

Figure 1 is schematic representation of a known power system for a marine vessel;
Figure 2 is a schematic representation of a known electrical machine that includes a power electronic switching assembly with a plurality of switching modules and where each switching module is electrically connected to a respective stator coil;
Figure 3 is a schematic representation of a known switching module;
Figure 4 is a schematic representation of an electrical machine according to the present invention that includes a pair of first machine conductors and a pair of second machine conductors, where each stator coil group includes a single stator coil and where each switching module assembly includes a single switching module;
Figure 5 is a schematic representation of the power electronic switching assembly and stator coils of the electrical machine of Figure 4;
Figure 6 is a schematic representation of a power electronic switching assembly and stator coils of an electrical machine according to the present invention where each stator coil group includes a pair of series-connected stator coils;
Figure 7 is a schematic representation of a power electronic switching assembly and stator coils of an electrical machine according to the present invention where each switching module assembly includes a plurality of series-connected switching modules and where the switching module assemblies are connected in parallel to the machine conductors;
Figure 8 is a schematic representation of an electrical machine according to the present invention where the switching module assemblies are interconnected in a chain-link configuration;
Figure 9 is a schematic representation of the power electronic switching assembly and stator coils of the electrical machine of Figure 8;
Figure 10 is a schematic representation of a power electronic switching assembly and stator coils of an electrical machine according to the present invention where the switching module assemblies are interconnected in a chain-link configuration and arranged in parallel-connected groups;
Figure 11 is a schematic representation of a switching module according to the present invention configured as a current source converter;
Figure 12 is a schematic representation of a switching module according to the present invention configured as a voltage source converter;
Figure 13 is a schematic representation of an electrical machine according to the present invention that includes a triplet of first machine conductors and a triplet of second machine conductors;
Figure 14 is a schematic representation of the power electronic switching assembly and stator coils of the electrical machine of Figure 13;
Figure 15 is a schematic representation of a switching module according to the present invention configured as a back-to-back current source converter and a voltage source converter;
Figure 16 is a schematic representation of the electrical machine of Figure 4 that includes a first switch;
Figure 17 is a schematic representation of an electrical machine according to the present invention that includes a pair of third machine conductors;
Figure 18 is a schematic representation of the power electronic switching assembly and stator coils of the electrical machine of Figure 17;
Figure 19 is a schematic representation of the electrical machine of Figure 17 with first, second and third switches;
Figure 20 is a schematic representation of a first example of a power system according to the present invention;
Figure 21 is a schematic representation of a second example of a power system according to the present invention;
Figure 22 is a schematic representation of a third example of a power system according to the present invention;
Figure 23 is a schematic representation of a fourth example of a power system according to the present invention;
Figures 24, 25 and 26 are schematic representations of different operating conditions of the third example of the power system shown in Figure 23; and
Figure 27 is a detail view of Figures 23 to 26 showing the interconnection between the four electrical machines.

### Detailed description

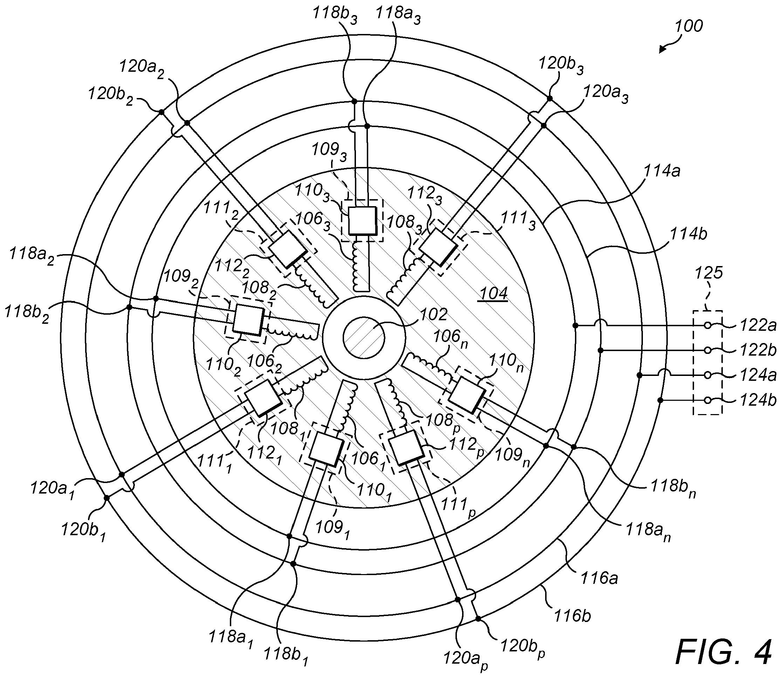

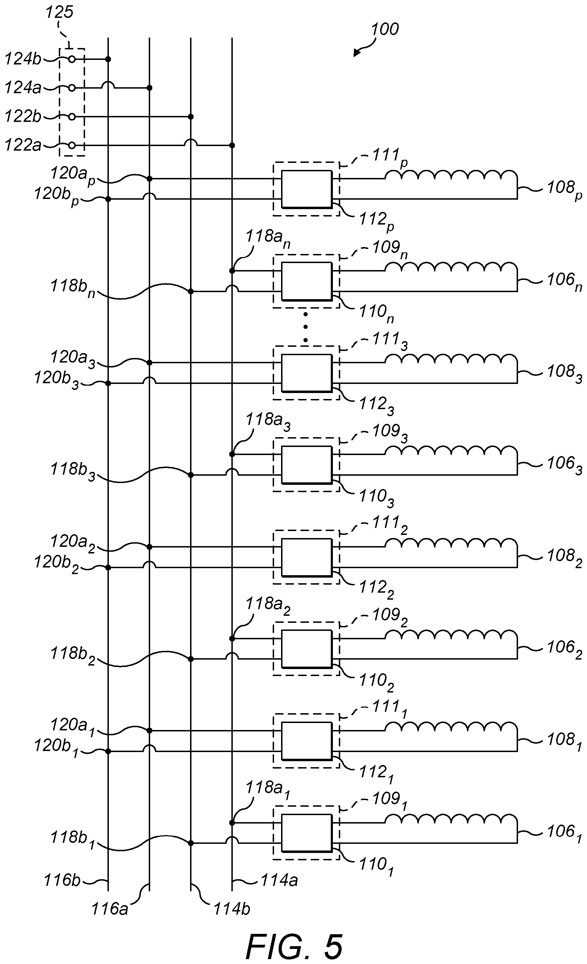

Figures 4 and 5 are schematic representations of an electrical machine 100 according to the present invention. The electrical machine 100 includes a rotor 102 and a stator 104 that is spaced apart from the rotor by an airgap. The stator 104 includes a plurality of first stator coils 106₁, 106₂, ..., 106ₙ where n is any suitable integer (e.g., sixty (60)) and a plurality of second stator coils 108₁, 108₂, ..., 108ₚ where p is any suitable integer (e.g., sixty (60)). In this example, n and p are the same but they can be different. The stator 104 includes a total of one hundred and twenty (120) stator coils. The stator coils may be single-layer coils so that only one coil side is received in a corresponding stator slot or two-layer coils so that two coil sides are received in the same stator slot one on top of the other, for example. In Figures 4 and 5, the first and second stator coils 106₁, 106₂, ..., 106ₙ and 108₁, 108₂, ..., 108ₚ are shown to be arranged alternately around the circumference of the stator 104, but they may be arranged in different ways, e.g., in groups.

A power electronic switching assembly of the electrical machine 100 includes a plurality of first switching module assemblies 109₁, 109₂, ..., 109ₙ and a plurality of second switching module assemblies 111₁, 111₂, ..., 111ₚ. Each of the first switching module assemblies 109₁, 109₂, ..., 109ₙ includes a first switching module 110₁, 110₂, ..., 110ₙ and each of the second switching module assembles 111₁, 111₂, ..., 111ₚ includes a second switching module 112₁, 112₂, ..., 112ₚ.

Each of the first stator coils 106₁, 106₂, ..., 106ₙ is electrically connected to a pair of AC terminals of a respective first switching module 110₁, 110₂, ..., 110ₙ and each of the second stator coils 108₁, 108₂, ..., 108ₚ is electrically connected to a pair of AC terminals of a respective second switching module 112₁, 112₂, ..., 112ₚ. The first and second switching modules 110₁, 110₂, ..., 110ₙ and 112₁, 112₂, ..., 112ₚ will normally be arranged around the circumference of the stator 104. The power electronic switching assembly includes a total of one hundred and twenty (120) switching modules - i.e., sixty (60) first switching modules 110₁, 110₂, ..., 110ₙ and sixty (60) second switching modules 112₁, 112₂, ..., 112ₚ.

Each stator coil defines a respective stator phase. The electrical machine 100 shown in Figures 4 and 5 has n first stator coils 106₁, 106₂, ..., 106ₙ defining n first stator phases and p second stator coils 108₁, 108₂, ..., 108ₚ defining p second stator phases. When the electrical machine 100 is operating, the first stator coils 106₁, 106₂, ..., 106ₙ define a plurality of phase-shifted first coil voltages that are commutated by the first switching modules 110₁, 110₂, ..., 110ₙ, and the second stator coils 108₁, 108₂, ..., 108ₚ define a plurality of phase-shifted second coil voltages that are commutated by the second switching modules 112₁, 112₂, ..., 112ₚ.

The electrical machine 100 includes a pair of first machine conductors 114a, 114b and a pair of second machine conductors 116a, 116b. The machine conductors 114a, 114b and 116a, 116b may be formed as separate annular rings (or "endrings") of electrically conductive material, e.g., copper. The endrings may be spaced apart in the axial direction so that they are electrically isolated. For the avoidance of any doubt, although in Figure 4 the first and second machine conductors 114a, 114b and 116a, 116b are conveniently represented as pairs of concentric rings around the rotor 102 and the stator 104, in practice they may be formed as axially-spaced endrings at an axial end of the stator 104. In particular, the pair of endrings defining the first machine conductors 114a, 114b may be positioned at a first axial end of the stator 104 and the pair of endrings defining the second machine conductors 116a, 116b may be positioned at the first axial end of the stator 104 or at a second axial end of the stator.

The first and second machine conductors 114a, 114b and 116a, 116b are electrically isolated from each other.

Each first switching module 110₁, 110₂, ..., 110ₙ has a pair of module terminals 118a, 118b - i.e., the module terminals 118a₁, 118b₁, 118a₂, 118b₂, ..., 118aₙ, 118bₙ shown in Figures 4 and 5. The module terminals 118a, 118b are electrically connected to the first machine conductors 114a, 114b as shown. In particular, the module terminal 118a of each first switching module 110₁, 110₂, ..., 110ₙ is electrically connected to the machine conductor 114a and the module terminal 118b of each first switching module 110₁, 110₂, ..., 110ₙ is electrically connected to the machine conductor 114b.

Each second switching module 112₁, 112₂, ..., 112ₚ has a pair of module terminals 120a, 120b - i.e., the module terminals 120a₁, 120b₁, 120a₂, 120b₂, ..., 120aₚ, 120bₚ shown in Figures 4 and 5. The module terminals 120a, 120b are electrically connected to the second machine conductors 116a, 116b as shown. In particular, the module terminal 120a of each second switching module 112₁, 112₂, ..., 112ₚ is electrically connected to the machine conductor 116a and the module terminal 120b of each second switching module 112₁, 112₂, ..., 112ₚ is electrically connected to the machine conductor 116b.

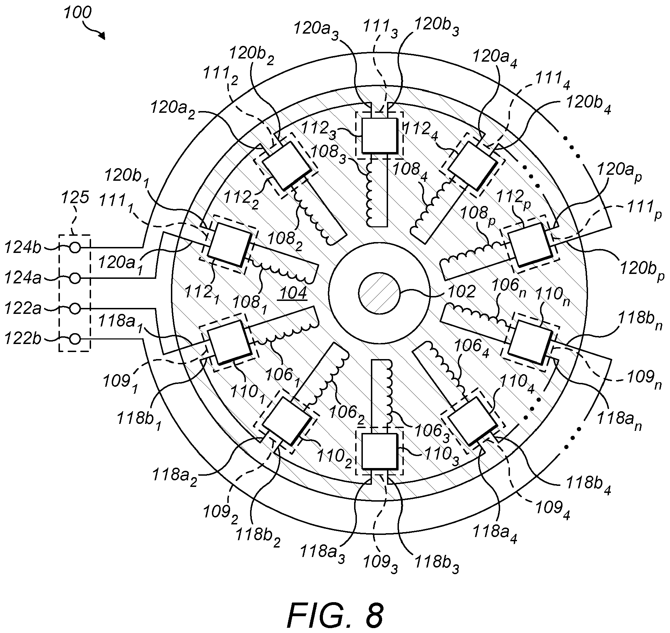

In this way, each of the first switching modules 110₁, 110₂, ..., 110ₙ is electrically connected to the first machine conductors 114a, 114b and each of the second switching modules 112₁, 112₂, ..., 112ₚ is electrically connected to the second machine conductors 116a, 116b. The first stator coils 106₁, 106₂, ..., 106ₙ and the first switching modules 110₁, 110₂, ..., 110ₙ are arranged circumferentially around the stator 104 and electrical connections can be made to the first machine conductors 114a, 114b at the first axial end of the stator. The second stator coils 108₁, 108₂, ..., 108ₚ and the second switching modules 112₁, 112₂, ..., 112ₚ are similarly arranged circumferentially around the stator 104 and electrical connections can be made to the second machine conductors 116a, 116b at the first or second axial end of the stator. Alternatively, as shown in Figures 8 to 10 and described below, the first switching modules 110₁, 110₂, ..., 110ₙ may be electrically connected using suitable cabling or buses and the second switching modules 112₁, 112₂, ..., 112ₚ may be electrically connected using suitable cabling or buses.

The electrical machine 100 has a pair of first machine terminals 122a, 122b and a pair of second machine terminals 124a, 124b as shown in Figures 4 and 5. The machine terminal 122a is electrically connected to the machine conductor 114a and the machine terminal 122b is electrically connected to the machine conductor 114b. The machine terminal 124a is electrically connected to the machine conductor 116a and the machine terminal 124b is electrically connected to the machine conductor 116b. The first and second machine terminals 122a, 122b and 124a, 124b allow external electrical connections to be made to the electrical machine 100 using suitable cabling or buses, for example. This is described in more detail below. The first and second machine terminals 122a, 122b and 124a, 124b may be located in a terminal box 125 of the electrical machine 100.

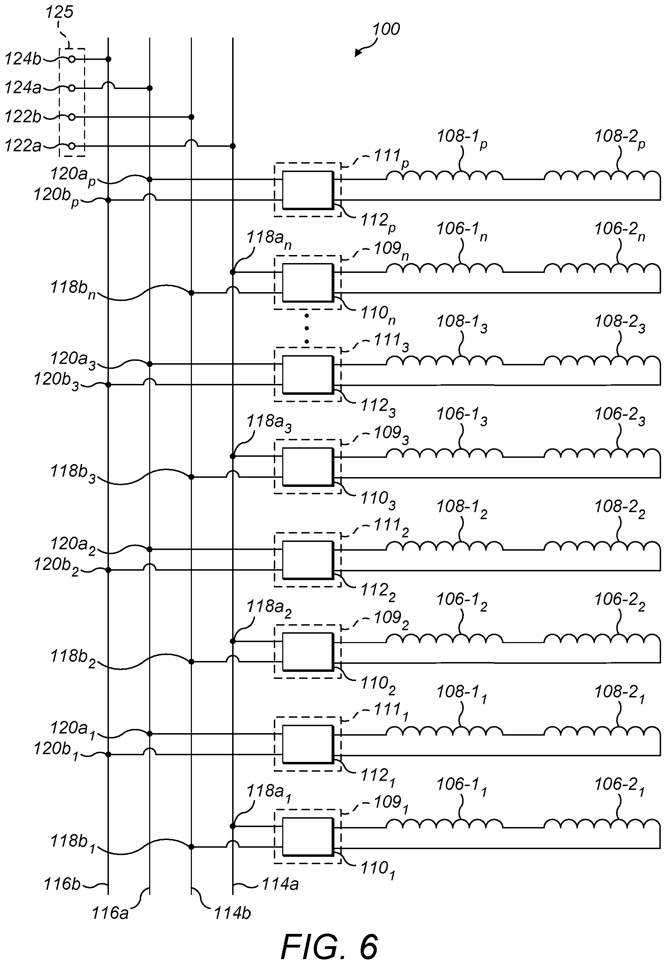

Figure 6 is a schematic representation of part of an alternative electrical machine 100 according to the present invention where each first switching module 110₁, 110₂, ..., 110ₙ is electrically connected to two series-connected first stator coils and each second switching module 112₁, 112₂, ..., 112ₚ is electrically connected to two series-connected second stator coils. In particular, a first one of the first switching modules 110₁ is electrically connected to two series-connected first stator coils 106-1₁, 106-2₁, a second one of the first switching modules 110₂ is electrically connected to two series-connected first stator coils 106-1₂, 106-2₂, and so on. A first one of the second switching modules 112₁ is electrically connected to two series-connected second stator coils 108-1₁, 108-2₁, a second one of the second switching modules 112₂ is electrically connected to two series-connected second stator coils 108-1₂, 108-2₂, and so on. Each pair of series-connected stator coils (e.g., stator coils 106-1₁ and 106-2₁) is a stator coil group that defines a respective stator phase - i.e., where the coil voltages of the series-connected stator coils are in phase. The electrical machine 100 shown in Figure 6 has n first stator coil groups where each first stator coil group is defined by a respective pair of series-connected first stator coils and p second stator groups where each second stator coil group is defined by a respective pair of series-connected second stator coils. When the electrical machine 100 is operating, the first stator coil groups define a plurality of phase-shifted first coil voltages that are commutated by the first switching modules 110₁, 110₂, ..., 110ₙ, and the second stator coil groups define a plurality of phase-shifted second coil voltages that are commutated by the second switching modules 112₁, 112₂, ..., 112ₚ. It will be clear that each first switching module 110₁, 110₂, ..., 110ₙ may be electrically connected to three or more series-connected first stator coils and that each second switching module 112₁, 112₂, ..., 112ₚ may be electrically connected to three or more series-connected second stator coils. In all other respects, the electrical machine 100 shown in Figure 6 is the same as the electrical machine shown in Figures 4 and 5.

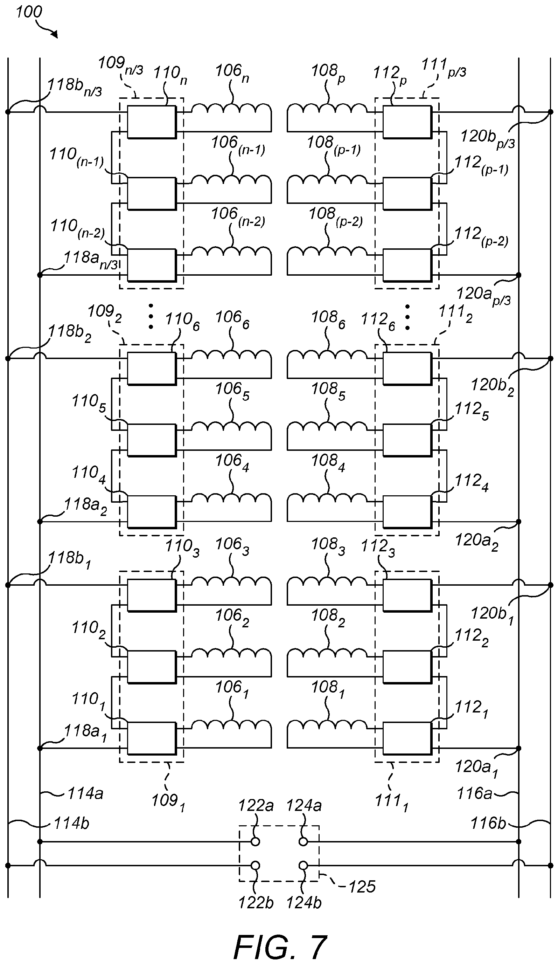

Figure 7 is a schematic representation of part of an alternative electrical machine 100 where each first switching module assembly 109₁, 109₂, ..., 109_{n/3} and each second switching module assembly 111₁, 111₂, ..., 111_{p/3} includes three switching modules. It will be clear that each switching module assembly may include two or four or more switching modules if required.

The switching modules of each first switching module assembly 109₁, 109₂, ..., 109_{n/3} are arranged in a "chain link" configuration as shown. Each first switching module assembly 109₁, 109₂, ..., 109_{n/3} has a pair of module terminals 118a, 118b - i.e., the module terminals 118a₁, 118b₁, 118a₂, 118b₂, ..., 118a_{n/3}, 118b_{n/3} shown in Figure 7 - that are electrically connected to the pair of first machine conductors 114a, 114b in parallel.

The switching modules of each second switching module assembly 111₁, 111₂, ..., 111_{p/3} are arranged in a "chain link" configuration as shown. Each second switching module assembly 111₁, 111₂, ..., 111_{p/3} has a pair of module terminals 120a, 120b - i.e., the module terminals 120a₁, 120b₁, 120a₂, 120b₂, ..., 120a_{p/3}, 120b_{p/3} shown in Figure 7 - that are electrically connected to the pair of second machine conductors 116a, 116b in parallel.

In all other respects, the electrical machine 100 shown in Figure 7 is the same as the electrical machine shown in Figures 4 and 5. It will be clear that each first and second switching module 110₁, 110₂, ..., 110ₙ and 112₁, 112₂, ..., 112ₚ may be electrically connected to two or more stator coils as shown in Figure 6.

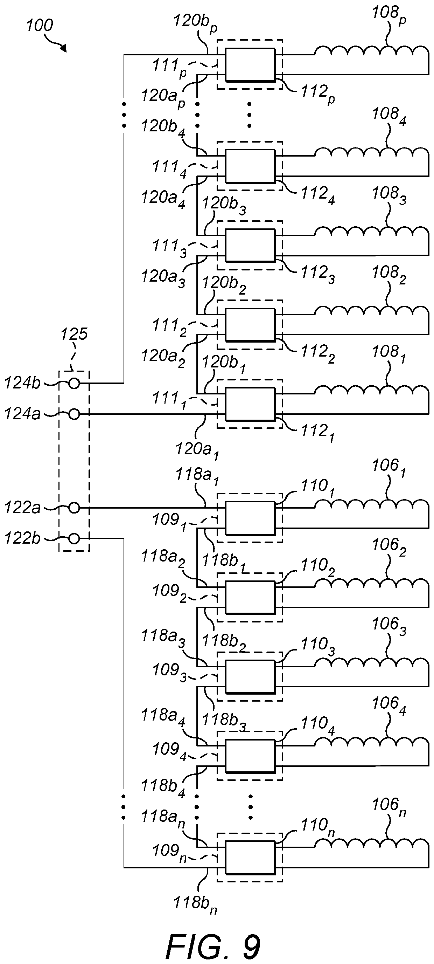

Figures 8 and 9 are schematic representations of an alternative electrical machine 100 according to the present invention. The electrical machine 100 includes a rotor 102 and a stator 104 that is spaced apart from the rotor by an airgap. The stator 104 includes a plurality of first stator coils 106₁, 106₂, ..., 106ₙ where n is any suitable integer (e.g., sixty (60)) and a plurality of second stator coils 108₁, 108₂, ..., 108ₚ where p is any suitable integer (e.g., sixty (60)). In this example, n and p are the same but they can be different. The stator 104 includes a total of one hundred and twenty (120) stator coils. The stator coils may be single-layer coils so that only one coil side is received in a corresponding stator slot or two-layer coils so that two coil sides are received in the same stator slot one on top of the other, for example. In Figures 8 and 9, the first and second stator coils 106₁, 106₂, ..., 106ₙ and 108₁, 108₂, ..., 108ₚ are shown to be arranged in two groups, but they may be arranged in different ways, e.g., where individual first and second stator coils are arranged alternately or where groups of first and second stator coils are arranged alternately around the stator.

A power electronic switching assembly of the electrical machine 100 includes a plurality of first switching module assemblies 109₁, 109₂, ..., 109ₙ and a plurality of second switching module assemblies 111₁, 111₂, ..., 111ₚ. Each of the first switching module assemblies 109₁, 109₂, ..., 109ₙ includes a first switching module 110₁, 110₂, ..., 110ₙ and each of the second switching module assembles 111₁, 111₂, ..., 111ₚ includes a second switching module 112₁, 112₂, ..., 112ₚ.

Each of the first stator coils 106₁, 106₂, ..., 106ₙ is electrically connected to a pair of AC terminals of a respective first switching module 110₁, 110₂, ..., 110ₙ and each of the second stator coils 108₁, 108₂, ..., 108ₚ is electrically connected to a pair of AC terminals of a respective second switching module 112₁, 112₂, ..., 112ₚ. It will be clear that each first and second switching module 110₁, 110₂, ..., 110ₙ and 112₁, 112₂, ..., 112ₚ may be electrically connected to two or more stator coils as shown in Figure 6. The first and second switching modules 110₁, 110₂, ..., 110ₙ and 112₁, 112₂, ..., 112ₚ will normally be arranged around the circumference of the stator 104 and they are arranged in two groups as shown. The power electronic switching assembly includes a total of one hundred and twenty (120) switching modules - i.e., sixty (60) first switching modules 110₁, 110₂, ..., 110ₙ and sixty (60) second switching modules 112₁, 112₂, ..., 112ₚ.

Each stator coil defines a respective stator phase. When the electrical machine 100 is operating, the first stator coils 106₁, 106₂, ..., 106ₙ define a plurality of phase-shifted first coil voltages that are commutated by the first switching modules110₁, 110₂, ..., 110ₙ, and the second stator coils 108₁, 108₂, ..., 108ₚ define a plurality of phase-shifted second coil voltages that are commutated by the second switching modules 112₁, 112₂, ..., 112ₚ.

Each first switching module 110₁, 110₂, ..., 110ₙ has a pair of module terminals 118a, 118b - i.e., the module terminals 118a₁, 118b₁, 118a₂, 118b₂, ..., 118aₙ, 118bₙ shown in Figures 8 and 9. Each second switching module 112₁, 112₂, ..., 112ₚ has a pair of module terminals 120a, 120b - i.e., the module terminals 120a₁, 120b₁, 120a₂, 120₂, ..., 120aₚ, 120bₚ shown in Figures 8 and 9.

The electrical machine 100 has a pair of first machine terminals 122a, 122b and a pair of second machine terminals 124a, 124b. The first and second machine terminals 122a, 122b and 124a, 124b may be located in a terminal box 125 of the electrical machine 100.

The first switching modules 110₁, 110₂, ..., 110ₙ and the second switching modules 112₁, 112₂, ..., 112ₚ are arranged in a "chain link" configuration. More particularly, the module terminal 118a₁ of a first one of the first switching modules 110₁ is electrically connected to one of the first machine terminals 122a. The module terminal 118b₁ of the first one of the first switching modules 110₁ is electrically connected to the module terminal 118a₂ of a second one of the first switching modules 110z. The module terminal 118b₂ of the second one of the first switching modules 110₂ is electrically connected to the module terminal 118a₃ of a third one of the first switching modules 110₃, and so on. The module terminal 118bₙ of the nth one of the first switching modules 110ₙ is electrically connected to the other one of the first machine terminals 122b. The module terminals 118a, 118b of the first switching modules 110₁, 110₂, ..., 110ₙ are therefore electrically connected in series between the first machine terminals 122a, 122b.

The module terminal 120a₁ of a first one of the second switching modules 112₁ is electrically connected to one of the second machine terminals 124a. The module terminal 120b₁ of the first one of the second switching modules 112₁ is electrically connected to the module terminal 120a₂ of a second one of the second switching modules 112₂. The module terminal 120b₂ of the second one of the second switching modules 112₂ is electrically connected to the module terminal 120a₃ of a third one of the second switching modules 112₃, and so on. The module terminal 120bₙ of the pth one of the second switching modules 112ₚ is electrically connected to the other one of the second machine terminals 124b. The module terminals 120a, 120b of the second switching modules 112₁, 112₂, ..., 112ₚ are therefore electrically connected in series between the second machine terminals 124a, 124b.

The first and second switching modules 110₁, 110₂, ..., 110ₙ and 112₁, 112₂, ..., 112ₚ are electrically connected to each other and to the respective machine terminals by suitable cabling or buses, for example.

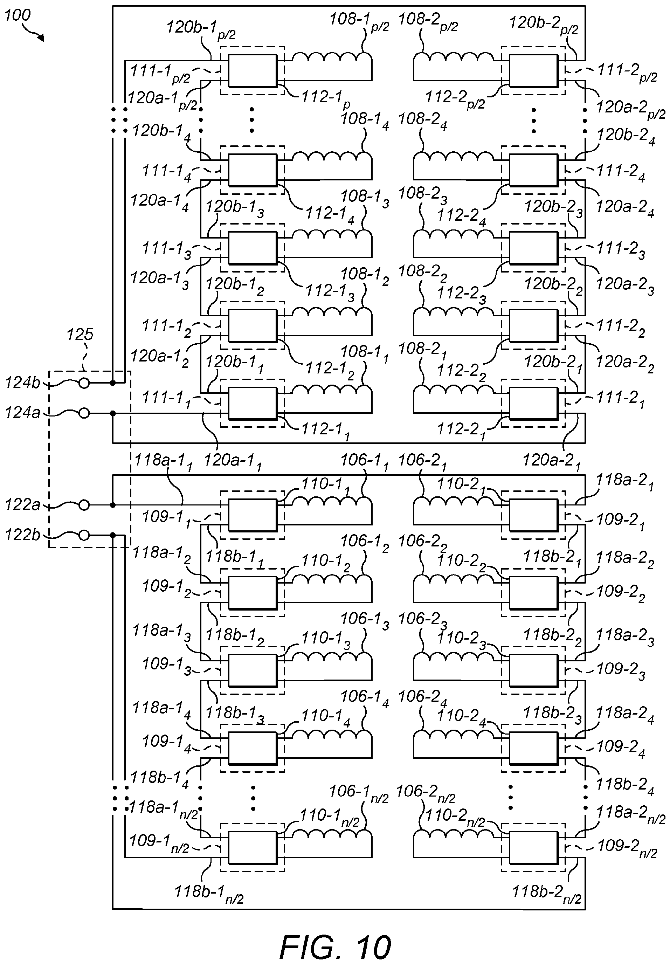

Figure 10 is a schematic representation of part of an alternative electrical machine 100 where the first switching modules are arranged in two separate groups and the second switching modules are arranged in two separate groups. In particular, the first switching modules are arranged in a first group 110-1₁, 110-1₂, ..., 110-1_{n/2} and a second group 110-2₁, 110-2₂, ..., 110-2_{n/2} such that half of the first switching modules are in the first group and half of the first switching modules are in the second group. The second switching modules are arranged in a first group 112-1₁, 112-1₂, ..., 112-1_{p/2} and a second group 112-2₁, 112-2₂, ..., 112-2_{p/2} such that half of the second switching modules are in the first group and half of the second switching modules are in the second group.

The switching modules in each group are arranged in a "chain link" configuration. More particularly, the module terminal 118a-1₁ of a first one of the first switching modules 110-1₁ is electrically connected to one of the first machine terminals 122a. The module terminal 118b-1₁ of the first one of the first switching modules 110-1₁ is electrically connected to the module terminal 118a-1₂ of a second one of the first switching modules 110-1₂. The module terminal 118b-1₂ of the second one of the first switching modules 110-1₂ is electrically connected to the module terminal 118a-1₃ of a third one of the first switching modules 110-1₃, and so on. The module terminal 118b-1_{n/2} of the n/2th one of the first switching modules 110-1_{n/2} is electrically connected to the other one of the first machine terminals 122b. The module terminals 118a-1, 118b-1 of the first switching modules 110-1₁, 110-1₂, ..., 110-1_{n/2} (i.e., the switching modules of the first group) are therefore electrically connected in series between the first machine terminals 122a, 122b.

The module terminal 118a-2₁ of a first one of the first switching modules 110-2₁ is electrically connected to one of the first machine terminals 122a. The module terminal 118b-2₁ of the first one of the first switching modules 110-2₁ is electrically connected to the module terminal 118a-2₂ of a second one of the first switching modules 110-2₂. The module terminal 118b-2₂ of the second one of the first switching modules 110-2₂ is electrically connected to the module terminal 118a-2₃ of a third one of the first switching modules 110-2₃, and so on. The module terminal 118b-2_{n/2} of the n/2th one of the first switching modules 110-2_{n/2} is electrically connected to the other one of the first machine terminals 122b. The module terminals 118a-2, 118b-2 of the first switching modules 110-2₁, 110-2₂, ..., 110-2_{n/2} (i.e., the switching modules of the second group) are therefore electrically connected in series between the first machine terminals 122a, 122b and in parallel with the switching modules 110-1₁, 110-1₂, ..., 110-1_{n/2} of the first group.

The module terminal 120a-1₁ of a first one of the second switching modules 112-1₁ is electrically connected to one of the second machine terminals 124a. The module terminal 120b-1₁ of the first one of the second switching modules 112-1₁ is electrically connected to the module terminal 120a-1₂ of a second one of the second switching modules 112-1₂. The module terminal 120b-1₂ of the second one of the second switching modules 112-1₂ is electrically connected to the module terminal 120a-1₃ of a third one of the second switching modules 112- 1₃, and so on. The module terminal 120b-1_{p/2} of the p/2th one of the second switching modules 112-1_{p/2} is electrically connected to the other one of the second machine terminals 124b. The module terminals 120a-1, 120b-1 of the second switching modules 112-1₁, 112-1₂, ..., 112-1_{p/2} (i.e., the switching modules of the first group) are therefore electrically connected in series between the second machine terminals 124a, 124b.

The module terminal 120a-2₁ of a first one of the second switching modules 112-2₁ is electrically connected to one of the second machine terminals 124a. The module terminal 120b-2₁ of the first one of the second switching modules 112-2₁ is electrically connected to the module terminal 120a-2₂ of a second one of the second switching modules 112-2₂. The module terminal 120b-2z of the second one of the second switching modules 112-2₂ is electrically connected to the module terminal 120a-2₃ of a third one of the second switching modules 112-2₃, and so on. The module terminal 120b-2_{p/2} of the p/2th one of the second switching modules 112-2_{p/2} is electrically connected to the other one of the second machine terminals 124b. The module terminals 120a-2, 120-2 of the second switching modules 112-2₁, 112-2₂, ..., 112-2_{p/2} (i.e., the switching modules of the second group) are therefore electrically connected in series between the second machine terminals 124a, 124b and in parallel with the switching modules 112-1₁, 112-1₂, ..., 112-1_{p/2} of the first group.

In all other respects, the electrical machine 100 shown in Figure 10 is the same as the electrical machine shown in Figures 8 and 9.

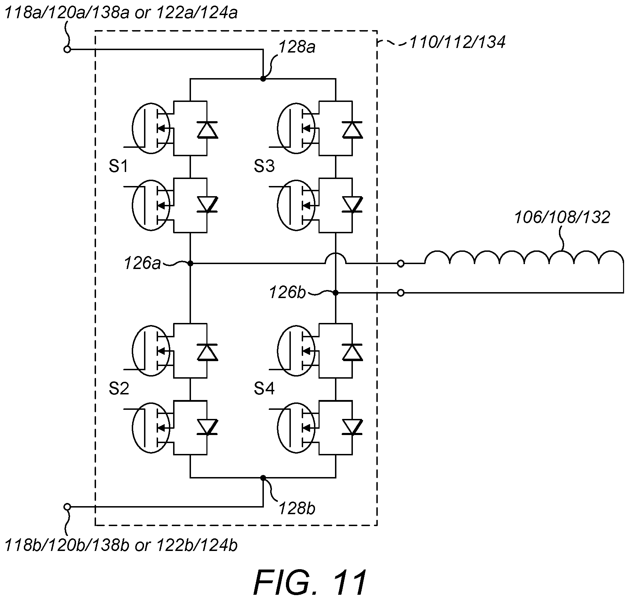

Figure 11 shows an individual switching module - i.e., a first switching module 110 or a second switching module 112 (or a third switching module 134 - see below). Each switching module includes an H-bridge circuit configured as a current source converter with a pair of AC bridge terminals 126a, 126b that are electrically connected to a respective stator coil - i.e., a first stator coil 106 or a second stator coil 108 (or a third stator coil 132 - see below). Each H-bridge circuit also includes a pair of DC bridge terminals 128a, 128b that are electrically connected to the module terminals of the switching module - i.e., to the module terminals 118a, 118b or 120a, 120b (or 138a, 138b - see below). The DC bridge terminals 128a, 128b may also be electrically connected to the machine terminals of the electrical machine - i.e., to one of the pair of first machine terminals 122a, 122b or one of the pair of second machine terminals 124a, 124b, for example.

Each H-bridge circuit includes four bidirectional bridge switches S1, S2, S3 and S4. Each bridge switch S1, S2, ..., S4 includes a pair of MOSFETs connected in anti-series (or back-to-back), but it will be understood that other possible switch arrangements are described above or are known to the skilled person. An anti-parallel diode is shown for each MOSFET within each bridge switch S1, S2, ..., S4 and it will be understood that in practice this is provided by the body diode of each MOSFET. For each bridge switch S1, S2, ..., S4 the reverse blocking function is provided by the lower one of the pair of anti-series connected MOSFETs and the forward blocking function is provided by the upper one of the pair of anti-series connected MOSFETs.

The bridge switches S1, S2, ..., S4 are controlled to turn on and off by gate drive signals which are generated by a gate drive controller (not shown). When back-to-back MOSFETs or other back-to-back semiconductor switches are used, the gate drive signal for each switch is simultaneously routed to both of the semiconductor switches. For example, a first gate drive signal is simultaneously routed to both MOSFETs of bridge switch S1. This means that both MOSFETs of each bridge switch are turned on and off simultaneously by the respective gate drive signal.

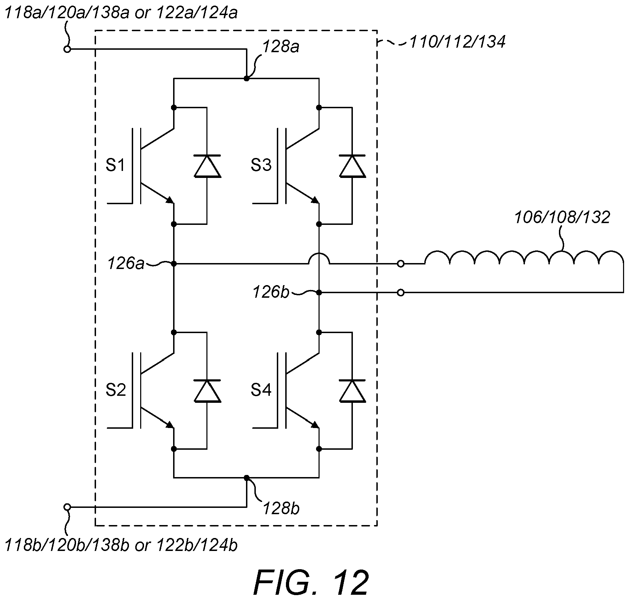

Figure 12 shows an individual switching module - i.e., a first switching module 110 or a second switching module 112 (or a third switching module 134 - see below). Each switching module includes an H-bridge circuit configured as a voltage source converter with a pair of AC bridge terminals 126a, 126b that are electrically connected to a respective stator coil - i.e., a first stator coil 106 or a second stator coil 108 (or a third stator coil 132 - see below). Each H-bridge circuit also includes a pair of DC bridge terminals 128a, 128b that are electrically connected to the module terminals of the switching module - i.e., to the module terminals 118a, 118b or 120a, 120b (or 138a, 138b - see below). The DC bridge terminals 128a, 128b may also be electrically connected to the machine terminals of the electrical machine - i.e., to one of the pair of first machine terminals 122a, 122b or one of the pair of second machine terminals 124a, 124b, for example.

Each H-bridge circuit includes four unidirectional bridge switches S1, S2, S3 and S4. Each bridge switch S1, S2, ..., S4 includes an IGBT and is connected to an anti-parallel diode. The bridge switches S1, S2, ..., S4 are controlled to turn on and off by gate drive signals which are generated by a gate drive controller (not shown).

The electrical machines 100 shown in Figures 4 to 10 are configured so that the first switching modules 110₁, 110₂, ..., 110ₙ may be controlled to supply or may receive a variable or fixed DC voltage through the first machine conductors 114a, 114b and the first machine terminals 122a, 122b. More particularly, one of the first machine conductors 114a is a positive DC conductor and one of the first machine terminals 122a is a positive DC terminal. The other one of the first machine conductors 114b is a negative DC conductor and the other one of the first machine terminals 122b is a negative DC terminal. The second switching modules 112₁, 112₂, ..., 112ₚ may be controlled to supply or may receive a variable or fixed DC voltage through the second machine conductors 116a, 116b and the second machine terminals 124a, 124b. More particularly, one of the second machine conductors 116a is a positive DC conductor and one of the second machine terminals 124a is a positive DC terminal. The other one of the second machine conductors 116b is a negative DC conductor and the other one of the second machine terminals 124b is a negative DC terminal.

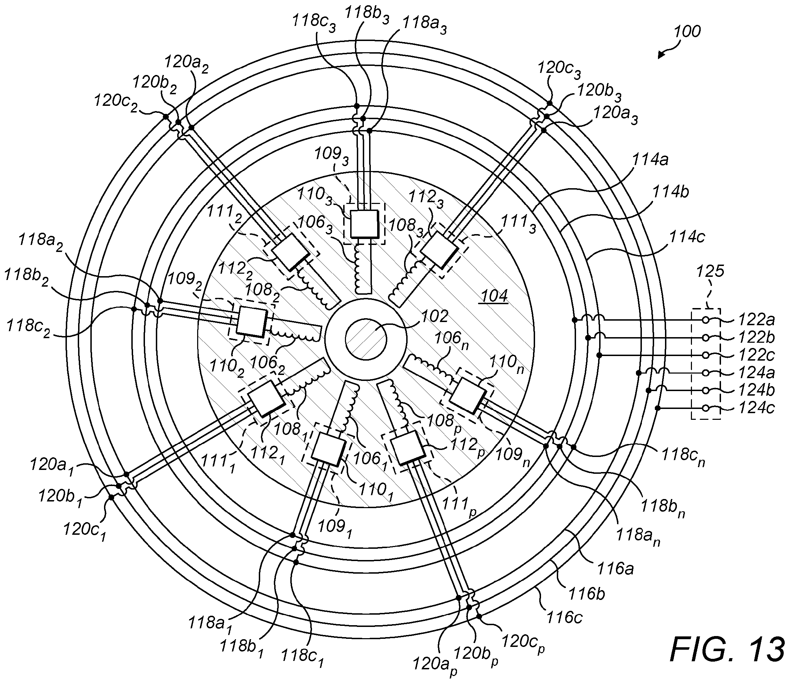

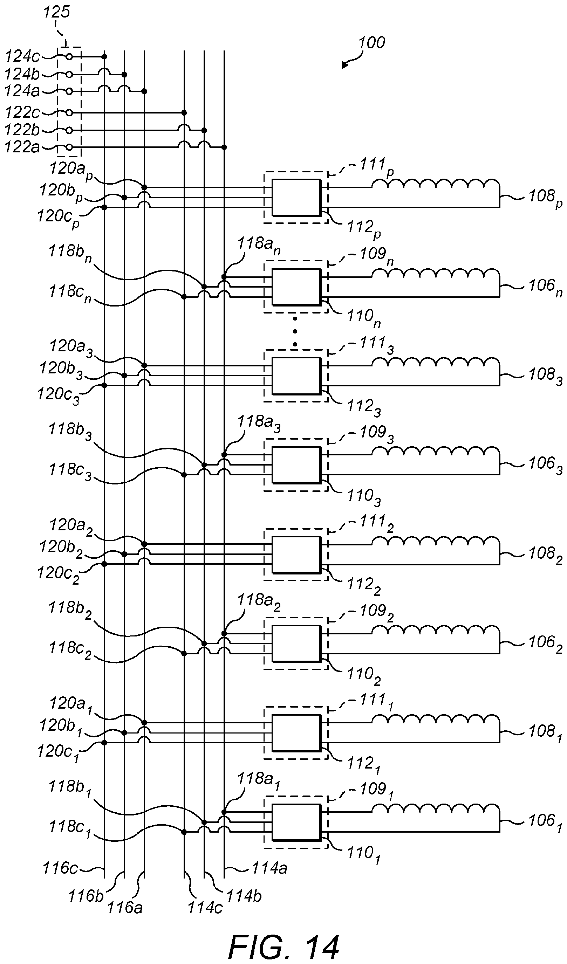

Figures 13 and 14 are schematic representations of an alternative electrical machine 100 according to the present invention. The electrical machine 100 includes a rotor 102 and a stator 104 that is spaced apart from the rotor by an airgap. The stator 104 includes a plurality of first stator coils 106₁, 106₂, ..., 106ₙ where n is any suitable integer (e.g., sixty (60)) and a plurality of second stator coils 108₁, 108₂, ..., 108ₚ where p is any suitable integer (e.g., sixty (60)). In this example, n and p are the same but they can be different. The stator 104 includes a total of one hundred and twenty (120) stator coils. The stator coils may be single-layer coils so that only one coil side is received in a corresponding stator slot or two-layer coils so that two coil sides are received in the same stator slot one on top of the other, for example. In Figures 13 and 14, the first and second stator coils 106₁, 106₂, ..., 106ₙ and 108₁, 108₂, ..., 108ₚ are shown to be arranged alternately around the circumference of the stator 104, but they may be arranged in different ways, e.g., in groups.

A power electronic switching assembly of the electrical machine 100 includes a plurality of first switching module assemblies 109₁, 109₂, ..., 109ₙ and a plurality of second switching module assemblies 111₁, 111₂, ..., 111ₚ. Each of the first switching module assemblies 109₁, 109₂, ..., 109ₙ includes a first switching module 110₁, 110₂, ..., 110ₙ and each of the second switching module assembles 111₁, 111₂, ..., 111ₚ includes a second switching module 112₁, 112₂, ..., 112ₚ.

Each of the first stator coils 106₁, 106₂, ..., 106ₙ is electrically connected to a pair of AC terminals of a respective first switching module 110₁, 110₂, ..., 110ₙ and each of the second stator coils 108₁, 108₂, ..., 108ₚ is electrically connected to a pair of AC terminals of a respective second switching module 112₁, 112₂, ..., 112ₚ. The first and second switching modules 110₁, 110₂, ..., 110ₙ and 112₁, 112₂, ..., 112ₚ will normally be arranged around the circumference of the stator 104. The power electronic switching assembly includes a total of one hundred and twenty (120) switching modules - i.e., sixty (60) first switching modules 110₁, 110₂, ..., 110ₙ and sixty (60) second switching modules 112₁, 112₂, ..., 112ₚ.

Each stator coil defines a respective stator phase. The electrical machine 100 shown in Figures 13 and 14 has n first stator coils 106₁, 106₂, ..., 106ₙ defining n first stator phases and p second stator coils 108₁, 108₂, ..., 108ₚ defining p second stator phases. When the electrical machine 100 is operating, the first stator coils 106₁, 106₂, ..., 106ₙ define a plurality of phase-shifted first coil voltages that are commutated by the first switching modules 110₁, 110₂, ..., 110ₙ, and the second stator coils 108₁, 108₂, ..., 108ₚ define a plurality of phase-shifted second coil voltages that are commutated by the second switching modules 112₁, 112₂, ..., 112ₚ.

The electrical machine 100 includes a triplet of first machine conductors 114a, 114b and 114c and a triplet of second machine conductors 116a, 116b and 116c. The machine conductors 114a, 114b and 114c and 116a, 116b and 116c may be formed as separate annular rings (or "endrings") of electrically conductive material, e.g., copper. The endrings may be spaced apart in the axial direction so that they are electrically isolated. For the avoidance of any doubt, although in Figure 13 the first and second machine conductors 114a, 114b and 114c and 116a, 116b and 116c are conveniently represented as pairs of concentric rings around the rotor 102 and the stator 104, in practice they may be formed as axially-spaced endrings at an axial end of the stator 104. In particular, the triplet of endrings defining the first machine conductors 114a, 114b and 114c may be positioned at a first axial end of the stator 104 and the triplet of endrings defining the second machine conductors 116a, 116b and 116c may be positioned at the first axial end of the stator 104 or at a second axial end of the stator.

The first and second machine conductors 114a, 114b and 114c and 116a, 116b and 116c are electrically isolated from each other.

Each first switching module 110₁, 110₂, ..., 110ₙ has a triplet of module terminals 118a, 118b and 118c - i.e., the module terminals 118a₁, 118b₁, 118c₁, 118a₂, 118b₂,118c₂ ..., 118aₙ, 118bₙ, 118cₙ shown in Figures 13 and 14. The module terminals 118a, 118b and 118c are electrically connected to the first machine conductors 114a, 114b and 114c as shown. In particular, the module terminal 118a of each first switching module 110₁, 110₂, ..., 110ₙ is electrically connected to the machine conductor 114a, the module terminal 118b of each first switching module 110₁, 110₂, ..., 110ₙ is electrically connected to the machine conductor 114b, and the module terminal 118c of each first switching module 110₁, 110₂, ..., 110ₙ is electrically connected to the machine conductor 114c.

Each second switching module 112₁, 112₂, ..., 112ₚ has a triplet of module terminals 120a, 120b and 120c - i.e., the module terminals 120a₁, 120b₁, 120c₁, 120a₂, 120b₂,120c₂ ..., 120aₚ, 120bₚ, 120cₚ shown in Figures 13 and 14. The module terminals 120a, 120b and 120c are electrically connected to the second machine conductors 116a, 116b and 116c as shown. In particular, the module terminal 120a of each second switching module 112₁, 112₂, ..., 112ₚ is electrically connected to the machine conductor 116a, the module terminal 120b of each second switching module 112₁, 112₂, ..., 112ₚ is electrically connected to the machine conductor 116b, and the module terminal 120c of each second switching module 112₁, 112₂, ..., 112ₚ is electrically connected to the machine conductor 116c.

In this way, each of the first switching modules 110₁, 110₂, ..., 110ₙ is electrically connected to the first machine conductors 114a, 114b and 114c and each of the second switching modules 112₁, 112₂, ..., 112ₚ is electrically connected to the second machine conductors 116a, 116b and 116c. The first stator coils 106₁, 106₂, ..., 106ₙ and the first switching modules 110₁, 110₂, ..., 110ₙ are arranged circumferentially around the stator 104 and electrical connections can be made to the first machine conductors 114a, 114b and 114c at the first axial end of the stator. The second stator coils 108₁, 108₂, ..., 108ₚ and the second switching modules 112₁, 112₂, ..., 112ₚ are similarly arranged circumferentially around the stator 104 and electrical connections can be made to the second machine conductors 116a, 116b and 116c at the first or second axial end of the stator.

The electrical machine 100 has a triplet of first machine terminals 122a, 122b and 122c and a triplet of second machine terminals 124a, 124b and 124c as shown in Figures 13 and 14. The machine terminal 122a is electrically connected to the machine conductor 114a, the machine terminal 122b is electrically connected to the machine conductor 114b, and the machine terminal 122c is electrically connected to the machine conductor 114c. The machine terminal 124a is electrically connected to the machine conductor 116a, the machine terminal 124b is electrically connected to the machine conductor 116b, and the machine terminal 124c is electrically connected to the machine conductor 116c. The first and second machine terminals 122a, 122b and 122c and 124a, 124b and 124c allow external electrical connections to be made to the electrical machine 100 using suitable cabling or buses, for example. This is described in more detail below. The first and second machine terminals 122a, 122b and 122c and 124a, 124b and 124c may be located in a terminal box 125 of the electrical machine 100.

The electrical machine 100 shown in Figures 13 and 14 is configured so that the first switching modules 110₁, 110₂, ..., 110ₙ may be controlled to supply or may receive a variable or fixed three-phase AC voltage through the first machine conductors 114a, 114b and 114c and the first machine terminals 122a, 122b and 122c. More particularly, each of the first machine conductors 114a, 114b and 114c is an AC conductor and each of the first machine terminals 122a, 122b and 122c is an AC terminal that defines a respective AC phase. The second switching modules 112₁, 112₂, ..., 112ₚ may be controlled to supply or may receive variable or fixed three-phase AC voltage through the second machine conductors 116a, 116b and 116c and the second machine terminals 124a, 124b and 124c. More particularly, each of the second machine conductors 116a, 116b and 116c is an AC conductor and each of the second machine terminals 124a, 124b and 124c is an AC terminal that defines a respective phase. An additional machine terminal and machine conductor (not shown) may be included to define a neutral.

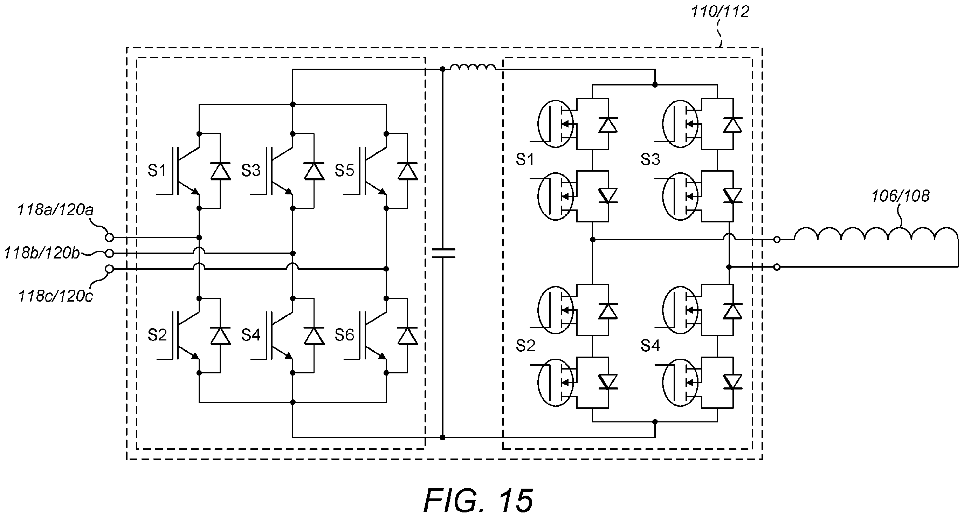

Figure 15 shows an individual switching module - i.e., a first switching module 110 or a second switching module 112. Each switching module includes an H-bridge circuit configured as a current source converter with a pair of AC bridge terminals that are electrically connected to a respective stator coil - i.e., a first stator coil 106 or a second stator coil 108. The H-bridge circuit also includes a pair of DC bridge terminals.

The H-bridge circuit includes four bidirectional bridge switches S1, S2, S3 and S4. Each bridge switch S1, S2, ..., S4 includes a pair of MOSFETs connected in anti-series (or back-to-back), but it will be understood that other possible switch arrangements are described above or are known to the skilled person. An anti-parallel diode is shown for each MOSFET within each bridge switch S1, S2, ..., S4 and it will be understood that in practice this is provided by the body diode of each MOSFET. For each bridge switch S1, S2, ..., S4 the reverse blocking function is provided by the lower one of the pair of anti-series connected MOSFETs and the forward blocking function is provided by the upper one of the pair of anti-series connected MOSFETs.

The bridge switches S1, S2, ..., S4 of the H-bridge circuit are controlled to turn on and off by gate drive signals which are generated by a gate drive controller (not shown). When back-to-back MOSFETs or other back-to-back semiconductor switches are used, the gate drive signal for each switch is simultaneously routed to both of the semiconductor switches. For example, a first gate drive signal is simultaneously routed to both MOSFETs of bridge switch S1. This means that both MOSFETs of each bridge switch are turned on and off simultaneously by the respective gate drive signal.

Each switching module includes a Graetz bridge circuit configured as voltage source converter with a triplet of AC bridge terminals that are electrically connected to the module terminals of the switching module - i.e., to the module terminals 118a, 118b and 118c or 120a, 120b and 120c. The Graetz bridge circuit also includes a pair of DC bridge terminals that are electrically connected to the DC bridge terminals of the H-bridge circuit by a DC link. The DC link includes a capacitor and an inductor as shown.

The Graetz bridge circuit includes six unidirectional bridge switches S1, S2, ..., S6. Each bridge switch S1, S2, ..., S6 includes an IGBT and is connected to an anti-parallel diode. The bridge switches S1, S2, ..., S6 are controlled to turn on and off by gate drive signals which are generated by a gate drive controller (not shown).

Each switching module may also include an AC filter (not shown).

An electrical machine configured as shown in Figures 13 and 14 may supply or receive a DC voltage as well as being capable of supplying or receiving an AC voltage. For example, two of the first and/or second machine conductors may be configured as positive and negative DC conductors and two of the first and/or second machine terminals may be configured as positive and negative DC terminals. If the first and/or second switching modules 110₁, 110₂, ... 110ₙ and 112₁, 112₂, ... 112ₚ are configured as shown in Figure 15, the Graetz bridge circuit of each switching module may be bypassed or placed in a suitable operating state so that the first and/or second switching modules 110₁, 110₂, ... 110ₙ and 112₁, 112₂, ... 112ₚ may be operated to supply or may receive a DC voltage. Put another way, depending on how the first and/or second switching modules 110₁, 110₂, ... 110ₙ and 112₁, 112₂, ... 112ₚ are configured and controlled, an AC voltage may be supplied or received at all three of the first and/or second machine terminals or a DC voltage may be supplied or received at two of the first and/or second machine terminals as required. A single-phase AC voltage may also be supplied or received at only two of the first and/or second machine terminals as required. Depending on how the first and/or second switching modules 110₁, 110₂, ... 110ₙ and 112₁, 112₂, ... 112ₚ are configured, an electrical machine configured as shown in Figures 4 to 10 - i.e., with a pair of first and second machine conductors 114a, 114b and 116a, 116b that are normally configured as positive and negative DC conductors and a pair of first and second machine terminals 122a, 122b and 124a, 124b that are normally configured as positive and negative DC conductors - may also be used to supply or receive a single-phase AC voltage, for example. A particular set of machine conductors and machine terminals may be designed to be used flexibly, for example with the option to carry a DC voltage or an AC voltage as required. In this case, the respective switching modules will typically be configured so that they are capable of supplying or receiving a DC voltage and an AC voltage. A particular set of machine conductors and machine terminals may be designed to be used inflexibly, for example so that they are designed only to carry a variable or fixed DC voltage and the respective switching modules may be configured accordingly, e.g., as shown in Figures 11 and 12.

If the electrical machine 100 shown in any of Figures 4 to 10 is operated as a generator, the first switching modules 110₁, 110₂, ..., 110ₙ may supply power to one or more first loads (not shown) through the first machine conductors 114a, 114b and the first machine terminals 122a, 122b. The second switching modules 112₁, 112₂, ..., 112ₚ may supply power to one or more second loads (not shown) through the second machine conductors 116a, 116b and the second machine terminals 124a, 124b. If the electrical machine shown in Figures 13 and 14 is operated as a generator, the first switching modules 110₁, 110₂, ..., 110ₙ may supply power to one or more first loads (not shown) through the first machine conductors 114a, 114b and 114c and the first machine terminals 122a, 122b and 122c. The second switching modules 112₁, 112₂, ..., 112ₚ may supply power to one or more second loads (not shown) through the second machine conductors 116a, 116b and 116c and the second machine terminals 124a, 124b and 124c.

If the electrical machine 100 shown in any of Figures 4 to 10 is operated as a motor, the first switching modules 110₁, 110₂, ..., 110ₙ may receive power from one or more first power sources (not shown) through the first machine terminals 122a, 122b and the first machine conductors 114a, 114b. The second switching modules 112₁, 112₂, ..., 112ₚ may receive power from one or more second power sources (not shown) through the second machine terminals 124a, 124b and the second machine conductors 116a, 116b. If the electrical machine 100 shown in Figures 13 and 14 is operated as a motor, the first switching modules 110₁, 110₂, ..., 110ₙ may receive power from one or more first power sources (not shown) through the first machine terminals 122a, 122b and 122c and the first machine conductors 114a, 114b and 114c. The second switching modules 112₁, 112₂, ..., 112ₚ may receive power from one or more second power sources (not shown) through the second machine terminals 124a, 124b and 124c and the second machine conductors 116a, 116b and 116c. The first and second switching modules 110₁, 110₂, ..., 110ₙ and 112₁, 112₂, ..., 112ₚ may be controlled in a coordinated manner to drive the rotation of the rotor 102.

The one or more first loads or power sources (not shown) may be electrically connected to the pair of first machine terminals 122a, 122b (or the triplet of first machine terminals 122a, 122b and 122c), e.g., using suitable cabling or buses.

The one or more second loads or power sources (not shown) may be electrically connected to the pair of second machine terminals 124a, 124b (or the triplet of first machine terminals 124a, 124b and 124c), e.g., using suitable cabling or buses.

The first switching modules 110₁, 110₂, ..., 110ₙ may be controlled independently of the second switching modules 112₁, 112₂, ..., 112ₚ. For example, the first switching modules 110₁, 110₂, ..., 110ₙ may be controlled to supply a variable DC voltage and the second switching modules 112₁, 112₂, ..., 112ₚ may be controlled to supply a different variable DC voltage, a fixed DC voltage, or a fixed or variable AC voltage. The first switching modules 110₁, 110₂, ..., 110ₙ may receive a variable DC voltage and the second switching modules 112₁, 112₂, ..., 112ₚ may receive a different variable DC voltage, a fixed DC voltage, or a fixed or variable AC voltage, for example. This is because the first machine conductors 114a, 114b are electrically isolated from the second machine conductors 116a, 116b and the first machine terminals 122a, 122b are electrically isolated from the second machine terminals 124a, 124b.

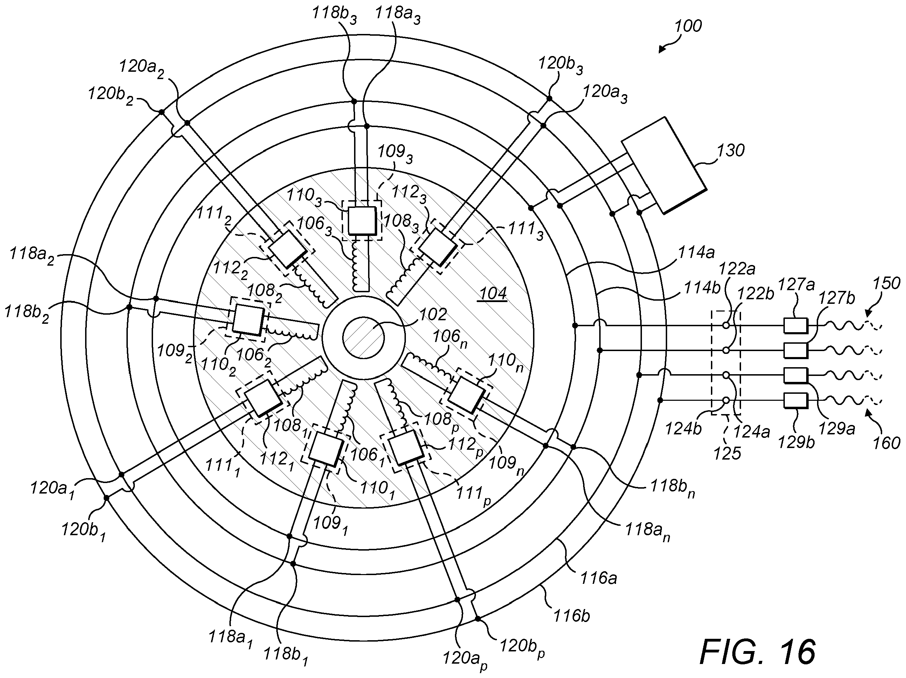

Figure 16 shows the electrical machine 100 of Figures 4 and 5 with a first switch 130 that is electrically connected between the first machine conductors 114a, 114b and the second machine conductors 116a, 116b. The first switch 130 may also be electrically connected between the first machine terminals 122a, 122b and the second machine terminals 124a, 124b and may be located in the terminal box 125, for example.

The first switch 130 may be an electrical switch and may include one or more controllable semiconductor switches, e.g., thyristors. If the first switch 130 is controlled to be open, e.g., by a suitable controller (not shown), the first and second machine conductors 114a, 114b and 116a, 116b are electrically isolated from each other. This means that the first switching modules 110₁, 110₂, ..., 110ₙ may be controlled independently of the second switching modules 112₁, 112₂, ..., 112ₚ as described above. However, if the first switch 130 is controlled to be closed, e.g., by the controller, the first and second machine conductors 114a, 114b and 116a, 116b are electrically connected to form "common" machine conductors and "common" machine terminals. In particular, the machine conductor 114a is electrically connected to the machine conductor 116a and the machine conductor 114b is electrically connected to the machine conductor 116b by means of the first switch 130. The electrically-connected machine conductors 114a and 116a may form a "common" positive DC conductor and the electrically-connected machine conductors 114b and 116b may form a "common" negative DC conductor. Alternatively, the electrically-connected machine conductors 114a and 116a may form a "common" first AC conductor for a first AC phase and the electrically-connected machine conductors 114b and 116b may form a "common" second AC conductor for a neutral or *vice versa.* (In the case of the electrical machine shown in Figures 13 and 14, a similar switch may be used to form a "common" second AC conductor for a second AC phase and a "common" third AC conductor for a third AC phase.) The electrically-connected machine terminals 122a and 124a may form a "common" positive DC terminal and the electrically-connected machine terminals 122b and 124b may form a "common" negative DC terminal. Alternatively, the electrically-connected machine terminals 122a and 124a may form a "common" first AC conductor for a first AC phase and the electrically-connected machine terminals 122b and 124b may form a "common" second AC conductor for a neutral or *vice versa.* (In the case of the electrical machine shown in Figures 13 and 14, a similar switch may be used to form a "common" second AC terminal for a second AC phase and a "common" third AC terminal for a third AC phase.)

The first and second switching modules 110₁, 110₂, ..., 110ₙ and 112₁, 112₂, ..., 112ₚ are electrically connected to the "common" pair of machine conductors and their control may be coordinated.

If the electrical machine 100 is operated as a generator, the first switching modules 110₁, 110₂, ..., 110ₙ and/or the second switching modules 112₁, 112₂, ..., 112ₚ may supply power to one or more first loads (not shown) through the first machine conductors 114a, 114b and the first machine terminals 122a, 122b and/or to one or more second loads (not shown) through the second machine conductors 116a, 116b and the second machine terminals 124a, 124b. It will be readily understood that one or both of the first and second switching modules 110₁, 110₂, ..., 110ₙ and 112₁, 112₂, ..., 112ₚ may be operated depending on the requirements. Power may also be supplied to one or both of the first and second loads (not shown) depending on the requirements.

If the electrical machine 100 is operated as a motor, the first switching modules 110₁, 110₂, ..., 110ₙ and/or the second switching modules 112₁, 112₂, ..., 112ₚ may receive power from one or more first power sources (not shown) through the first machine conductors 114a, 114b and the first machine terminals 122a, 122b and/or from one or more second power sources (not shown) through the second machine conductors 116a, 116b and the second machine terminals 124a, 124b. It will be readily understood that one or both of the first and second switching modules 110₁, 110₂, ..., 110ₙ and 112₁, 112₂, ..., 112ₚ may be operated depending on the requirements. Power may also be supplied from one or both of the first and second power sources (not shown) depending on the requirements. The first and second switching modules 110₁, 110₂, ..., 110ₙ and 112₁, 112₂, ..., 112ₚ may be controlled in a coordinated manner to drive the rotation of the rotor 102.

Figure 16 also shows how cabling or buses 150 may be electrically connected to the first machine terminals 122a, 122b by isolation switches 127a, 127b and how cabling or buses 160 may be electrically connected to the second machine terminals 124a, 124b by isolation switches 129a, 129b. The isolation switches 127a, 127b and 129a, 129b may be electrical switches and may include one or more controllable semiconductor switches, e.g., thyristors. The one or more controllable switches may be controlled to be switched on and off by a suitable controller. The isolation switches 127a, 127b and 129a, 129b may also be mechanical isolators.

In all other respects, the electrical machine 100 shown in Figure 16 is the same as the electrical machine shown in Figures 4 and 5.

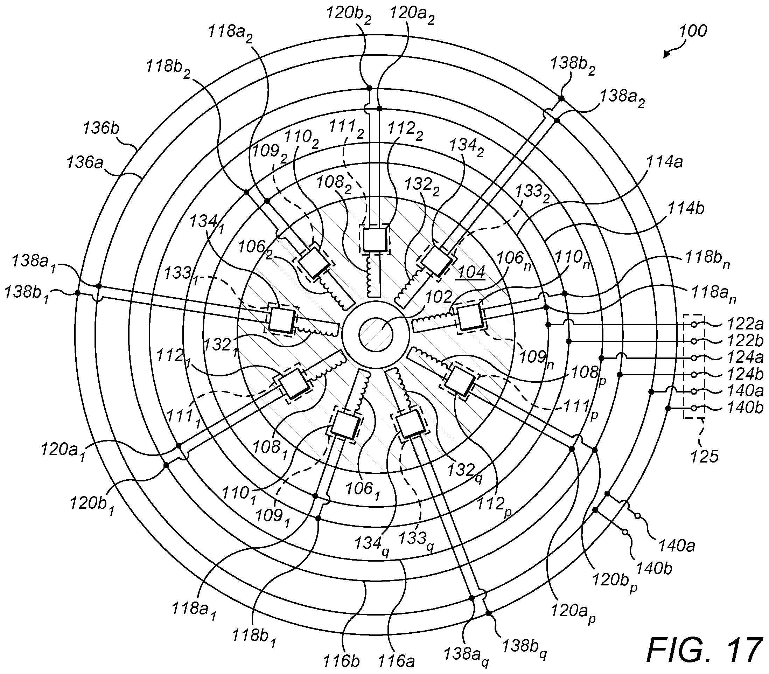

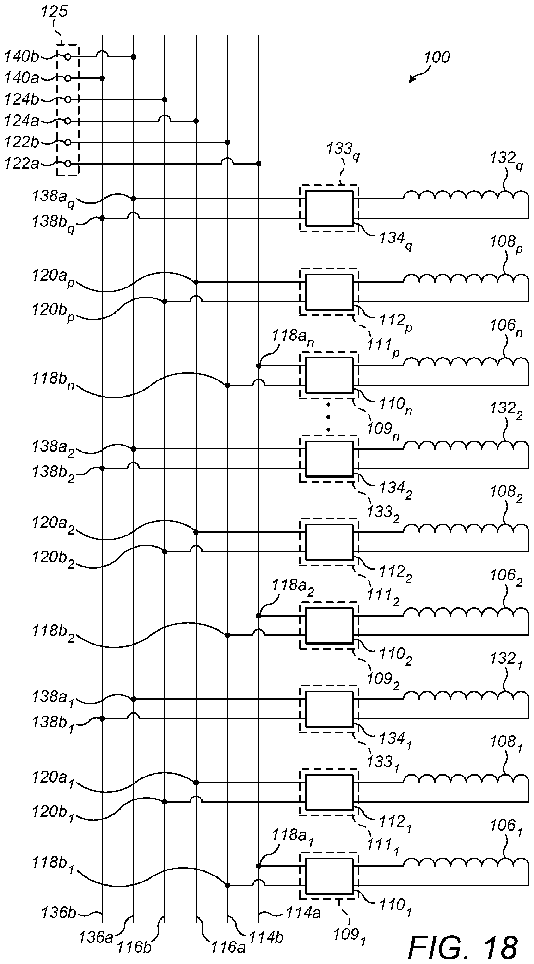

Figures 17 and 18 are schematic representations of an alternative electrical machine 100 with a plurality of third stator coils 132₁, 132₂, ..., 132_{q} where q is any suitable integer (e.g., forty (40)). A power electronic switching assembly of the electrical machine includes a plurality of third switching module assemblies 133₁, 133₂, ..., 133_{q}. Each of the third switching module assemblies 133₁, 133₂, ..., 133_{q} includes a third switching module 134₁, 134₂, ..., 134_{q}.

Each of the third stator coils 132₁, 132₂, ..., 132_{q} is electrically connected to a pair of AC terminals of a respective third switching module 134₁, 134₂, ..., 134_{q}. As described above, each of the first stator coils 106₁, 106₂, ..., 106ₙ is electrically connected to a pair of AC terminals of a respective first switching module 110₁, 110₂, ..., 110ₙ and each of the second stator coils 108₁, 108₂, ..., 108ₚ is electrically connected to a pair of AC terminals of a respective second switching module 112₁, 112₂, ..., 112ₚ. In this example, n and p are also forty (40) so that the stator 104 includes a total of one hundred and twenty (120) stator coils. The first, second and third switching modules 110₁, 110₂, ..., 110ₙ, 112₁, 112₂, ..., 112ₚ and 134₁, 134₂, ..., 134_{q} will normally be arranged around the circumference of the stator 104. The power electronic switching assembly includes a total of one hundred and twenty (120) switching modules - i.e., forty (40) first switching modules 110₁, 110₂, ..., 110ₙ, forty (40) second switching modules 112₁, 112₂, ..., 112ₚ, and forty (40) third switching modules 134₁, 134₂, ..., 134_{q}. It may therefore be seen that including a plurality of third switching modules does not necessarily result in an overall increase in the total number of switching modules in the power electronic switching assembly - instead, the total number of switching modules that may be physically accommodated around the stator may be divided into three groups rather than two. However, the total number of switching modules may be increased if there is sufficient space to accommodate them.

Each stator coil defines a respective stator phase. The electrical machine 100 shown in Figures 17 and 18 has n first stator coils 106₁, 106₂, ..., 106ₙ defining n first stator phases, p second stator coils 108₁, 108₂, ..., 108ₚ defining p second stator phases, and q third stator coils 132₁, 132₂, ..., 132_{q} defining q third stator phases. When the electrical machine 100 is operating, the first stator coils 106₁, 106₂, ..., 106ₙ define a plurality of phase-shifted first coil voltages that are commutated by the first switching modules 110₁, 110₂, ..., 110ₙ, the second stator coils 108₁, 108₂, ..., 108ₚ define a plurality of phase shifted second coil voltage that are commutated by the second switching modules 112₁, 112₂, ..., 112ₚ, and the third stator coils 132₁, 132₂, ..., 132_{q} define a plurality of phase-shifted third coil voltages that are commutated by the third switching modules 134₁, 134₂, ..., 134_{q}.

The electrical machine 100 includes a pair of first machine conductors 114a, 114b and a pair of second machine conductors 116a, 116b. The electrical machine 100 also includes a pair of third machine conductors 136a, 136b that may be formed as separate annular rings (or "endrings") of electrically conductive material, e.g., copper. The pair of endrings defining the third machine conductors 136a, 136b may be positioned at the first or second axial end of the stator 104.

Each third switching module 134₁, 134₂, ..., 134_{q} has a pair of module terminals 138a, 138b - i.e., the module terminals 138a₁, 138b₁, 138a₂, 138b₂, ..., 138a_{q}, 138b_{q} shown in Figure 17 and 18. The module terminals 138a, 138b are electrically connected to the third machine conductors 136a, 136b as shown. In particular, the module terminal 138a of each third switching module 134₁, 134₂, ..., 134_{q} is electrically connected to the machine conductor 136a and the module terminal 138b of each third switching module 134₁, 134₂, ..., 134_{q} is electrically connected to the machine conductor 136b. In this way, each of the third switching modules 134₁, 134₂, ..., 134_{q} is electrically connected to the third machine conductors 136a, 136b. The third stator coils 132₁, 132₂, ..., 132_{q} and the third switching modules 134₁, 134₂, ..., 134_{q} are arranged circumferentially around the stator 104 and electrical connections can be made to the third machine conductors 136a, 136b at the first or second axial end of the stator. Alternatively, as shown in Figures 8 to 10 and described above, the first, second and third switching modules 110₁, 110₂, ..., 110ₙ, 112₁, 112₂, ..., 112ₚ, and 134₁, 134₂, ..., 134_{q} may be electrically connected using suitable cabling or buses.

The electrical machine 100 has a pair of third machine terminals 140a, 140b as shown in Figures 17 and 18. The machine terminal 140a is electrically connected to the machine conductor 136a and the machine terminal 140b is electrically connected to the machine conductor 136b. The third machine terminals 140a, 140b allow additional external electrical connections to be made to the electrical machine 100 using suitable cabling or buses, for example. The third machine terminals 140a, 140b may be located with the first and second machine terminals 122a, 122b and 124a, 124b in the terminal box 125.

In all other respects, the electrical machine 100 shown in Figures 17 and 18 is the same as the electrical machine shown in Figures 4 and 5.

If the electrical machine 100 is operated as a generator, the third switching modules 134₁, 134₂, ..., 134_{q} may supply power to one or more third loads (not shown) through the third machine conductors 136a, 136b and the third machine terminals 140a, 140b. If the electrical machine 100 is operated as a motor, the third switching modules 134₁, 134₂, ..., 134_{q} may receive power from one or more third power sources (not shown) through the third machine terminals 136a, 136b and the third machine conductors 140a, 140b. The one or more third loads or power sources (not shown) may be electrically connected to the pair of third machine terminals 140a, 140b.

The third switching modules 134₁, 134₂, ..., 134_{q} may be controlled to supply or may receive a variable or fixed DC voltage through the third machine conductors 136a, 136b and the third machine terminals 140a, 140b. In this case, the third machine conductors may include a positive DC conductor (e.g., machine conductor 136a) and a negative DC conductor (e.g., machine conductor 136b). The third machine terminals may also include a positive DC terminal (e.g., machine terminal 140a) and a negative DC terminal (e.g., machine terminal 140b). The third switching modules 134₁, 134₂, ..., 134_{q} may be controlled in the same way as the first and second switching modules 110₁, 110₂, ..., 110ₙ and 112₁, 112₂, ..., 112ₚ described above.

The third switching modules 134₁, 134₂, ..., 134_{q} may be controlled to supply or may receive a variable or fixed AC voltage through the third machine conductors 136a, 136b and the third machine terminals 140a, 140b. In this case, the third machine conductors may include a first AC conductor (e.g., machine conductor 136a) for a first AC phase and a second AC conductor (e.g., machine conductor 136b) for a neutral or *vice versa.* The third machine terminals may also include a first AC terminal (e.g., machine terminal 140a) for a first AC phase and a second AC terminal (e.g., machine terminal 140b) for a neutral or *vice versa.* A three-phase AC voltage may be supplied or received if the electrical machine includes a triplet of third machine conductors and a triplet of third machine terminals - see the electrical machine shown in Figures 13 and 14, for example.

The third switching modules 134₁, 134₂, ..., 134_{q} may be controlled in the same way as the first and second switching modules 110₁, 110₂, ..., 110ₙ and 112₁, 112₂, ..., 112ₚ described above.

The third switching modules 134₁, 134₂, ..., 134_{q} may be controlled independently of the first switching modules 110₁, 110₂, ..., 110ₙ and the second switching modules 112₁, 112₂, ..., 112ₚ. For example, the first and second switching modules 110₁, 110₂, ..., 110ₙ and 112₁, 112₂, ..., 112ₚ may be controlled to supply a variable DC voltage and the third switching modules 134₁, 134₂, ..., 134_{q} may be controlled to supply a fixed DC voltage, or a fixed or variable AC voltage. This is because the third machine conductors 136a, 136b are electrically isolated from the first and second machine conductors 114a, 114b and 116a, 116b, and because the third machine terminals 140a, 140b are electrically isolated from the first and second machine terminals 122a, 122b and 124a, 124b.

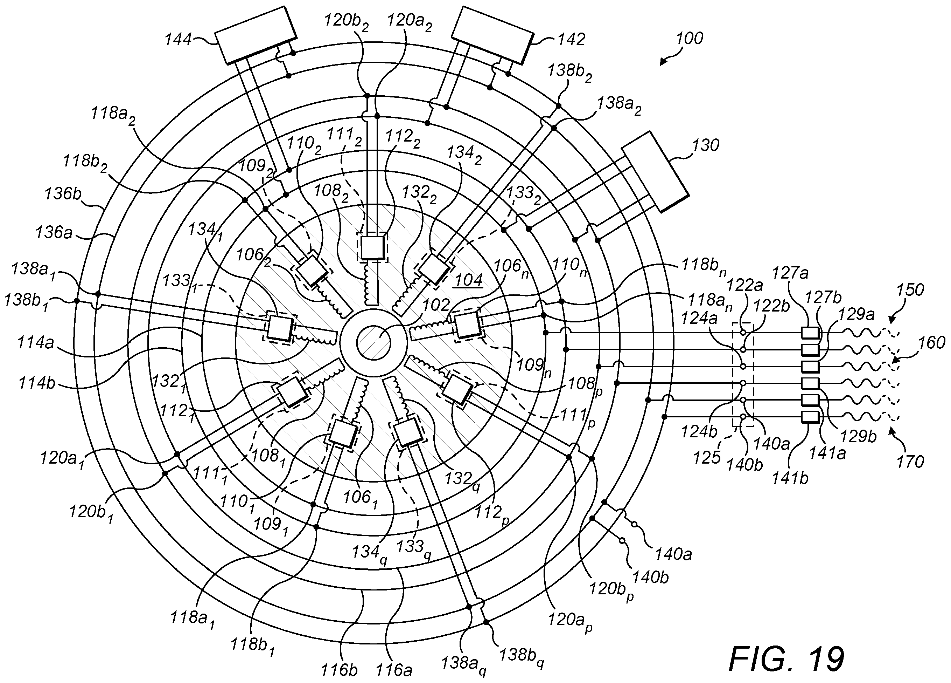

Figure 19 shows an electrical machine 100 with a first switch 130 that is electrically connected between the first machine conductors 114a, 114b and the second machine conductors 116a, 116b. A second switch 142 is electrically connected between the second machine conductors 116a, 116b and the third machine conductors 136a, 136b. A third switch 144 is electrically connected between the first machine conductors 114a, 114b and the third machine conductors 136a, 136b. The first, second and third switches 130, 142 and 144 may also be electrically connected between the respective machine terminals and may be located in the terminal box 125.

The first, second and third switches 130, 142 and 144 may be electrical switches and may include one or more controllable semiconductor switches, e.g., thyristors.

If the first, second and third switches 130, 140 and 142 are controlled to be open, e.g., by a suitable controller (not shown), the first, second and third machine conductors 114a, 114b, 116a, 116b and 136a, 136b are electrically isolated from each other. This means that the first, second and third switching modules 110₁, 110₂, ..., 110ₙ, 112₁, 112₂, ..., 112ₚ and 134₁, 134₂, ..., 134_{q} may be controlled independently.

If the first switch 130 is controlled to be closed, e.g., by the controller, the first and second machine conductors 114a, 114b and 116a, 116b are electrically connected to form a "common" pair of machine conductors. In particular, the machine conductor 114a is electrically connected to the machine conductor 116a and the machine conductor 114b is electrically connected to the machine conductor 116b. For example, the machine conductors 114a and 116a may form a "common" positive DC conductor and the machine conductors 114b and 116b may form a "common" negative DC conductor. Alternatively, the machine conductors 114a and 116a may form a "common" first AC conductor for a first AC phase and the machine conductors 114b and 116b may form a "common" second AC conductor for a neutral or *vice versa.* The machine terminals 122a and 124a may form a "common" positive DC terminal or a "common" first AC terminal for a first AC phase and the machine terminals 122b and 124b may form a "common" negative DC terminal or a "common" second AC terminal for a neutral, or *vice versa.* The first and second switching modules 110₁, 110₂, ..., 110ₙ and 112₁, 112₂, ..., 112ₚ are electrically connected to the "common" pair of machine conductors and their control may be coordinated.

If the electrical machine 100 is operated as a generator, the first switching modules 110₁, 110₂, ..., 110ₙ and/or the second switching modules 112₁, 112₂, ..., 112ₚ may supply power to one or more first loads (not shown) through the first machine conductors 114a, 114b and the first machine terminals 122a, 122b and/or to one or more second loads (not shown) through the second machine conductors 116a, 116b and the second machine terminals 124a, 124b. It will be readily understood that one or both of the first and second switching modules 110₁, 110₂, ..., 110ₙ and 112₁, 112₂, ..., 112ₚ may be operated depending on the requirements. Power may also be supplied to one or both of the first and second loads (not shown) depending on the requirements. Power may also be supplied independently to the one or more third loads (not shown) by the third switching modules 134₁, 134₂, ..., 134_{q} through the third machine conductors 136a, 136b and the third machine terminals 140a, 140b.

If the electrical machine 100 is operated as a motor, the first switching modules 110₁, 110₂, ..., 110ₙ and/or the second switching modules 112₁, 112₂, ..., 112ₚ may receive power from one or more first power sources (not shown) through the first machine conductors 114a, 114b and the first machine terminals 122a, 122b and/or from one or more second power sources (not shown) through the second machine conductors 116a, 116b and the second machine terminals 124a, 124b. It will be readily understood that one or both of the first and second switching modules 110₁, 110₂, ..., 110ₙ and 112₁, 112₂, ..., 112ₚ may be operated depending on the requirements. Power may also be supplied from one or both of the first and second power sources (not shown) depending on the requirements. Power may also be supplied independently from the one or more third power sources (not shown) to the third switching modules 134₁, 134₂, ..., 134_{q} through the third machine conductors 136a, 136b and the third machine terminals 140a, 140b. The first and second switching modules 110₁, 110₂, ..., 110ₙ and 112₁, 112₂, ..., 112ₚ may be controlled in a coordinated manner to drive the rotation of the rotor 102.

If the second switch 142 is controlled to be closed, e.g., by the controller, the second and third machine conductors 116a, 116b and 136a, 136b are electrically connected to form a "common" pair of machine conductors. In particular, the machine conductor 116a is electrically connected to the machine conductor 136a and the machine conductor 116b is electrically connected to the machine conductor 136b. For example, the machine conductors 116a and 136a may form a "common" positive DC conductor and the machine conductors 116b and 136b may form a "common" negative DC conductor. Alternatively, the machine conductors 116a and 136a may form a "common" first AC conductor for a first AC phase and the machine conductors 116b and 136b may form a "common" second AC conductor for a neutral or *vice versa.* The machine terminals 124a and 140a may form a "common" positive DC terminal or a "common" first AC terminal for a first AC phase and the machine terminals 124b and 140b may form a "common" negative DC terminal or a "common" second AC terminal for a neutral, or *vice versa.* The second and third switching modules 112₁, 112₂, ..., 112ₚ and 134₁, 134₂, ..., 134_{q} are electrically connected to the single (or "common") pair of machine conductors and their control may be coordinated.

If the electrical machine 100 is operated as a generator, the second switching modules 112₁, 112₂, ..., 112ₚ and/or the third switching modules 134₁, 134₂, ..., 134_{q} may supply power to one or more second loads (not shown) through the second machine conductors 116a, 116b and the second machine terminals 124a, 124b and/or to one or more third loads (not shown) through the third machine conductors 136a, 136b and the third machine terminals 140a, 140b. It will be readily understood that one or both of the second and third switching modules 112₁, 112₂, ..., 112ₚ and 134₁, 134₂, ..., 134_{q} may be operated depending on the requirements. Power may also be supplied to one or both of the second and third loads (not shown) depending on the requirements. Power may also be supplied independently to the one or more first loads (not shown) by the first switching modules 110₁, 110₂, ..., 110ₙ through the first machine conductors 114a, 114b and the first machine terminals 122a, 122b.

If the electrical machine 100 is operated as a motor, the second switching modules 112₁, 112₂, ..., 112ₚ and/or the third switching modules 134₁, 134₂, ..., 134_{q} may receive power from one or more second power sources (not shown) through the second machine conductors 116a, 116b and the second machine terminals 124a, 124b and/or from one or more third power sources (not shown) through the third machine conductors 136a, 136b and the third machine terminals 140a, 140b. It will be readily understood that one or both of the second and third switching modules 112₁, 112₂, ..., 112ₚ and 134₁, 134₂, ..., 134_{q} may be operated depending on the requirements. Power may also be supplied from one or both of the second and third power sources (not shown) depending on the requirements. Power may also be supplied independently from the one or more first power sources (not shown) to the first switching modules 110₁, 110₂, ..., 110ₙ through the first machine conductors 114a, 114b and the first machine terminals 122a, 122b. The second and third switching modules 112₁, 112₂, ..., 112ₚ and 134₁, 134₂, ..., 134_{q} may be controlled in a coordinated manner to drive the rotation of the rotor 102.

If the third switch 144 is controlled to be closed, e.g., by the controller, the first and third machine conductors 114a, 114b and 136a, 136b are electrically connected to form a "common" pair of machine conductors. In particular, the machine conductor 114a is electrically connected to the machine conductor 136a and the machine conductor 114b is electrically connected to the machine conductor 136b. For example, the machine conductors 114a and 136a may form a "common" positive DC conductor and the machine conductors 114b and 136b may form a "common" negative DC conductor. Alternatively, the machine conductors 114a and 136a may form a "common" first AC conductor for a first AC phase and the machine conductors 114b and 136b may form a "common" second AC conductor for a neutral or *vice versa.* The machine terminals 122a and 140a may form a "common" positive DC terminal or a "common" first AC terminal for a first AC phase and the machine terminals 122b and 140b may form a "common" negative DC terminal or a "common" second AC terminal for a neutral, or *vice versa.* The first and third switching modules 110₁, 110₂, ..., 110ₙ and 134₁, 134₂, ..., 134_{q} are electrically connected to the single (or "common") pair of machine conductors and their control may be coordinated.

If the electrical machine 100 is operated as a generator, the first switching modules 110₁, 110₂, ..., 110ₙ and/or the third switching modules 134₁, 134₂, ..., 134_{q} may supply power to one or more first loads (not shown) through the first machine conductors 114a, 114b and the first machine terminals 122a, 122b and/or to one or more third loads (not shown) through the third machine conductors 136a, 136b and the third machine terminals 140a, 140b. It will be readily understood that one or both of the first and third switching modules 110₁, 110₂, ..., 110ₙ and 134₁, 134₂, ..., 134_{q} may be operated depending on the requirements. Power may also be supplied to one or both of the first and third power sources (not shown) depending on the requirements. Power may also be supplied independently to the one or more second loads (not shown) by the second switching modules 112₁, 112₂, ..., 112ₚ through the second machine conductors 116a, 116b and the second machine terminals 124a, 124b.

If the electrical machine 100 is operated as a motor, the first switching modules 110₁, 110₂, ..., 110ₙ and/or the third switching modules 134₁, 134₂, ..., 134_{q} may receive power from one or more first power sources (not shown) through the first machine conductors 114a, 114b and the first machine terminals 122a, 122b and/or from one or more third power sources (not shown) through the third machine conductors 136a, 136b and the second machine terminals 140a, 140b. It will be readily understood that one or both of the first and third switching modules 110₁, 110₂, ..., 110ₙ and 134₁, 134₂, ..., 134_{q} may be operated depending on the requirements. Power may also be supplied from one or both of the first and third power sources (not shown) depending on the requirements. Power may also be supplied independently from the one or more second power sources (not shown) by the second switching modules 112₁, 112₂, ..., 112ₚ through the second machine conductors 116a, 116b and the first machine terminals 124a, 124b. The first and third switching modules 110₁, 110₂, ..., 110ₙ and 134₁, 134₂, ..., 134_{q} may be controlled in a coordinated manner to drive the rotation of the rotor 102.

If any two of the first, second and third switches 130, 140 and 142 are closed, e.g., by the controller, the first, second and third machine conductors 114a, 114b, 116a, 116b and 136a, 136b are electrically connected to form a "common" pair of machine conductors. In particular, the machine conductors 114a, 116a and 136a are electrically connected, and the machine conductor 114b, 116b and 136b are electrically connected. For example, the machine conductors 114a, 116a and 136a may form a "common" positive DC conductor and the machine conductors 114b, 116b and 136b may form a "common" negative DC conductor. Alternatively, the machine conductors 114a, 116a and 136a may form a "common" first AC conductor for a first AC phase and the machine conductors 114b, 116b and 136b may form a "common" second AC conductor for a neutral or *vice versa.* The machine terminals 122a, 124a and 140a may form a "common" positive DC terminal or a "common" first AC terminal for a first AC phase and the machine terminals 122b, 124b and 140b may form a "common" negative DC terminal or a "common" second AC terminal for a neutral, or *vice versa.* The first, second and third switching modules 110₁, 110₂, ..., 110ₙ, 112₁, 112₂, ..., 112ₚ and 134₁, 134₂, ..., 134_{q} are electrically connected to the "common" pair of machine conductors and their control may be coordinated.

If the electrical machine 100 is operated as a generator, the first switching modules 110₁, 110₂, ..., 110ₙ and/orthe second switching modules 112₁, 112₂, ..., 112ₚ and/or the third switching modules 134₁, 134₂, ..., 134_{q} may supply power to one or more first loads (not shown) through the first machine conductors 114a, 114b and the first machine terminals 122a, 122b and/or to one or more second loads (not shown) through the second machine conductors 116a, 116b and the second machine terminals 124a, 124b and/or to one or more third loads (not shown) through the third machine conductors 136a, 136b and the third machine terminals 140a, 140b. It will be readily understood that one or more of the first, second and third switching modules 110₁, 110₂, ..., 110ₙ, 112₁, 112₂, ..., 112ₚ and 134₁, 134₂, ..., 134_{q} may be operated depending on the requirements. Power may also be supplied to one or more of the first, second and third loads (not shown) depending on the requirements.

If the electrical machine 100 is operated as a motor, the first switching modules 110₁, 110₂, ..., 110ₙ and/or the second switching modules 112₁, 112₂, ..., 112ₚ and/or the third switching modules 134₁, 134₂, ..., 134_{q} may receive power from one or more first power sources (not shown) through the first machine conductors 114a, 114b and the first machine terminals 122a, 122b and/or from one or more second power sources (not shown) through the second machine conductors 116a, 116b and the second machine terminals 124a, 124b and/or from one or more third power sources (not shown) through the third machine conductors 136a, 136b and the third machine terminals 140a, 140b. It will be readily understood that one or more of the first, second and third switching modules 110₁, 110₂, ..., 110ₙ, 112₁, 112₂, ..., 112ₚ and 134₁, 134₂, ..., 134_{q} may be operated depending on the requirements. Power may also be supplied from one or more of the first, second and third power sources (not shown) depending on the requirements. The first, second and third switching modules 110₁, 110₂, ..., 110ₙ, 112₁, 112₂, ..., 112ₚ and 134₁, 134₂, ..., 134_{q} may be controlled in a coordinated manner to drive the rotation of the rotor 102.

Figure 19 also shows how cabling or buses 150 may be electrically connected to the first machine terminals 122a, 122b by isolation switches 127a, 127b, how cabling or buses 160 may be electrically connected to the second machine terminals 124a, 124b by isolation switches 129a, 129b, and how cabling or buses 170 may be electrically connected to the third machine terminals 140a,140b by isolation switches 141a, 141b. The isolation switches may be electrical switches and may include one or more controllable semiconductor switches, e.g., thyristors. The one or more controllable switches may be controlled to be switched on and off by a suitable controller. The isolation switches may also be mechanical isolators.

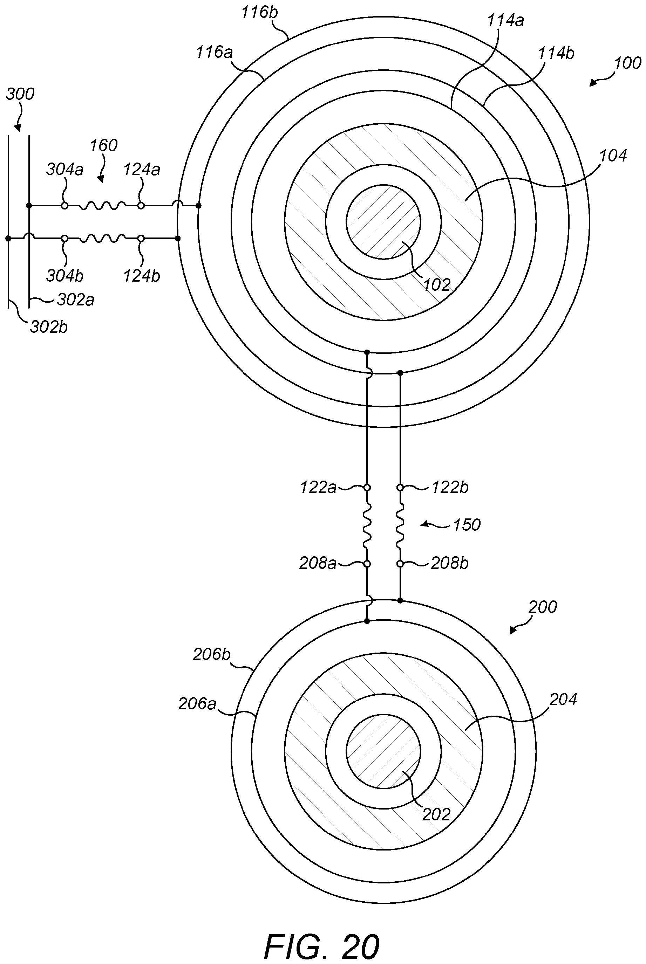

Figure 20 shows a first example of a power system that includes a first electrical machine 100 as described above. The first electrical machine 100 is as shown in Figures 4 and 5 and includes:
- a rotor 102,
- a stator 104 including:
   ∘ a plurality of first stator coils (not shown for clarity but corresponding to the first stator coils 106₁, 106₂, ..., 106ₙ shown in Figures 4 and 5), and
   ∘ a plurality of second stator coils (not shown for clarity but corresponding to the second stator coils 108₁, 108₂, ..., 108ₚ shown in Figures 4 and 5),
- a power electronic switching assembly (not shown for clarity) and including:
   ∘ a plurality of first switching modules (corresponding to the first switching modules 110₁, 110₂, ..., 110ₙ shown in Figures 4 and 5), where each of the first switching modules is electrically connected to a respective first stator coil, and
   ∘ a plurality of second switching modules (corresponding to the second switching modules 112₁, 112₂, ..., 112ₚ shown in Figures 4 and 5), where each of the second switching modules is electrically connected to a respective second stator coil,
- a pair of first machine conductors 114a, 114b,
- a pair of second machine conductors 116a, 116b,
- a pair of first machine terminals 122a, 122b, and
- a pair of second machine terminals 124a, 124b.

The first electrical machine 100 is normally operated as a generator and the rotor 102 is driven by a suitable prime mover, e.g., a diesel engine or gas turbine engine not shown).

A second electrical machine 200 is normally operated as a motor and includes:
- a rotor 202 that drives a suitable load, e.g., a propulsion load (not shown),
- a stator 204 including a plurality of stator coils (not shown for clarity but corresponding to the stator coils 34₁, 34₂, ..., 34ₙ shown in Figure 3),
- a power electronic switching assembly (not shown for clarity) and including a plurality of switching modules (corresponding to the switching modules 30₁, 30₂, ..., 30ₙ shown in Figure 3), where each of the switching modules is electrically connected to a respective stator coil,
- a pair of machine conductors 206a, 206b, and
- a pair of machine terminals 208a, 208b.

The first machine terminals 122a, 122b of the first electrical machine 100 are electrically connected to the machine terminals 208a, 208b of the second electrical machine 200 using suitable cabling or buses 150 as shown.

The first switching modules 110₁, 110₂, ..., 110ₙ of the first electrical machine 100 are controlled to supply a variable DC voltage to the second electrical machine 200. Varying the DC voltage supplied by the first switching modules 110₁, 110₂, ..., 110ₙ of the first electrical machine 100 allows the rotational speed of the rotor 202 of the second electrical machine 200 to be selectively varied. The variable DC voltage is supplied to the first machine conductors 114a, 114b by the first switching modules 110₁, 110₂, ..., 110ₙ of the first electrical machine 100 and then to the machine conductors 206a, 206b of the second electrical machine 200 through the first machine terminals 122a, 122b, the cabling or buses 150, and the machine terminals 208a, 208b. The switching modules of the second electrical machine 200 are then controlled to drive the rotation of the rotor 202.

A power network 300 includes a positive DC network conductor 302a and a negative DC network conductor 302b. The power network 300 also includes a positive DC network terminal 304a and a negative DC network terminal 304b. The second machine terminals 124a, 124b of the first electrical machine 100 are electrically connected to the terminals 304a, 304b of the power network 300 using suitable cabling or buses 160 as shown. The power network 300 may be used to supply ship or hotel services if the power system is used in a marine vessel, for example. The second switching modules 112₁, 112₂, ..., 112ₚ of the first electrical machine 100 may be controlled independently to supply a fixed DC voltage to the power network 300. The fixed DC voltage is supplied to the second machine conductors 116a, 116b by the second switching modules 112₁, 112₂, ..., 112ₚ of the first electrical machine 100 and then to the power network 300 through the second machine terminals 124a, 124b, the cabling or buses 160, and the network terminals 304a, 304b. One or more loads (not shown) may be electrically connected directly to the power network 300, or connected indirectly by means of a respective power converter if the loads require an AC voltage, for example. The second switching modules 112₁, 112₂, ..., 112ₚ of the first electrical machine 100 may also be controlled to supply a fixed single-phase AC voltage (e.g., 440 or 690 VAC at 50 or 60 Hz) to the power network 300. In this case, the power network 300 might include a first AC conductor (e.g., the network conductor 302a) for a first AC phase and a second AC conductor (e.g., the network conductor 302b) for a neutral or *vice versa.* The power network 300 will also include a first AC terminal (e.g., the network terminal 304a) for a first AC phase and a second AC terminal (e.g., the network terminal 304b) for a neutral or *vice versa.* In a different arrangement, the power network might include first, second and third AC conductors and first, second and third AC terminals to facilitate an electrical connection to one or more three-phase AC loads and the second switching modules might be configured to provide a three-phase AC voltage as described above.

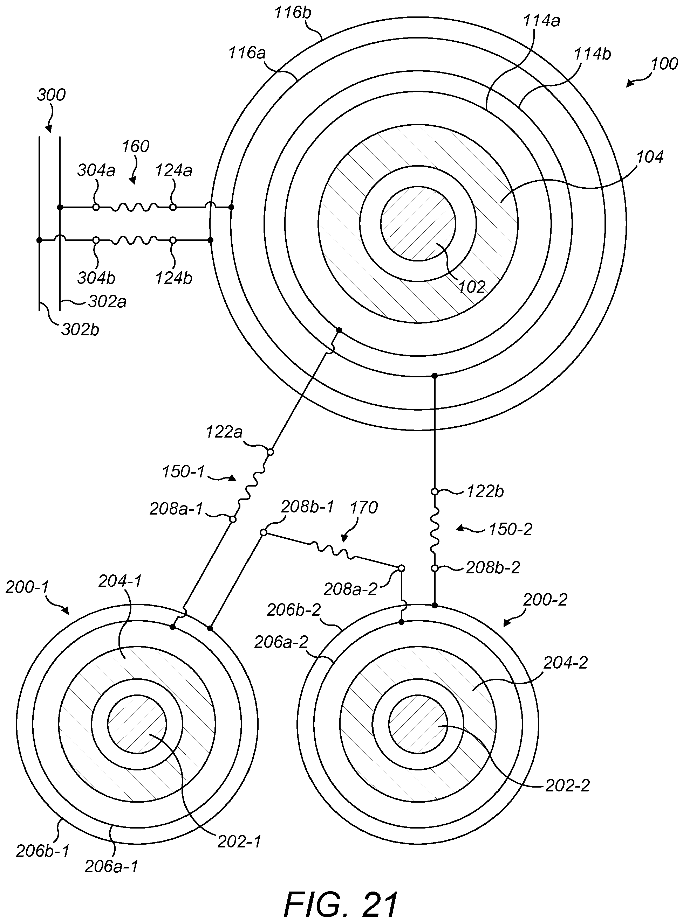

Figure 21 shows a second example of a power system that includes a first electrical machine 100 as described above. The first electrical machine 100 is as shown in Figures 4 and 5 and includes:
- a rotor 102,
- a stator 104 including:
   ∘ a plurality of first stator coils (not shown for clarity but corresponding to the first stator coils 106₁, 106₂, ..., 106ₙ shown in Figures 4 and 5), and
   ∘ a plurality of second stator coils (not shown for clarity but corresponding to the second stator coils 108₁, 108₂, ..., 108ₚ shown in Figures 4 and 5),
- a power electronic switching assembly (not shown for clarity) and including:
   ∘ a plurality of first switching modules (corresponding to the first switching modules 110₁, 110₂, ..., 110ₙ shown in Figures 4 and 5), where each of the first switching modules is electrically connected to a respective first stator coil, and
   ∘ a plurality of second switching modules (corresponding to the second switching modules 112₁, 112₂, ..., 112ₚ shown in Figures 4 and 5), where each of the second switching modules is electrically connected to a respective second stator coil,
- a pair of first machine conductors 114a, 114b,
- a pair of second machine conductors 116a, 116b,
- a pair of first machine terminals 122a, 122b, and
- a pair of second machine terminals 124a, 124b.

The first electrical machine 100 is normally operated as a generator and the rotor 102 is driven by a suitable prime mover, e.g., a diesel engine or gas turbine engine not shown).

A second electrical machine 200-1 is normally operated as a motor and includes:
- a rotor 202-1 that drives a suitable load, e.g., a propulsion load (not shown),
- a stator 204-1 including a plurality of stator coils (not shown for clarity but corresponding to the stator coils 34₁, 34₂, ..., 34ₙ shown in Figure 3),
- a power electronic switching assembly (not shown for clarity) and including a plurality of switching modules (corresponding to the switching modules 30₁, 30₂, ..., 30ₙ shown in Figure 3), where each of the switching modules is electrically connected to a respective stator coil,
- a pair of machine conductors 206a-1, 206b-1, and
- a pair of machine terminals 208a-1, 208b-1.

One of the first machine terminals 122a of the first electrical machine 100 is electrically connected to one of the machine terminals 208a-1 of the second electrical machine 200-1 using a suitable cable or bus 150-1 as shown.

A third electrical machine 200-2 is normally operated as a motor and includes:
- a rotor 202-2 that drives a suitable load, e.g., a propulsion load (not shown),
- a stator 204-2 including a plurality of stator coils (not shown for clarity but corresponding to the stator coils 34₁, 34₂, ..., 34ₙ shown in Figure 3),
- a power electronic switching assembly (not shown for clarity) and including a plurality of switching modules (corresponding to the switching modules 30₁, 30₂, ..., 30ₙ shown in Figure 3), where each of the switching modules is electrically connected to a respective stator coil,
- a pair of machine conductors 206a-2, 206b-2, and
- a pair of machine terminals 208a-2, 208b-2.

The other one of the first machine terminals 122b of the first electrical machine 100 is electrically connected to one of the machine terminals 208b-2 of the third electrical machine 200-2 using a suitable cable or bus 150-2 as shown.

The other machine terminal 208b-1 of the second electrical machine 200-1 is electrically connected to the other machine terminal 208a-2 of the third electrical machine 202-2 using a suitable cable or bus 170. In this way, the second and third electrical machine 200-1, 200-2 are electrically connected in series to the first machine terminals 122a-1, 122b-1 of the first electrical machine 100.

The first switching modules 110₁, 110₂, ..., 110ₙ of the first electrical machine 100 are controlled to supply a variable DC voltage to the second and third electrical machines 200-1, 200-2. Varying the DC voltage supplied by the first switching modules 110₁, 110₂, ..., 110ₙ of the first electrical machine 100 allows the rotational speed of the rotor 202-1, 202-2 of the second and third electrical machines 200-1, 200-2 to be selectively varied. The switching modules of the second and third electrical machines 200-1, 200-2 are controlled to drive the rotation of the respective rotor 202-1, 202-2.

A power network 300 includes a positive DC network conductor 302a and a negative DC network conductor 302b. The power network 300 also includes a positive DC network terminal 304a and a negative DC network terminal 304b. The second machine terminals 124a, 124b of the first electrical machine 100 are electrically connected to the terminals 304a, 304b of the power network 300 using suitable cabling or buses 160 as shown. The power network 300 may be used to supply ship or hotel services if the power system is used in a marine vessel, for example. The second switching modules 112₁, 112₂, ..., 112ₚ of the first electrical machine 100 may be controlled independently to supply a fixed DC voltage to the power network 300. The fixed DC voltage is supplied to the second machine conductors 116a, 116b by the second switching modules 112₁, 112₂, ..., 112ₚ of the first electrical machine 100 and then to the power network 300 through the second machine terminals 124a, 124b, the cabling or buses 160, and the network terminals 304a, 304b. One or more loads (not shown) may be electrically connected directly to the power network 300, or connected indirectly by means of a respective power converter if the loads require an AC voltage, for example. The second switching modules 112₁, 112₂, ..., 112ₚ of the first electrical machine 100 may also be controlled to supply a fixed single-phase AC voltage (e.g., 440 or 690 VAC at 50 or 60 Hz) to the power network 300. In this case, the power network 300 might include a first AC conductor (e.g., the network conductor 302a) for a first AC phase and a second AC conductor (e.g., the network conductor 302b) for a neutral or *vice versa.* The power network 300 will also include a first AC terminal (e.g., the network terminal 304a) for a first AC phase and a second AC terminal (e.g., the network terminal 304b) for a neutral or *vice versa.* In a different arrangement, the power network might include first, second and third AC conductors and first, second and third AC terminals to facilitate an electrical connection to one or more three-phase AC loads and the second switching modules might be configured to provide a three-phase AC voltage as described above.

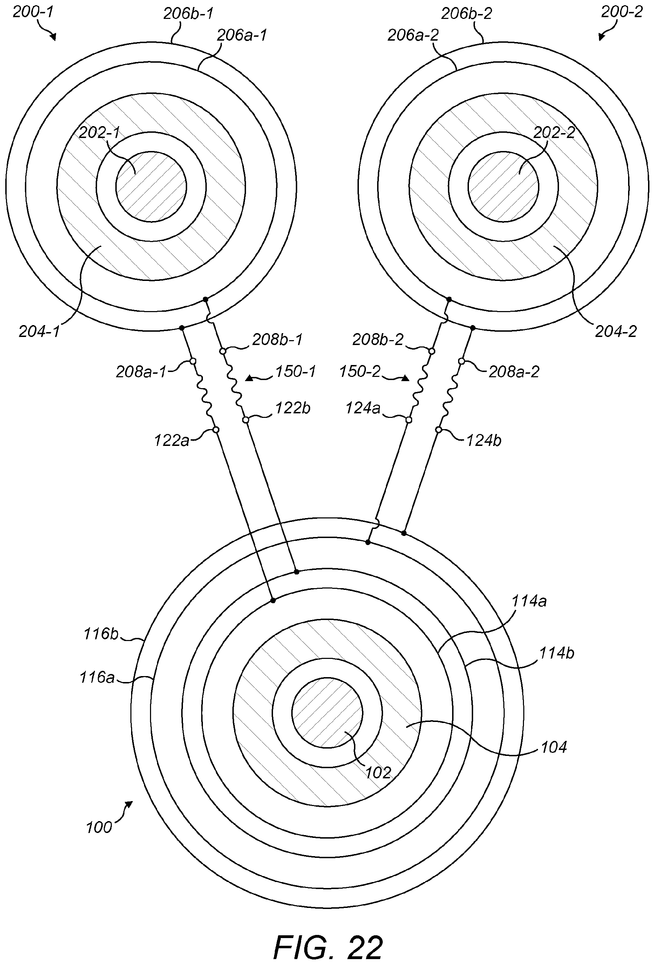

Figure 22 shows a third example of a power system that includes a first electrical machine 100 as described above. The first electrical machine 100 is as shown in Figures 4 and 5 and includes:
- a rotor 102,
- a stator 104 including:
   ∘ a plurality of first stator coils (not shown for clarity but corresponding to the first stator coils 106₁, 106₂, ..., 106ₙ shown in Figures 4 and 5), and
   ∘ a plurality of second stator coils (not shown for clarity but corresponding to the second stator coils 108₁, 108₂, ..., 108ₚ shown in Figures 4 and 5),
- a power electronic switching assembly (not shown for clarity) and including:
   ∘ a plurality of first switching modules (corresponding to the first switching modules 110₁, 110₂, ..., 110ₙ shown in Figures 4 and 5), where each of the first switching modules is electrically connected to a respective first stator coil, and
   ∘ a plurality of second switching modules (corresponding to the second switching modules 112₁, 112₂, ..., 112ₚ shown in Figures 4 and 5), where each of the second switching modules is electrically connected to a respective second stator coil,
- a pair of first machine conductors 114a, 114b,
- a pair of second machine conductors 116a, 116b,
- a pair of first machine terminals 122a, 122b, and
- a pair of second machine terminals 124a, 124b.

The first electrical machine 100 is normally operated as a motor and the rotor 102 drives a suitable load, e.g., a propulsion load (not shown).

A second electrical machine 200-1 is normally operated as a generator and includes:
- a rotor 202-1 that is driven by a suitable prime mover, e.g., a diesel engine or a gas turbine engine (not shown),
- a stator 204-1 including a plurality of stator coils (not shown for clarity but corresponding to the stator coils 34₁, 34₂, ..., 34ₙ shown in Figure 3),
- a power electronic switching assembly (not shown for clarity) and including a plurality of switching modules (corresponding to the switching modules 30₁, 30₂, ..., 30ₙ shown in Figure 3), where each of the switching modules is electrically connected to a respective stator coil,
- a pair of machine conductors 206a-1, 206b-1, and
- a pair of machine terminals 208a-1, 208b-1.

The first machine terminals 122a, 122b of the first electrical machine 100 are electrically connected to the machine terminals 208a-1, 208b-1 of the second electrical machine 200-1 using suitable cabling or buses 150-1 as shown.

A third electrical machine 200-2 is normally operated as a generator and includes:
- a rotor 202-2 that is driven by a suitable prime mover, e.g., a diesel engine or a gas turbine engine (not shown),
- a stator 204-2 including a plurality of stator coils (not shown for clarity but corresponding to the stator coils 34₁, 34₂, ..., 34ₙ shown in Figure 3),
- a power electronic switching assembly (not shown for clarity) and including a plurality of switching modules (corresponding to the switching modules 30₁, 30₂, ..., 30ₙ shown in Figure 3), where each of the switching modules is electrically connected to a respective stator coil,
- a pair of machine conductors 206a-2, 206b-2, and
- a pair of machine terminals 208a-2, 208b-2.

The second machine terminals 124a, 124b of the first electrical machine 100 are electrically connected to the machine terminals 208a-2, 208b-2 of the third electrical machine 200-2 using suitable cabling or buses 150-2 as shown.

The first switching modules 110₁, 110₂, ..., 110ₙ of the first electrical machine 100 receive a variable DC voltage from the second electrical machine 200-1 through the machine terminals 208a-1, 208a-1, the cabling or buses 150-1, the first machine terminals 122a, 122b, and the first machine conductors 114a, 114b. The second switching modules 112₁, 112₂, ..., 112ₚ of the first electrical machine 100 receive a variable DC voltage from the third electrical machine 200-2 through the machine terminals 208a-2, 208b-2, the cabling or buses 150-2, the second machine terminals 124a, 124b, and the second machine conductors 116a, 116b. Varying the DC voltage supplied to the first and second switching modules 110₁, 110₂, ..., 110ₙ and 112₁, 112₂, ..., 112ₚ of the first electrical machine 100 through the first and second machine terminals 122a, 122b and 124a, 124b, and controlling the first and second switching modules 110₁, 110₂, ..., 110ₙ and 112₁, 112₂, ..., 112ₚ of the first electrical machine 100 to commutate the coil currents, allows the rotational speed of the rotor 102 of the first electrical machine 100 to be selectively varied. The first and second switching modules 110₁, 110₂, ..., 110ₙ and 112₁, 112₂, ..., 112ₚ of the first electrical machine 100 may be controlled in a coordinated manner to drive the rotation of the rotor 102. As described above, the first electrical machine 100 might receive power simultaneously from both the second and third electrical machines 200-1, 200-2. Alternatively, the first electrical machine 100 might normally receive power from just the second electrical machine 200-1, but with the option to receive power from the third electrical machine 200-2 if necessary - e.g., if there is a fault with the second electrical machine 200-1. If the first electrical machine 100 includes a first switch 130 (shown in Figure 16) between the first and second machine conductors 114a, 114b and 116a, 116b it may be closed so that both the first and second switching modules 110₁, 110₂, ..., 110ₙ and 112₁, 112₂, ..., 112ₚ receive the same power from the second electrical machine 200-1 during normal operation, and also from the third electrical machine 200-2 in the event of a fault.

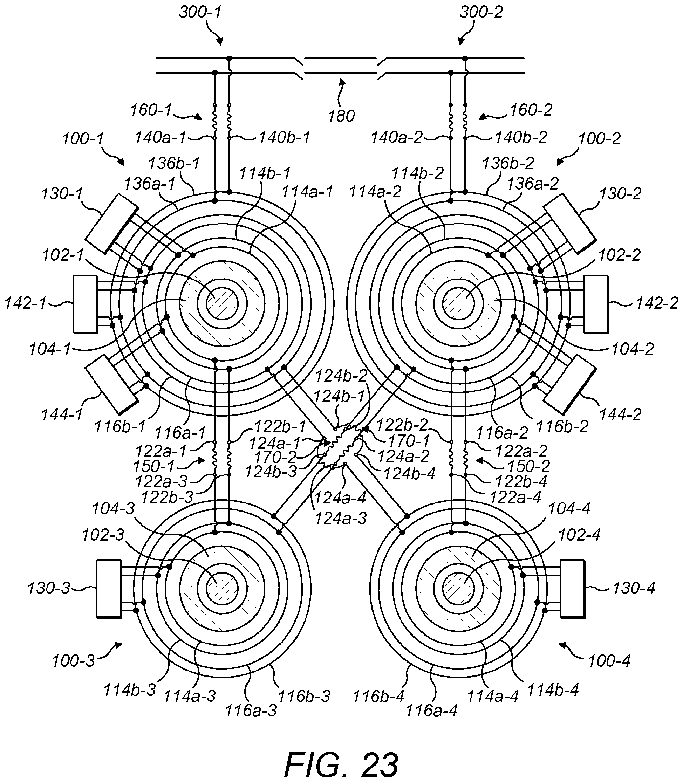

Figure 23 shows a fourth example of a power system that includes a first electrical machine 100-1 as described above. The first electrical machine 100-1 is as shown in Figure 19 and includes:
- a rotor 102-1,
- a stator 104-1 including:
   ∘ a plurality of first stator coils (not shown for clarity but corresponding to the first stator coils 106₁, 106₂, ..., 106ₙ shown in Figure 19),
   ∘ a plurality of second stator coils (not shown for clarity but corresponding to the second stator coils 108₁, 108₂, ..., 108ₚ shown in Figure 19), and
   ∘ a plurality of third stator coils (not shown for clarity but corresponding to the third stator coils 132₁, 132₂, ..., 132_{q} shown in Figure 19),
- a power electronic switching assembly (not shown for clarity) and including:
   ∘ a plurality of first switching modules (corresponding to the first switching modules 110₁, 110₂, ..., 110ₙ shown in Figure 19), where each of the first switching modules is electrically connected to a respective first stator coil,
   ∘ a plurality of second switching modules (corresponding to the second switching modules 112₁, 112₂, ..., 112ₚ shown in Figure 19), where each of the second switching modules is electrically connected to a respective second stator coil, and
   ∘ a plurality of third switching modules (corresponding to the second switching modules 134₁, 134₂, ..., 134_{q} shown in Figure 19), where each of the third switching modules is electrically connected to a respective third stator coil,
- a pair of first machine conductors 114a-1, 114b-1,
- a pair of second machine conductors 116a-1, 116b-1,
- a pair of third machine conductors 136a-1, 136b-1,
- a pair of first machine terminals 122a-1, 122b-1,
- a pair of second machine terminals 124a-1, 124b-1,
- a pair of third machine terminals 140a-1, 140b-1,
- a first switch 130-1 electrically connected between the first and second machine conductors 114a-1, 114b-1 and 116a-1, 116b-1,
- a second switch 142-1 electrically connected between the second and third machine conductors 116a-1, 116b-1 and 136a-1, 136b-1, and
- a third switch 144-1 electrically connected between the first and third machine conductors 114a-1, 114b-1 and 136a-1, 136b-1.

The first electrical machine 100-1 is normally operated as a generator and the rotor 102-1 is driven by a suitable prime mover, e.g., a diesel engine or a gas turbine engine (not shown).

The power system includes a second electrical machine 100-2 as described above. The second electrical machine 100-2 is as shown in Figure 19 and includes:
- a rotor 102-2,
- a stator 104-2 including:
   ∘ a plurality of first stator coils (not shown for clarity but corresponding to the first stator coils 106₁, 106₂, ..., 106ₙ shown in Figure 19),
   ∘ a plurality of second stator coils (not shown for clarity but corresponding to the second stator coils 108₁, 108₂, ..., 108ₚ shown in Figure 19), and
   ∘ a plurality of third stator coils (not shown for clarity but corresponding to the third stator coils 132₁, 132₂, ..., 132_{q} shown in Figure 19),
- a power electronic switching assembly (not shown for clarity) and including:
   ∘ a plurality of first switching modules (corresponding to the first switching modules 110₁, 110₂, ..., 110ₙ shown in Figure 19), where each of the first switching modules is electrically connected to a respective first stator coil,
   ∘ a plurality of second switching modules (corresponding to the second switching modules 112₁, 112₂, ..., 112ₚ shown in Figure 19), where each of the second switching modules is electrically connected to a respective second stator coil, and
   ∘ a plurality of third switching modules (corresponding to the second switching modules 134₁, 134₂, ..., 134_{q} shown in Figure 19), where each of the third switching modules is electrically connected to a respective third stator coil,
- a pair of first machine conductors 114a-2, 114b-2,
- a pair of second machine conductors 116a-2, 116b-2,
- a pair of third machine conductors 136a-2, 136b-2,
- a pair of first machine terminals 122a-2, 122b-2,
- a pair of second machine terminals 124a-2, 124b-2,
- a pair of third machine terminals 140a-2, 140b-2,
- a first switch 130-2 electrically connected between the first and second machine conductors 114a-2, 114b-2 and 116a-2, 116b-2,
- a second switch 142-2 electrically connected between the second and third machine conductors 116a-2, 116b-2 and 136a-2, 136b-2, and
- a third switch 144-2 electrically connected between the first and third machine conductors 114a-2, 114b-2 and 136a-2, 136b-2.

The second electrical machine 100-2 is normally operated as a generator and the rotor 102-2 is driven by a suitable prime mover, e.g., a diesel engine or a gas turbine engine (not shown).

The power system includes a third electrical machine 100-3 as described above. The third electrical machine 100-3 is as shown in Figure 16 and includes:
- a rotor 102-3,
- a stator 104-3 including:
   ∘ a plurality of first stator coils (not shown for clarity but corresponding to the stator coils 106₁, 106₂, ..., 106ₙ shown in Figure 16), and
   ∘ a plurality of second stator coils (not shown for clarity but corresponding to the stators coils 108₁, 108₂, ..., 108ₚ shown in Figure 16),
- a power electronic switching assembly (not shown for clarity) and including:
   ∘ a plurality of first switching modules (corresponding to the switching modules 110₁, 110₂, ..., 110ₙ shown in Figure 16), where each of the first switching modules is electrically connected to a respective first stator coil, and
   ∘ a plurality of second switching modules (corresponding to the switching modules 112₁, 112₂, ..., 112ₚ shown in Figure 16), where each of the second switching modules is electrically connected to a respective second stator coil,
- a pair of first machine conductors 114a-3, 114b-3,
- a pair of second machine conductors 116a-3, 116b-3,
- a pair of first machine terminals 122a-3, 122b-3,
- a pair of second machine terminals 124a-3, 124b-3, and
- a first switch 130-3 electrically connected between the first and second machine conductors 114a-3, 114b-3 and 116a-3, 116b-3.

The third electrical machine 100-3 is normally operated as a motor and the rotor 102-3 drives a suitable load, e.g., a propulsion load (not shown).

The power system includes a fourth electrical machine 100-4 as described above. The fourth electrical machine 100-4 is as shown in Figure 16 and includes:
- a rotor 102-4,
- a stator 104-4 including:
   ∘ a plurality of first stator coils (not shown for clarity but corresponding to the stator coils 106₁, 106₂, ..., 106ₙ shown in Figure 16),
   ∘ a plurality of second stator coils (not shown for clarity but corresponding to the stators coils 108₁, 108₂, ..., 108ₚ shown in Figure 16),
- a power electronic switching assembly (not shown for clarity) and including:
   ∘ a plurality of first switching modules (corresponding to the switching modules 110₁, 110₂, ..., 110ₙ shown in Figure 16), where each of the first switching modules is electrically connected to a respective first stator coil, and
   ∘ a plurality of second switching modules (corresponding to the switching modules 112₁, 112₂, ..., 112ₚ shown in Figure 16), where each of the second switching modules is electrically connected to a respective second stator coil,
- a pair of first machine conductors 114a-4, 114b-4,
- a pair of second machine conductors 116a-4, 116b-4,
- a pair of first machine terminals 122a-4, 122b-4,
- a pair of second machine terminals 124a-4, 124b-4, and
- a first switch 130-4 electrically connected between the first and second machine conductors 114a-4, 114b-4 and 116a-4, 116b-4.

The fourth electrical machine 100-4 is normally operated as a motor and the rotor 102-4 drives a suitable load, e.g., a propulsion load (not shown).

The first machine terminals 122a-1, 122b-1 of the first electrical machine 100-1 are electrically connected to the first machine terminals 122a-3, 122b-3 of the third electrical machine 100-3 using suitable cabling or buses 150-1 as shown. The second machine terminals 124a-1, 124b-1 of the first electrical machine 100-1 are electrically connected to the second machine terminals 124a-4, 124b-4 of the fourth electrical machine 100-4 using suitable cabling or buses 170-1 as shown.

The first machine terminals 122a-2, 122b-2 of the second electrical machine 100-2 are electrically connected to the first machine terminals 122a-4, 122b-4 of the fourth electrical machine 100-4 using suitable cabling or buses 150-2 as shown. The second machine terminals 124a-2, 124b-2 of the second electrical machine 100-2 are electrically connected to the second machine terminals 124a-3, 124b-3 of the third electrical machine 100-3 using suitable cabling or buses 170-2 as shown.

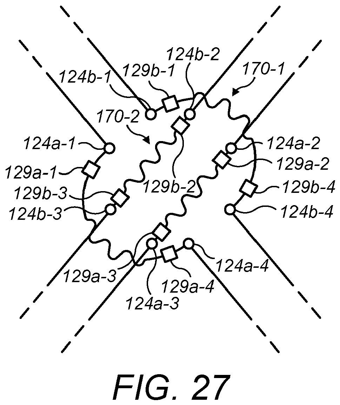

In this way, the first electrical machine 100-1 is electrically connected to the third and fourth electrical machines 100-3, 100-4, and the second electrical machine 100-2 is electrically connected to the third and fourth electrical machines 100-3, 100-4. The interconnections between the electrical machines 100-1, 100-2, ..., 100-4 are more clearly shown in Figure 27. Figure 27 also shows isolation switches 129a-1, 129b-1, ..., 129a-4, 129b-4 between the second machine terminals 124a-1, 124b-1, ..., 124a-4, 124b-4 and the cabling or buses 170-1, 170-2. The isolation switches have been omitted from Figures 23 to 26 for clarity. It will be understood that isolation switches will typically also be provided between the first machine terminals 122a-1, 122b-1, ..., 122a-4, 122b-4 and the cabling or buses 150-1, 150-2.

The third machine terminals 140a-1, 140b-1 of the first electrical machine 100-1 are electrically connected to a first power network 300-1 using suitable cabling or buses 160-1 as shown. The third machine terminals 140a-2, 140b-2 of the second electrical machine 100-2 are electrically connected to a second power network 300-2 using suitable cabling or buses 160-2 as shown. The first and second power networks 300-1, 300-2 are DC power networks and may be used to supply ship or hotel services if the power system is used in a marine vessel, for example. The first and second power networks 300-1, 300-2 may be electrically connected by a bus tie 180. If the bus tie 180 is closed, the third switching modules of the first and second electrical machines 100-1, 100-2 will normally be controlled in a coordinated manner to supply the same DC voltage to the electrically-connected first and second power networks 300-1, 300-2. It will be understood that isolation switches will typically also be provided between the third machine terminals 140a-1, 140b-1, ..., 140b-2 and the cabling or buses 160-1, 160-2.

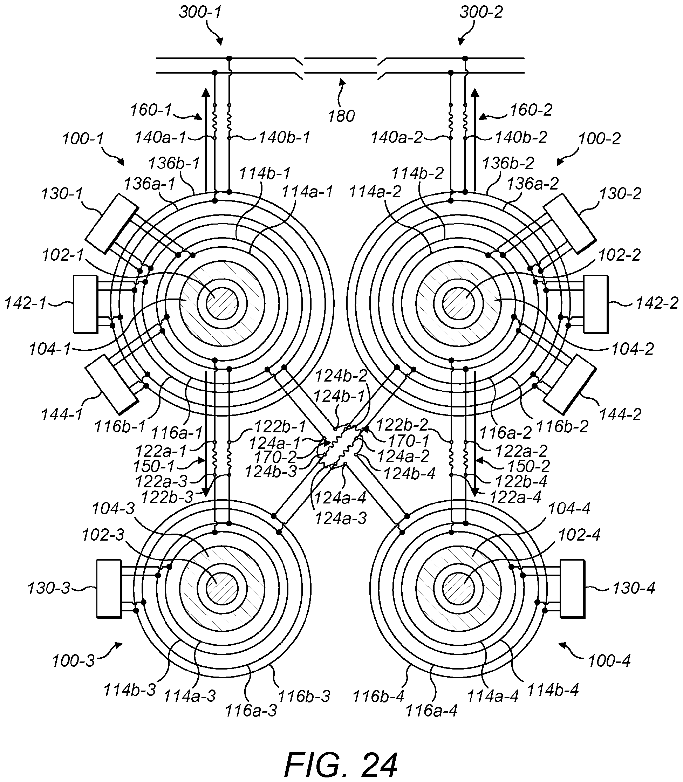

In a first operating condition (see Figure 24):
- the first, second and third switches 130-1, 142-1 and 144-1 of the first electrical machine 100-1 are open,
- the first, second and third switches 130-2, 142-2 and 144-2 of the second electrical machine 100-1 are open,
- the first switch 130-3 of the third electrical machine 100-3 is closed, and
- the first switch 130-4 of the fourth electrical machine 100-4 is closed.

The first switching modules of the first electrical machine 100-1 may be controlled to supply a variable DC voltage to the "common" machine terminals of the third electrical machine 100-3 - i.e., because the first switch 130-3 is closed. The first and second switching modules of the third electrical machine 100-3 both receive the same power from the first electrical machine 100-1 and may be controlled in a coordinated manner to drive the rotor 102-3. Varying the DC voltage supplied to the third electrical machine 100-3 allows the rotational speed of the rotor 102-3 of the third electrical machine 100-3 to be selectively varied.

The second switching modules of the first electrical machine 100-1 are not operated (i.e., they are turned off).

The third switching modules of the first electrical machine 100-1 may be controlled independently from the first switching modules to supply a fixed DC voltage to the first power network 300-1.

The first switching modules of the second electrical machine 100-2 may be controlled to supply a variable DC voltage to the "common" machine terminals of the fourth electrical machine 100-4 - i.e., because the first switch 130-4 is closed. The first and second switching modules of the fourth electrical machine 100-4 both receive the same power from the second electrical machine 100-2 and may be controlled in a coordinated manner to drive the rotor 102-4. Varying the DC voltage supplied to the fourth electrical machine 100-4 allows the rotational speed of the rotor 102-4 of the fourth electrical machine 100-4 to be selectively varied.

The second switching modules of the second electrical machine 100-2 are not operated (i.e., they are turned off).

The third switching modules of the second electrical machine 100-2 may be controlled independently from the first switching modules to supply a fixed DC voltage to the second power network 300-2. In this case, the bus tie 180 is open.

Opening the first, second and third switches 130-1, 142-1 and 144-1 of the first electrical machine 100-1 provides electrical resilience and provides three electrically isolated circuits. An electrical fault in one of the circuits will not affect any of the other circuits, for example. The same applies to the second electrical machine 100-2. Closing the first switch 130-3 of the third electrical machine 100-3 and the first switch 130-4 of the fourth electrical machine 100-4 provides maximum availability of stator coils and switching modules. Put another way, during normal operation of the power system, it means that both the first and second switching modules of the third electrical machine 100-3 receive power from the first electrical machine 100-1, and both the first and second switching modules of the fourth electrical machine 100-4 receive power from the second electrical machine 100-2. The first electrical machine 100-1 may also independently supply power to the first power network 300-1. The second electrical machine 100-2 may also independently supply power to the second power network 300-2.

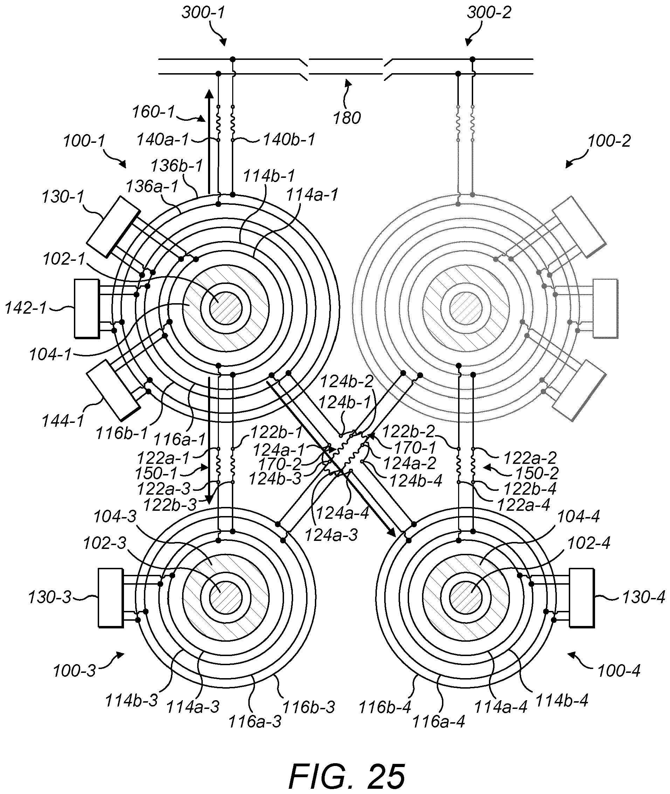

In a second operating condition (see Figure 25) where the second electrical machine 100-2 is not operational, e.g., because of a fault:
- the first, second and third switches 130-1, 142-1 and 144-1 of the first electrical machine 100-1 are open,
- the first switch 130-3 of the third electrical machine 100-3 is closed, and
- the first switch 130-4 of the fourth electrical machine 100-4 is closed.

The default state of an electrical machine that is not operational is that all of the switching modules revert to a high impedance (or "pulse supressed") state. A protective strategy may rapidly set switching modules to this high impedance state whenever a failure mode is sufficiently serious to require one or more of the switching modules to be pulse supressed. Electrical machines according to the present invention will preferably have sufficient design margin and/or redundancy to mitigate the risk of cascade failure following the occurrence of a first fault. In practical terms, a protective strategy for the second electrical machine 100-2 will prevent backfeed of fault current from the third and fourth electrical machines 100-3, 100-4.

The first switching modules of the first electrical machine 100-1 may be controlled to supply a variable DC voltage to the "common" machine terminals of the third electrical machine 100-3 - i.e., because the first switch 130-3 is closed. The first and second switching modules of the third electrical machine 100-3 both receive the same power from the first electrical machine 100-1 and may be controlled in a coordinated manner to drive the rotor 102-3. Varying the DC voltage supplied to the third electrical machine 100-3 allows the rotational speed of the rotor 102-3 of the third electrical machine 100-3 to be selectively varied.

The second switching modules of the first electrical machine 100-1 are now operated (i.e., turned on) and are controlled to supply a variable DC voltage to the "common" machine terminals of the fourth electrical machine 100-4 - i.e., because the first switch 130-4 is closed. The first and second switching modules of the fourth electrical machine 100-4 both receive the same power from the first electrical machine 100-1 and may be controlled in a coordinated manner to drive the rotor 102-4. Varying the DC voltage supplied to the fourth electrical machine 100-4 allows the rotational speed of the rotor 102-4 of the fourth electrical machine 100-4 to be selectively varied. Because the first switch 130-1 of the first electrical machine 100-1 remains open, the first and second switching modules of the first electrical machine 100-1 may be controlled independently so that the third and fourth electrical machines 100-3, 100-4 may be operated at different rotational speeds or with different power flow, for example. The rotors 102-3, 102-4 of the third and fourth electrical machines 100-3, 100-4 may also be made to rotate in different directions.

The third switching modules of the first electrical machine 100-1 may be controlled independently from the first and second switching modules to supply a fixed DC voltage to the first power network 300-1.

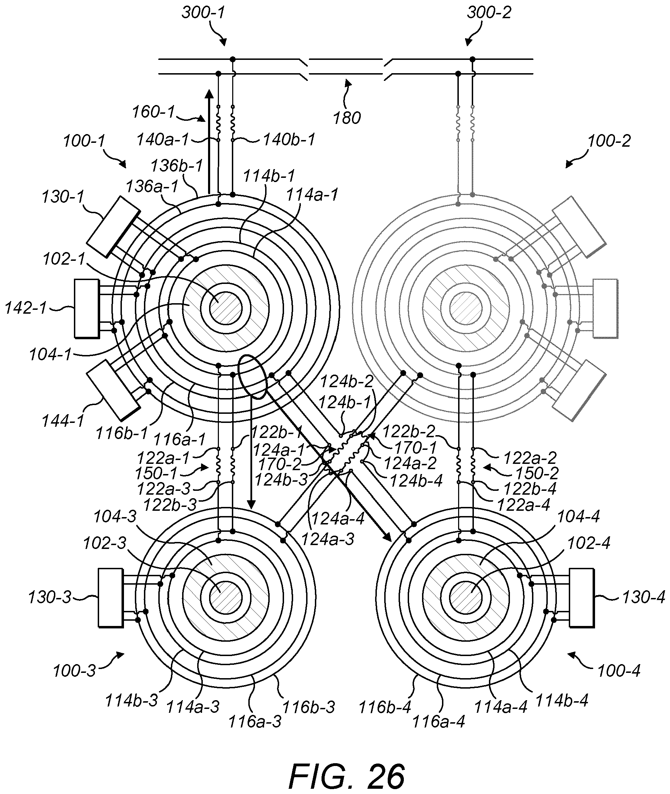

In a third operating condition (see Figure 26) where the second electrical machine 100-2 is also not operational, e.g., because of a fault:
- the first switch 130-1 of the first electrical machine 100-1 is closed,
- the second and third switches 142-1 and 144-1 of the first electrical machine 100-1 are open,
- the first switch 130-3 of the third electrical machine 100-3 is closed, and
- the first switch 130-4 of the fourth electrical machine 100-4 is closed.

Closing the first switch 130-1 of the first electrical machine 100-1 means that the first and second machine conductors 114a-1, 114b-1 and 116a-1, 116b-1 are electrically connected to form a pair of "common" machine conductors. The first and second machine terminals 122a-1, 122b-1 and 124a-1, 124b-1 are electrically connected to form a pair of "common" machine terminals. The first and second switching modules of the first electrical machine 100-1 are electrically connected to the "common" machine conductors. The third machine conductors 136a-1, 136b-1 of the first electrical machine 100-1 remain electrically isolated.

The first and second switching modules of the first electrical machine 100-1 may be controlled in a coordinated manner to supply a variable DC voltage to the "common" machine terminals of the third and fourth electrical machines 100-3, 100-4 - i.e., because the first switches 130-3 and 130-4 are closed. The first and second switching modules of the third electrical machine 100-3 both receive the same power from the first electrical machine 100-1 and may be controlled in a coordinated manner to drive the rotor 102-3. Varying the DC voltage supplied to the third electrical machine 100-3 allows the rotational speed of the rotor 102-3 of the third electrical machine 100-3 to be selectively varied. Similarly, the first and second switching modules of the fourth electrical machine 100-4 both receive the same power from the first electrical machine 100-1 and may be controlled in a coordinated manner to drive the rotor 102-4. Varying the DC voltage supplied to the fourth electrical machine 100-4 allows the rotational speed of the rotor 102-4 of the fourth electrical machine 100-4 to be selectively varied.

Because the first switch 130-1 is now closed, the third and fourth electrical machines 100-3, 100-4 receive the same DC voltage from the first electrical machine 100-1 (i.e., from the "common" machine terminals formed by the electrically-connected first and second machine terminals 122a-1, 122b-1 and 124a-1, 124b-1) and will therefore be operated at the same rotational speed or with the same power flow, for example.

The third switching modules of the first electrical machine 100-1 may be controlled independently from the first and second switching modules to supply a fixed DC voltage to the first power network 300-1.

In both the second and third operating conditions, it will be readily understood that the first electrical machine 100-1 may supply power to both the third and fourth electrical machines 100-3, 100-4 even if the second electrical machine 100-2 is not operating.

Although examples have been described above, it should be understood that various modifications may be made to those examples without departing from the scope of the appended claims. Thus, the breadth and scope of the claims should not be limited to the above-described examples. In particular, it will be readily understood that the present invention is not limited to the first, second, third and fourth power systems described above with reference to the Figures, and that many other power systems are possible. Power systems according to the present invention may also be configured in many different operating conditions - in particular, by selectively controlling the switching modules that are electrically connected to the different sets of machine conductors, and by opening and closing the optional switches, for example. Although the first, second and third power systems described above use rotating electrical machines, it will be understood that linear electrical machines may also be used and that they would include a mover instead of a rotor, for example.

Any combination of the above-described features in all possible variations thereof is encompassed by the description unless otherwise indicated herein or otherwise clearly contradicted by context.

Unless the context clearly requires otherwise, throughout the description and the claims, the words "comprise", "comprising", and the like, are to be construed in an inclusive as opposed to an exclusive or exhaustive sense; that is to say, in the sense of "including, but not limited to".

## Claims

1. An electrical machine (100) comprising:
first machine terminals (122a, 122b) electrically connectable to one or more first loads or power sources;
second machine terminals (124a, 124b) electrically connectable to one or more second loads or power sources;
a stator (104) comprising:
a plurality of first stator coil groups, each first stator coil group defining a respective stator phase and comprising one or more interconnected first stator coils (106₁, 106₂, ..., 106ₙ), and
a plurality of second stator coil groups, each second stator coil group defining a respective stator phase and comprising one or more interconnected second stator coils (108₁, 108₂, ..., 108ₚ); and
a power electronic switching assembly comprising:
a plurality of first switching module assemblies (109₁, 109₂, ..., 109ₙ) electrically connected to or between the first machine terminals (122a, 122b), each first switching module assembly (109₁, 109₂, ..., 109ₙ) comprising one or more interconnected first switching modules (110₁, 110₂, ..., 110ₙ), each first switching module (110₁, 110₂, ..., 110ₙ) being electrically connected to a respective first stator coil group; and
a plurality of second switching module assemblies (111₁, 111₂, ..., 111ₚ) electrically connected to or between the second machine terminals (124a, 124b), each second switching module assembly (111₁, 111₂, ..., 111ₚ) comprising one or more interconnected second switching modules (112₁, 112₂, ..., 112ₚ), each second switching module (112₁, 112₂, ..., 112ₚ) being electrically connected to a respective second stator coil group.

2. An electrical machine (100) according to claim 1, further comprising a first switch (130) electrically connected between the first and second machine terminals (122a, 122b and 124a, 124b), the first switch (130) optionally being an electrical switch including one or more controllable semiconductor switches.

3. An electrical machine (100) according to claim 1 or claim 2, wherein the first switching module assemblies (109₁, 109₂, ..., 109ₙ) are electrically connected to the first electrical terminals (122a, 122b) in parallel and/or the second switching module assemblies (111₁, 111₂, ..., 111ₚ) are electrically connected to the second electrical terminals (124a, 124b) in parallel.

4. An electrical machine (100) according to claim 1 or claim 2, wherein the first switching module assemblies (109₁, 109₂, ..., 109ₙ) are electrically connected in series between the first machine terminals (122a, 122b) and/or the second switching module assemblies (111₁, 111₂, ..., 111ₚ) are electrically connected in series between the second machine terminals (124a, 124b).

5. A power system comprising a first electrical machine (100; 100-1) according to any of claims 1 to 4, and a second electrical machine (200; 200-1; 100-3), the second electrical machine (200; 200-1; 100-3) comprising:
first machine terminals (208a, 208b; 208a-1, 208b-1; 122a-3, 122b-3);
a stator (204; 204-1; 104-3) comprising a plurality of first stator coil groups, each first stator coil group defining a respective stator phase and comprising one or more interconnected first stator coils; and
a power electronic switching assembly comprising a plurality of first switching module assemblies electrically connected to or between the first machine terminals (208a, 208b; 208a-1, 208b-1; 122a-3, 122b-3), each first switching module assembly comprising one or more interconnected first switching modules, each first switching module being electrically connected to a respective first stator coil group;
wherein the first machine terminals (208a, 208b; 208a-1, 208b-1; 122a-3, 122b-3) of the second electrical machine (200; 200-1; 100-3) are electrically connected to the first machine terminals (122a, 122b; 122a-1, 122b-1) of the first electrical machine (100; 100-1).

6. A power system according to claim 5, wherein the second electrical machine (100-3) further comprises:
second machine terminals (124a-3, 124b-3) electrically connectable to one or more second loads or power sources;
wherein the stator (104-3) of the second electrical machine (100-3) further comprises a plurality of second stator coil groups, each second stator coil group defining a respective stator phase and comprising one or more interconnected second stator coils; and
wherein the power electronic switching assembly of the second electrical machine (100-3) further comprises a plurality of second switching module assemblies electrically connected to or between the second machine terminals (124a-3, 124b-3), each second switching module comprising one or more interconnected second switching modules, each second switching module being electrically connected to a respective second stator group.

7. A power system according to claim 6, further comprising a second switch (130-3) electrically connected between the first and second machine terminals (122a-3, 122b-3 124a-3, 124b-3) of the second electrical machine (100-3), the second switch (130-3) optionally being an electrical switch including one or more controllable semiconductor switches.

8. A power system according to any of claims 5 to 7, wherein the first electrical machine (100) further comprises:
third machine terminals (140a, 140b) electrically connectable to one or more third loads or power sources;
wherein the stator (104) of the first electrical machine (100) further comprises a plurality of third stator coil groups, each third stator coil group defining a respective stator phase and comprising one or more interconnected third stator coils (132₁, 132₂, ..., 132_{q}); and
wherein the power electronic switching assembly of the first electrical machine (100) further comprises a plurality of third switching module assemblies (133₁, 133₂, ..., 133_{q}) electrically connected to or between the third machine terminals (140a, 140b), each third switching module assembly ((133₁, 133₂, ..., 133_{q}) comprising one or more interconnected third switching modules (134₁, 134₂, ..., 134_{q}), each third switching module (134₁, 134₂, ..., 134_{q}) being electrically connected to a respective third stator coil group.

9. A power system according to claim 8, further comprising a third switch (142) electrically connected between the second and third machine terminals (124a, 124b and 140a, 140b) of the first electrical machine (100), and a fourth switch (144) electrically connected between the first and third machine terminals (122a, 122b and 140a, 140b) of the first electrical machine (100), the third and fourth switches (142, 144) optionally being electrical switches including one or more controllable semiconductor switches.

10. A power system according to any of claims 5 to 9, further comprising a third electrical machine (200-2; 100-4), the third electrical machine (200-2; 100-4) comprising:
first machine terminals (208a-2, 208b-2; 124a-4, 124b-4);
a stator (204-2; 104-4) comprising a plurality of first stator coil groups, each first stator coil group defining a respective stator phase and comprising one or more interconnected second stator coils; and
a power electronic switching assembly comprising a plurality of first switching module assemblies electrically connected to or between the first machine terminals (208a-2, 208b-2; 124a-4, 124b-4), each first switching module assembly comprising one or more interconnected first switching modules, each first switching module being electrically connected to a respective first stator coil group;
wherein the first machine terminals (208a-2, 208b-2; 124a-4, 124b-4) of the third electrical machine (200-2; 100-4) are electrically connected to the first or second machine terminals (122a, 122b or 124a, 124b; 122a-1, 122b-1 or 124a-1, 124b-1) of the first electrical machine (100; 100-1).

11. A power system according to any of claims 5 to 10, wherein one of the first and second electrical machines (100; 100-1) further comprises a rotor (102; 102-1) that is configured to be driven by a prime mover or other rotary power source, and the other one of the first and second electrical machines (200; 100-3) includes a rotor (202; 102-3) that is configured to drive a load.

12. A power system according to any of claims 5 to 11, wherein the switching modules are circumferentially spaced around and mounted to a stator frame of the respective electrical machine.

13. A power system according to any of claims 5 to 12, wherein the first machine terminals (208a, 208b; 122a-3, 122b-3) of the second electrical machine (200; 100-3) are electrically connected to the first machine terminals (122a, 122b; 122a-1, 122b-1) of the first electrical machine (100; 100-1) by cabling or buses (150; 150-1).

14. A power system according to claim 13, wherein the cabling or buses (150; 150-1) are electrically connected to the first machine terminals (208a, 208b; 122a-3, 122b-3) of the second electrical machine (200; 100-3) by isolation switches and/or are electrically connected to the first machine terminals (122a, 122b; 122a-1, 122b-1) of the first electrical machine (100; 100-1) by isolation switches.

15. A method of operating the power system according to any of claims 5 to 14, comprising supplying a variable DC voltage from the first machine terminals (122a, 122b; 122a-1, 122b-1) of the first electrical machine (100; 100-1) to the first machine terminals (208a, 208b; 122a-3, 122b-3) of the second electrical machine (200; 100-3).
